# EUROPEAN PATENT APPLICATION

(11) **EP 1 686 809 A1**
(43) Date of publication of application: **02.08.2006**
(21) Application number: 05258091.7
(22) Date of filing: 28.12.2005
(51) Int. Cl.: H04N 7/26, G06T 9/00, H04N 7/24

(54) **Input file generating method and system using meta representation of compression of graphics data, and AFX coding method and apparatus**

(30) Priority: 28.12.2004 KR 2004114436
(71) Applicant: Samsung Electronics Co., Ltd., Suwon-si, Gyeonggi-Do (KR)
(72) Inventor: Jang, Gyeongja, Yongin-si, Gyeonggi-do (KR); Han, Mahnjin, Gyeonggi-do (KR); Kim, Dokyoon, Seongnam-si, Gyeonggi-do (KR)
(74) Representative: Ertl, Nicholas Justin

(57) **Abstract**

There are provided an input file generating method and system using meta representation of depth image based representation (DIBR) data compression, and an AFX encoding method and apparatus. The input file generating method includes preparing an XMT schema which defines a compression node containing DIBR data and an encoding parameter, BitWrapperEncodingHints, and AFXConfig; preparing an XMT2BIFS style sheet and an XMT2MUX style sheet; making a scene file and a mux file by parsing an input XMT file according to the XMT schema using the XMT2BIFS and XMT2MUX style sheets; determining whether the scene file includes uncompressed DIBR object data; and when the DIBR object data is not compressed, compressing the DIBR object data into a bitstream using an DIBR encoding parameter in the scene file and making a modified scene file and a modified mux file. Accordingly, an author can easily write and compress DIBR data and make an input file to be input to an MPEG-4 encoding unit using meta representation during authoring of 3D content, regardless of whether the input file contains an already compressed bitstream, or an uncompressed bitstream and an encoding parameter. Therefore, it is possible to visualize or animate DIBR object data in real time even at a low network bandwidth.

## Description

### BACKGROUND OF THE INVENTION

The present invention relates to writing of graphics data, and more particularly, to an input file generating method and system using meta representation of compression of graphics data including at least depth image based representation (DIBR) data, and an Animation Framework extension (AFX) coding method and apparatus.

A conventional extensible Motion Picture Experts Group (MPEG)-4 Textual format (hereinafter referred to as "XMT") technology enables representation of MPEG-4 primitives, e.g., two-dimensional (2D) or three-dimensional (3D) graphics, audio, and video, such that an author can easily and conveniently process them. Also, a content authoring framework has been designed to allow data made by an author to be reused in various applications, and enable data compatibility and portability. The reuse of data and data compatibility and portability can be realized because extensible Markup Language (XMT) syntax related to MPEG-4 primitives is defined in the conventional XMT.

However, since the conventional XMT does not describe compression of 3D graphics data, particularly, depth image based representation (DIBR) data, it is impossitile to compress DIBR data and data representation of 3D content made by an author. That is, an XMT file containing the DIBR data cannot be parsed by an XMT parser, thereby preventing generation of an input file to be input to a BIFS encoder and an MP4 encoder. Accordingly, it is impossible to make an output file (mp4 file) to be output from the BIFS encoder and the MP4 encoder.

### SUMMARY OF THE INVENTION

The present invention provides an input file generating method and apparatus for easily compressing graphics data including at least DIBR data during an authoring operation, using meta representation of graphics data compression, which defines representation of data compression proposed by the MPEG-4 AFX using the XMT. The present invention also provides an AFX encoding apparatus and method for generating an input file to be input to a BIFS encoder and an MP4 encoder by compressing a scene file and a mux file generated from an XMT file that contains uncompressed graphics data (original data).

According to an aspect of the present invention, there is provided a method of generating an input file using meta representation of graphics data compression, the method comprising (a) preparing an extensible MPEG-4 textual format (XMT) schema, wherein the XMT schema defines a compression node including graphics data to be compressed and having a encoding parameter required to compress the graphics data; BitWrapperEncodingHints including a graphics compression bitstream format; and AFXConfig specifying a type of a decoder for decoding a transmitted bitstream; (b) preparing an XMT2BIFS style sheet supporting conversion of an input XMT file containing the graphics data into a scene file according to the XMT schema, and an XMT2MUX style sheet supporting conversion of the input XMT file into a mux file according to the XMT schema; (c) generating the scene and mux files by parsing the input XMT file according to the XMT schema using the XMT2BIFS and XMT2MUX style sheets; (d) determining whether the scene file obtained as the parsing result includes uncompressed graphics object data; and (e) when it is determined that the uncompressed graphics object data is included, compressing the graphics object data into a bitstream and generating a modified scene file and a modified mux file, using the encoding parameter included in the scene file.

The compression node may include a node field containing graphics object data to be compressed; a buffer field which is not compatible with an URL field and transmit a compressed bitstream in the compression node as in-band data; the URL field which is not compatible with the buffer field and transmits the compressed bitstream in the compression node as out-band data; and a type field indicating a manner in which the graphics object data in the node field is compressed.

During the transmission of the compressed bitstream as the in-band data, the input XMT file containing the compression node may be converted into the scene file, the scene file may be input to a binary format of scene (BIFS) encoding unit and converted into a bifs file, the compressed bitstream in the node field of the compression node may be included in the bifs file, and the bifs file may be transmitted. During the transmission of the compressed bitstream as the out-band data, the input XMT file containing the compression node may be converted into the scene file, the scene file may be input to the BIFS encoding unit and converted into the bifs file, and the compressed bitstream in the node field of the compression node may be transmitted separately from the bifs file.

The encoding parameter may include a parameter regarding PointTexture data to ibe compressed. The BitWrapperEncodingHints may be included in an objectDescriptor with binary identification that is the same as URL identification defined in the URL field in the compression node, and further specify a name of a file storing the compressed bitstream and type information of a compression format of bitstream.

The AFXConfig may further comprise information regarding a kind of a decoder for decoding the compressed bitstream of the graphics data in the node field of the compression node, the compressed bitstream being compressed by an AFX encoding unit and transmitted using a URL.

(c) may include receiving the input XMT file containing a header having an InitialObjectDescriptor, and a body having at least one compression node and a DepthImage node which includes camera information required to reproduce data in the compression node: and making the scene and mux files by parsing the input XMT file according to the XMT schema using the XMT2BIFS and XMT2MUX style sheets. The lnitialObjectDescriptor of the header may include a StreamSource indicating a name of a file output from the BlFS encoding unit; information used to decode a file compressed by the BlFS encoding unit; and synchronization information indicating a time sequence in which objects are displayed. The compression node of the body may include a node field indicating a name of a node which stores the graphics object data; and a buffer field indicating a name of a file which stores already compressed graphics object data. The DepthImage node of the body may include a camera orthographic field; a camera position field; a camera orientation field; a camera feldOfView field; a nearPlane field and a farPlane field regarding a near plane and a far plane of camera's view volume; and a USE field storing a name of a compression node linked to the camera information. The scene file may include at least one compression node which is the same as the compression node of the body, and the mux file comprises an InitiaiObjectDescriptor being the same as the lnitialObjectDes6riptor of the header and having the file output from the BlFS encoding unit and stream format information of the output file.

Also, (c) may include receiving the input XMT file which includes a header having an lnftialObjectDescriptor; and a body having at least one compression node, a Depthlmage with camera information required to reproduce data in the compression node, and an ObjectDescriptorUpdate with at least one objectDescriptor, and making the scene and mux files by parsing the input XMT file according to the XMT schema using the XMT2BlFS and XMT2MUX style sheets. The lnitialObjectDescriptor of the header may include a StreamSource indicating a name of a file output from the BlFS encoding unit; and synchronization information indicating a time sequence in which objects are displayed. The compression node of the body may include URL identification that is the same as binary identification of an objectDescriptor in an objectDescriptorUpdate having BitWrapperEncodingHints which includes a name of a file storing a bitstream of already compressed graphics object data. The DepthImage node of the body may include a camera orthographic field; a camera position field; a camera orientation field; a camera fiefdOfView field; a nearPlane field and a farPlane field regarding a near plane and a far plane of camera's view volume; and a USE field storing a name of a compression node linked to the camera information. The objectDescriptor in the ObjectDescriptorUpdate of the body may include binary identification, as a field, which is the same as the URL identification in the compression node of the body; AFXConfig which is decoder information used to decode the compressed graphics object data; and BitWrapperEncodingHints indicating a name of a file storing the bitstream of the compressed graphics object data and a format of the compressed bitstream. The mux file may include an lnftialObjectDescriptor which is the same as the InitialObjectDescriptor of the header-, and an objectDescriptor which is the same as the objectDescriptor of in the ObjectDescriptorUpdate of the body of the input XMT file. The scene file may include at least one compression node and a Depthlmage node which are the same as those of the body; and an UPDATE OD(ObjectDescriptor) having an objectDescriptor that has ObjectDescriptorlD that is the same as the binary identification of the objectDescriptor in the ObjectDescriptorUpdate of the body of the input XMT file, and has the name of the mux file as the value of a muxScript.

Also, (c) may include receiving the input XMT file including a header having an InitialObjectDescriptor, and a body having at least one compression node and a Depthlmage node which stores camera information required to reproduce data in the compression node; and making the scene and mux files by parsing the input XMT file according to the XMT schema using the XMT2BlTS and XMT2MUX style sheets. The InitialObjectDescriptor of the header may include a StreamSource indicating a name of a file output from the BIFS encoding unit; and synchronization information indicating a time sequence in which objects are displayed. The compression node of the body may include a node field storing a name of a node to be compressed, and graphics object data to be compressed; encoding parameter used to compress the graphics object data; and a buffer field indicating a name of a bitstream file which stores a bitstream of the graphics object data compressed using the encoding parameter. The Depthlmage node of the body may include a camera orthographic field; a camera position field; a camera orientation field; a camera fieldOfView field; a nearPlane field and a farPlane field regarding a near plane and a far plane of camera's view volume; and a USE field indicating a name of a compression node linked to the camera information. The scene may include at least one compression node that is the same as the compression node of the body; and a DepthImage node that is the same as the DepthImage node of the body. The mux file may include an InitialQbjectDescriptor which is the InitialObjectDescriptor of the header and has stream format information of the file output from the BlFS encoding unit.

Also, (c) may include receiving the input XMT file including a header having an InitialObjectDescriptor; and a body having at least one compression node, a DepthImage node storing camera information required to reproduce data in the compression node, and an ObjectDescriptorUpdate with at least one objectDescriptor; and making the scene and mux files by parsing the input XMT file according to the XMT schema using the XMT2BlFS and XMT2MUX style sheets. The InitialObjectDescriptor of the header may include a StreamSource indicating a name of a file output from the BIFS encoding unit; information required to decode a file compressed by the BIFS encoding unit; and synchronization information indicating a time sequence in which objects are displayed. The compression node of the body may include a node field storing a name of a node to be compressed, and graphics object data to be compressed; a encoding parameter used to compress the graphics object data; and a URL field storing URL identification which is the same as the binary identification of an objectDescriptor in an ObjectDescriptorUpdate which has BitWrapperEncodingHints including a name of a file storing the bitstream of the DlBR object data compressed using the DlBR encoding parameter. The objectDescriptor of the ObjectDescriptorUpdate of the body may include binary identification, as a field, which is the same as the URL identification in the compression node of the body; AFXConfig which is decoder information used to decode the compressed graphics object data; and BitWrapperEncodingHints indicating a name of a file storing the bitstream of the compressed graphics object data and a format of the compressed bitstream. The Depthlmage node of the body may include a camera orthographic field; a camera positon field; a camera orientation field; a camera fieIdOfView field; a nearPlane field and a farPlane field regarding a near plane and a far plane of camera's view volume; and a USE field storing a name of a compression node linked to the camera information. The mux file may include an InitialObjectDescriptor which is the same as the InitialObjectDescriptor of the header; and an objectDescriptor which is the same as the objectDescriptor of the body. The scene file may include at least one compression node and a Depthlmage node which are the same as those of the body of the input XMT file; and an UPDATE OD(ObjectDescriptor) having objectDescriptor that has objectDescriptorID which is the same as the binary identification of the objectDescriptor in the ObjectDescriptorUpdate of the body, and has the name of the mux file, as the value of a muxScript.

Also, (c) may include receiving the input XMT file which includes a header having an InitialObjectDescriptor; and a body having at least one compression node with a buffer field, at least one compression node with a URL field, a Depthlmage node containing camera information required to reproduce data in the compression nodes, and an ObjectDescriptorUpdate which has an objectDescriptor corresponding to the at least one compression node with the URL field; and making the scene and mux files by parsing the input XMT file according to the XMT schema using the XMT2BlFS and XMT2MUX style sheets. The InitialObjectDescriptor of the header may include a StreamSource indicating a name of a file output from the BlFS encoding unit; information required to decode a file compressed by the BlFS encoding unit; and synchronization information indicating a time sequence in which objects are displayed. The compression node of the body, which has the buffer field, may include a node field storing a name of a node to be compressed; graphics object data in the node field of the compression node, the DlBR object data being to be compressed; a encoding parameter used to compress the graphics object data; and a buffer field indicating a name of a bitstream file of the graphics object data compressed using the encoding parameter. The compression node of the body, which has the URL field, may include a node field storing a name of a node to be compressed; graphics object data in the node field, the graphics object data being to be compressed and is stored in the node field; a encoding parameter used to compress the object data; and a field storing URL identification which is the same as the binary identification of an objectDescriptor in an ObjectDescriptorUpdate having BitWrapperEncodingHints which includes a name of a file storing the bitstream of the DIBR object data compressed using the encoding parameters. The objectDescriptor in the ObjectDescriptorUpdate of the body may include binary identification, as a field, which is the same as the URL identification of the compression node of the body; AFXConfig which is decoder information used to decode the compressed graphics object data; and BitWrapperEncodingHints indicating a name of a file storing the bitstream of the compressed graphics object data and a format of the compressed bitstream. The Depthlmage node of the body may include a camera orthographic field; a camera positin field; a camera orientation field; a camera fieldOfView field; a nearPlane field and a farPlane field regarding a near plane and a far plane of camera's view volume; and a USE field storing a name of a compression node linked to the camera information. The mux file may include an InitialObjectDescriptor which is the same as the InitialObjectDescriptor of the header, and an objectDescriptor which is the same as the objectDescriptor of the body. The scene file may include at least one compression node and a DepthImage node which are the !same as those of the body of the input XMT file; and an UPDATE OD(ObjectDescriptor) having objectDescriptorthat has objectDescriptorID which is the same as the binary identification of the objectDescriptor in the ObjectDescriptorUpdate of the body, and has the name of the mux file, as the value of a muxScript.

(d) may include detecting at least one compression node (BitWrapper node) from the scene file obtained by the parsing result; and when graphics object data is present in a node field of the detected compression node, determining that the scene file includes uncompressed graphics object data.

(e) may include (e1) when it is determined that the graphics object data is not compressed, compressing graphics object data in each compression node of the scene file into a bitstream by an encoding unit for compressing the graphics object data, using the encoding parameter in the compression node; and (e2) making the modified scene file by deleting the graphics object data and the encoding parameter from each compression node of the scene file, and the modified mux file which is modified such that a name of a file output from the BIFS encoding unit reflects a name of the modified scene file.

(e1) may include (e11) when it is determined that the graphics object data is not compressed, storing the graphics object data and encoding parameter in the compression node of the scene file; (e12) transmitting the graphics object data and the encoding parameter to a predetermined encoding unit which matches graphics object data in a node field of the compression node containing the stored graphics object data; and (e13) compressing the graphics object data into a bitstream using the transmitted DIBR encoding parameter in the encoding unit.

The predetermined encoding unit used in (e1) comprises at least one of: a PointTexture encoding unit matching the stored graphics object data and encoding parameter, and encoding PointTexture data using the encoding parameter, and an Octree encoding unit matching the stored graphics object data and encoding parameter, and encoding Octree data.

According to another aspect of the present invention, there is provided a system for generating an input file using meta representation of graphics data compression, the system comprising an extensible MPEG-4 textual format (XMT) schema defining a compression node which specifies graphics object data to be compressed and includes a encoding parameter used to compress the graphics object data, BitWrapperEncodingHints including a format in which the graphics object data is compressed into a bitstream, and AFXConfig specifying a type of a decoder:for decoding a transmitted bitstream; an XMT2BIFS style sheet supporting conversion of an input XMT file containing the graphics object data into a scene file based on the XMT schema; an XMT2MUX style sheet supporting conversion of the input XMT file into a mux file based on the XMT schema; an XMT parser generating the scene and mux files by parsing the input XMT file according to the XMT schema, using the XMT2BIFS and XMT2MUX style sheets; a compression determination unit determining whether the scene file obtained by the parsing result contains uncompressed graphics object data; .and an AFX encoding unit compressing the graphics object data into a bitstream using a encoding parameter in the scene file and obtaining a modified scene file and a modified mux file using the XMT2BIFS andXMT2MUS style sheets, when the compression determination unit determines that the graphics object data is uncompressed.

The compression node may include a node field containing graphics object data to be compressed: a buffer field which is not compatible with a URL field and transmits the compressed bitstream in the compression node as in-band data; a URL field which is not compatible with the buffer field and transmits the compressed bitstream in the compression node as out-band data; a type field indicating a manner in which the graphics object data in the node field is compressed; and a encoding parameter required to compress the graphics object data.

During the transmission of the compressed bitstream as the in-band data, the input XMT file containing the compression node may be converted into the scene file, the scene file may be input to a binary format of scene (BIFS) encoding unit and converted into a bifs file, the compressed bitstream in the node field of the compression node may be included in the bifs file, and the bifs file may be transmitted. During the transmission of the compressed bitstream as the out-band data, the input XMT file containing the compression node may be converted into the scene file, the scene file may be input to the BIFS encoding unit and converted into the bifs file, and the compressed bitstream in the node field of the compression node may be transmitted separately from the bifs file.

The encoding parameter may include a parameter of PointTexture data to be compressed. The BitWrapperEncodingHints is included in an objectDescriptor with binary identification which is the same as URL identification defined in the URL field in the compression node, and further specifies a name of a file storing the compressed bitstream and a format of the compressed bitstream.

The AFXConfig may further include information regarding a type of a decoder for decoding the compressed bitstream of the graphics object data in the node field of the compression node, the compressed bitstream being compressed by an AFX encoding unit and transmitted using a URL.

The XMT file input to the XMT parser may include a header having an InitialObjectDescriptor; and a body having at least one compression node, and a Depthlmage node which contains camera information required to reproduce data in the compression node. The initiaiObjectDescriptor of the header may include a StreamSource indicating a name of a file output from the BIFS encoding unit; information required to decode a file compressed by the BIFS encoding unit; and synchronization information indicating a time sequence in which objects are displayed. The compression node of the body may include a node field storing a name of an already compressed node; and a buffer field storing a name of already compressed object data. The Depthlmage node of the body may include a camera orthographic field; a camera postion field; a camera orientation field; a camera fieldOfView field; a nearPlane field and a farPlane field regarding a near plane and a far plane of camera's view volume; and a USE field storing a name of a compression node linked to the camera information. The scene file may include at least one compression node which is the same as the compression node of the body. The mux file may include an InitialObjectDescriptor which is the same as the lnitialObjectDescriptor of the header; and the file output from the BIFS encoding unit and stream format information of the output file, the file and stream format information being included in the Initia]ObjectDescriptor.

The XMT file input to the XMT parser may include a header having an InitialObjectDescriptor; and a body having at least one compression node, a Depthlmage node which contains camera information required to reproduce data in the compression node, and an ObjectDescriptorUpdate which contains at least one objectDescriptor. The lnitia[ObjectDescriptor of the header may include a StreamSource storing a name of a file output from the BIFS encoding unit; information required to decode a file compressed by the BIFS encoding unit; and synchronization information indicating a time sequence in which objects are displayed. The compression node of the body may include URL identification which is the same as binary identification of an objectDescriptor in an ObjectDescriptorUpdate having BitWrapperEncodingHints indicating a name of file which includes a bitstream of already compressed object data. The DepthImage node of the body may include a camera orthographic field; a camera position field; a camera orientation field; a camera fieldOfView field; a nearPlane field and a farPlane field regarding a near plane and a far plane of camera's view volume; and a USE field storing a name of a compression node linked to the camera information. The objectDescriptor in the ObjectDescriptorUpdate of the body may include binary identification, as a field, which is the same as the URL identification of the compression node of the body; AFXConfig which is decoder information used to decode the compressed graphics object data; and BitWrapperEncodingHints indicating a name of a file storing the bitstream of the compressed graphics object data and a format of the compressed bitstream. The mux file may include an InitialObjectDescriptor which is the same as the InitialObjectDescriptor of the header; and an objectDescriptor which is the same as the objectDescriptor in the ObjectDescriptorUpate of the body. The scene file may include at least one compression node which is the same as the compression node of the body of the input XMT file; an UPDATE OD(ObjectDescriptor) having an objectDescriptor that has objectDesciptorlD that is the same as the binary identification of the objectDescriptor in the ObjectDescriptorUpdate of the body of the input XMT file, and has the name of the mux file, as the value of a muxScript

The XMT file input to the XMT parser may include a header having an InitialObject0escriptor; and a body having at least one compression node, and a Depthlmage node which contains camera information required to reproduce data in the compression node. The InitiafObjectDescriptor of the header may include a StreamSource storing a name of a file output from the BIFS encoding unit; information required to decode a file compressed by the BIFS encoding unit; and synchronization information indicating a time sequence in which objects are displayed. The compression node of the body may include a node field storing a name of a node to be compressed; graphics object data in the node field of the compression node, the graphics object data being to be compressed; a encoding parameter used to compress the graphics object data; and a buffer field indicating a name of a file which stores a bitstream of the graphics object data compressed using the encoding parameter. The DepthImage node of the body may include a camera orthographic field; a camera position field; a camera orientation field; a camera fietdOfview field; a nearPlane field and a farPlane field regarding a near plane and a far plane of camera's view volume; and a USE field indicating a name of a compression node linked to the camera information. The scene file may include at least one compression node and a Depthlmage node which are the same as those of the body, and the mux file comprises an InitialObjectDescriptor which is the same as the initialObjectDescriptor of the header and has stream format information of the file outputfrom the BIFS encoding unit.

The XMT file input to the XMT parser may include a header having an InitialObjectDescriptor, and a body having at least one compression bode, a Depthlmage node which contains camera information required to reproduce data in the compression node, and an ObjectDescriptorUpdate which contains at least one objectDescriptor. The InitialObjectDescriptor of the header may include a StreamSource indicating a name of a file output from the BIFS encoding unit; information required to decode a file compressed by the BIFS encoding unit; and synchronization information indicating a time sequence in which objects are displayed. The compression node of the body may include a node field storing a name of a node to be compressed; graphics object data in the node field of the compression node, the graphics object data being to be compressed; encoding parameter used to compress the graphics object data; and a field storing URL identification which is the same as binary identification of an objectDescriptor in an ObjectDescriptorUpdate which has BitWrapperEncodingHints which includes a name of a file storing a bitstream of the graphics object data compressed by the encoding parameter. The objectDescriptor in the ObjectDescriptorUpdate of the body may include binary identification, as a field, which is the same as the URL identification of the compression node of the body; AFXConfig which is decoder information used to decode the compressed graphics object data: and BitWrapperEncodingHints indicating a name of a bitstream of the compressed graphics object data and a format of the compressed bitstream. The DepthImage node of the body may include a camera orthographic field; a camera positon field; a camera orientation field; a camera fieldOfView field; a nearPlane field and a farPlane field regarding a near plane and a far plane of camera's view volume; and a USE field storing a name of a compression node linked to the camera information. The mux file may include an InitialObjectDescriptor which is the same as the InitialObjectDescriptor of the header; and an objectDescriptor which is the same as the objectDescriptor of the body. The scene file may include at least one compression node which is the same as the compression node of the body of the input XMT file; and an UPDATE OD(ObjectDescriptor) having objectDescriptor that has objectDescriptorlD which is the same as binary identification of the objectDescriptor in the ObjectDescriptorUpdate of the body, and has the name of the mux file, as the value of a muxScript.

The XMT file input to the XMT parser may include a header having an InitialObjectDescriptor; and a body having at least one compression node which includes a buffer field, at least one compression node which includes a URL field, a DepthImage node which contains camera information required to reproduce data in the compression nodes, and an ObjectDescriptorUpdate which includes an objectDescriptor corresponding the at least one compression node having the URL field. The InitialObjectDescriptor of the header may include a StreamSource storing a name of a file output from the BIFS encoding unit; information required to decode a file compressed by the BIFS encoding unit; and synchronization information indicating a time sequence in which objects are displayed. The compression node of the body, which has the buffer field, may include a node field storing a name of a node to be compressed; graphics object data in the node field of the compression node, the graphics object data being to be compressed; a encoding parameter used to compress the graphics object data; and a buffer field storing a name of a file which_{.} includes a bitstream of the graphics object data compressed by the encoding parameter. The compression node of the body, which has the URL field, may include a node field storing a name of a node to be compressed; object data in the node field of the compression node, the object data being to be compressed: an encoding parameter used to compress the object data; and a field storing URL identification which is the same as binary identification of an objectDescriptor in an ObjectDescriptorUpate which has BitWrapperEncodingHints including a name of a file storing a bitstream of the object data compressed using the encoding parameter. The objectDescriptor in the ObjectDescriptorUpdate of the body may include binary identification, as a field, which has the same as URL identification of the compression node of the body; AFXConfig which is decoder information used to decode the compressed object data; and BitWrapperEncodingHints indicating a name of a file storing a bitstream of the compressed object data and a format of the compressed bitstream. The Depthlmage node of the body may include a camera orthographic field; a camera positon field; a camera orientation field; a camera fieldOfView field; a nearPlane field and a farPlane field regarding a near plane and a far plane of camera's view volume; and a USE field storing a name of a compression node linked to the camera information. The mux file may include an InitialObjectDescriptor which is the same as the InitialObjectDescriptof of the header; and an objectDescriptor which is the same as the objectDescriptor of the body. The scene file may include at least compression node which is the same as the compression node of the body of the input XMT file; and an UPDATE OD(ObjectDescriptor) having objectDescriptor that has objectDescriptorID which is the same as binary identification of an objectDescriptor in an ObjectDescriptorUpdate of the body, and has the name of the mux file, as the value of a muxScript.

The compression determination unit may include a compression node detector detecting at least one compression node (BitWrapper node) from the scene file obtained by the parsing result; and a compressed data determination unit determining that uncompressed data is included when DIBR object data is present in a node field of the detected compression node.

The AFX encoding unit may include an AFX parser detecting at least one compression node from the scene file containing a BitWrapper node, and storing graphics object data and graphics encoding parameter which are included in the compression node of the scene file when the graphics object data is present in a node field of the compression node; an object data storage unit storing the graphics object data received from the AFX parser; an encoding parameter storage unit storing the encoding parameter received from the AFX parser, an encoding unit matching the graphics object data in the node field of the compression node, and compressing the graphics object data received from the encoding parameter storage unit into a bitstream using the encoding parameter received from the encoding parameter storage unit; and an input file generator generating a modified scene file by deleting the graphics object data and encoding parameter from the compression node of the scene file, and a modified mux file modified such that a name of a file output from the BIFS encoding unit reflects a name of the modified scene file, when the graphics object data is included in the node field of the compression node detected by the AFX parser.

The encoding unit may include at least one of: a PointTexture encoder matching the stored graphics object data and encoding parameter, and encoding PointTexture data using encoding parameters; and an Octree encoder matching the stored graphics object data and encoding parameter, and encoding octree data.

According to another aspect of the present invention, there is provided an AFX encoding apparatus comprising an AFX parser detecting at least one compression node from a scene file containing a BitWrapper node, and storing graphics object data and graphics encoding unit which are included in the compression node of the scene file when the graphics object data is present in a node field of the compression node; an object data storage unit storing the graphics object data received from the AFX parser; an encoding parameter storage unit storing the encoding parameter received from the AFX parser; an encoding unit matching the stored graphics object data, and compressing the graphics object data received from the object data storage unit into a bitstream using the encoding parameter received from the object data storage unit; and an input file generator generating a modified scene file by deleting the graphics object data and encoding parameter from the compression node of the scene file, and a modified mux file modified such that a name of a file output from the BIFS encoding unit reflects a name of the modified scene file, when the graphics object data is included in the node field of the compression node detected by the AFX parser.

The encoding unit may include at least one of: a PointTexture encoder matching the stored graphics object data and encoding parameter, and encoding PointTexture data using encoding parameters regarding the PointTexture of an object to be compressed; and an Octree encoder matching the stored graphics object data and encoding parameter, and encoding octree data using encoding parameters of an object to be compressed.

According to another aspect of the present invention, there is provided an AFX encoding method comprising (a) detecting at least one compression node from a scene file which contains a BitWrapper node; (b) storing a node containing graphics object data, and encoding parameter which are included in the detected compression node; (c) compressing the graphics object data into a bitstream with encoding parameter by using an encoding unit which matches the node containing the stored graphics object data; and (d) generating a modified scene file by deleting the graphics object data and the encoding parameter from the compression node of the scene file, and a modified mux file modified such that a name of a file output from a binary format of scene (BIFS) encoding unit reflects a name of the modified scene file.

The encoding unit used in (c) may include at least one of: a PointTexture encoder matching the stored graphics object data and encoding parameter, and encoding PointTexture data using encoding parameters of graphics object data of an object to be compressed; and an Octree encoder matching the stored graphics object data and encoding parameter, and encoding octree data.

According to another aspect of the present invention, there is provided a computer readable recording medium having embodied thereon a program for executing the above methods.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram illustrating an authoring framework that allows generation of content using textual syntax and a Motion Picture Experts Group (MPEG)-4 node;
FIG. 2 is a block diagram illustrating an input file generating system for compressing depth image based representation (DlBR) data, using meta representation of compression of DlBR data, which defines representation of data compression proposed by the MPEG-4 AFX using the XMT;
FIG. 3 is a detailed block diagram illustrating a compression determination unit of FIG. 2;
FIG. 4 is a detailed block diagram illustrating an AFX encoding unit of FIG. 2;
FIG. 5 is a flowchart illustrating a method of generating an input file using meta representation of DlBR data compression, according to an embodiment of the present invention;
FIG. 6 illustrates transmission of an already compressed bitstream to a buffer, according to an embodiment of the present invention;
FIG. 7 illustrates transmission of an already compressed DlBR data of an object A in a BitWrapper node via a Uniform Resource Locator (URL), according to an embodiment of the present invention;
FIG. 8 illustrates a method of compressing DIBR data of an object A into a bitstream using a parameter and transmitting the bitstream using a buffer, according to an embodiment of the present invention; and
FIG. 9 illustrates a method of compressing DIBR data of an object A into a bitstream in a BitWrapper node, using a DIBR encoding parameter, and transmitting the bitstream via a URL, according to an embodiment of the present invention.

### DETAILED DESCRIPTION OF THE INVENTION

Hereinafter, an input file generating system using meta representation of depth image based representation (DlBR) data compression, according to the present invention, will be described in greater detail with reference to the accompanying drawings. The graphics data include Interpolator(Position, Orientation, Coordinate), 3DMC, DIBR(PointTexture, OctreeImage). Hereinafter, this invention will be described under the assumption that the preferable example of the graphics data is DlBR data.

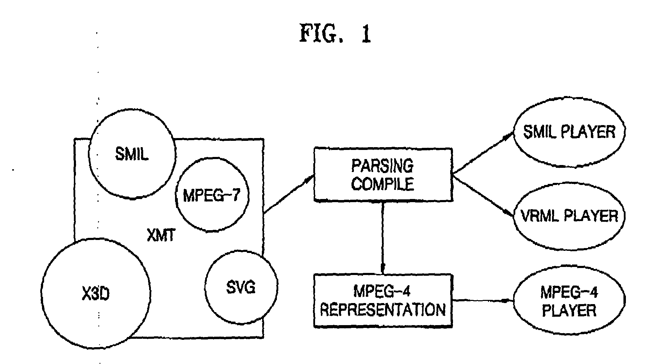

A method of controlling factors needed to author, represent, process, and compress three-dimensional (3D) content is required for an author to easily compress 3D data. Such factors can be controlled using the XMT. The XMT is a framework regarding authoring of MPEG-4 content such as audio, video, two-dimensional (2D) content, and 3D content. Also, the XMT is an authoring framework that allows generation of content in a MPEG-4 node using textual syntax. FIG. 1 illustrates the framework. The XMT allows content authors, tools, and service providers to reuse content made by a content author. Also, the XMT enables the content to be interoperable with an eXtensible 3D (X3D) and a Synchronized Multimedia Integration Language (SMIL).

As illustrated in FIG. 1, an XMT is compatible with and can be reproduced by an SMlL player, a Virtual Reality Modeling Language (VRML) player, and an MPEG-4 player. Referring to FIG. 1, the XMT may be parsed and reproduced by the SMIL, player, reproduced by the VRML player after preprocessing X3D content, or reproduced by the MPEG-4 player after compiling representation of MPEG-4 (mp4) format.

The XMT is presented in a dual construction of an XMT-A format and an XMT-Ω format. The XMT-A format is an XML-based version of MPEG-4 content that is representation of audio, video, 2D or 3D graphics data, or compression thereof, and includes extended 3D graphics (X3D). The XMT-A format further includes an X3D format that is an extension of the XMT-A format to represent MPEG-4 characteristics. A textual format and a binary format are mapped at a ratio of 1:1 in the XMT-A format.

The XMT-Ω format is a high-rank representation of the MPEG-4 characteristics based on the SMIL. The XMT can be default-mapped from the XMT-Ω format into the XMT-A format even if a content author is not familiar with a mechanism from Ω to A. The XMT-Ω format provides interface presentation functions that enable a user to easily and conveniently author contents. In general, MPEG-4 data is presented, processed, and compressed in the XMT-A format.

Accordingly, a compression technique of adjusting factors needed to author, represent, process, and compress 3D graphics data must be defined in the XMT-A format so that an author can compress the 3D graphics data.

In other words, animation data and representation data related to 3D content made by the author can be compressed since representation of compressed data proposed by the MPEG-4 Animation Framework eXtensions (AFX) is defined in the XMT. Thus, the author can compress 3D graphics data based on this definition and send the compression result. That is, factors required to compress 3D data, such as animation data or representation data, are defined with a parameter in the XMT. The compression parameter of the 3D data must be defined in an XMT-A schema, using a node that represents compression of the 3D data. Also, the compression parameter of 3D data must be expressed using meta representation and the 3D data must be compressed using the meta representation.

First, DIBR data, which is object data according to an embodiment of the present invention, will be briefly described. DlBR is a novel format that allows a complicated and geometric object to be easily represented and visualized. The DIBR has been adopted in the MPEG-4 AFX. In general, in the field of computer graphics, an object is presented using polygonal meshes, whereas the DIBR uses the following three formats.

In SimpleTexture, a 3D graphics object is visualized with a set of reference images that cover the object. Each reference image is presented with the corresponding depth map that indicates the distance between pixels of an image plane and the object surface using an array.

In PointTexture, an object is represented by arraying pixels viewed at a camera location. Each PointTexture pixel is represented using colors, a depth that is the distance between each pixel and a camera, and attributes supporting visualization of PointTexture. In general, since a plurality of pixels may be present at an intersection of the object and each line of sight, PointTexture consists of multiple layers.

In OctreeImage, an object is represented using an octree and an image of each face of the object is set to a reference image.

A content compression mechanism will now be briefly described. The resolution of an input image should be high to represent the input image like a real scene, but the higher the resolution of the image, the greater the amount of depth and color values of the image. Thus, the amount of the depth and color values is required to be compressed. PointTexture is objected by transforming SimpleTexture into world coordinates. Accordingly, DlBR content compression includes PointTexture compression and Octreelmage compression.

### A.: PointTexture Compression

In PointTexture compression, a large amount of depth data and color data of PointTexture are encoded. More specifically, a PointTexture encoding unit includes a header information encoder that encodes header information of PointTexture, and a tree node encoder that decodes a PointTexture tree node by gradually performing image restoration and rendering thereon from a low resolution to a high resolution. The header information encoder encodes information such as a width value *nwidth* and a height value *nHeight* of an input image, a bit value *nDepthNbBits* used to represent depth data of the original image, and a percentage *nPercentOfencoding* of tree nodes to be encoded. The tree node encoder counts tree nodes of an adaptive octree, and encodes depth and color information of tree nodes which correspond to tree nodes in a header to be encoded, using information contained in the header.

### B. OctreeImage Compression

In OctreeImage compression, an octree image representation of a 3D model is compressed. An Octreelmage format is a format between 2D SimpleTexture and 3D PointTexture. The Octree image includes reference images that indicate an octree that stores the geometry of an object in volumetric representation (hierarchically organized voxels of usual binary subdivision of enclosing cube), and the color of the object; and voxelimageIndex that stores the index of a reference image that indicate the color value of the leaf voxel of the octree. The Octreelmage format is divided into two types: TBVO that includes reference images that indicate an octree that stores the geometry of an object in the volumetric representation, and the color of the object, and voxelImageIndex that stores the index of a reference image that indicate the color value of the leaf voxel of the octree; and BVO that includes only reference images that indicate the octree and the color of the object. In detail, in the BVO, rendering is performed on the color of the reference image by projecting the color value of the reference image into the leaf voxel of the octree. Compared to the BVO, the TBVO further includes the index of the reference image that stores the color value of the leaf voxel. Therefore, the TBVO guarantees faster rendering and better image quality than the BVO.

In the Octreelmage compression, the TBVO allows compression of voxellmageIndex that includes the index of a reference image tat stores the geometry of an object and the color value of the leaf voxel, and the BVO allows compression of the geometry of the object. Since context is made based on geometric characteristics of data, geometry information is compressed using application of adaptive context-based arithmetic coding.

The present invention proposes two methods of generating an input file to be input to an MPEG-4 encoding unit using meta representation of compression of 3D graphics data. A first one of the methods is to generate an input file to be input to the MPEG-4 encoding unit when a user uses an input file containing already compressed DlBR object data. A second one of the methods is to generate an input file to be input to the MEPG-4 encoding unit when the user uses an input file containing uncompressed DlBR object data and an encoding parameter.

In the first method, when a user desires to compress an input XMT file containing already compressed DlBR object data, an XMT parser receives the XMT file, parses it according to an XMT schema using style sheets of the DlBR data, and generates a scene file and a mux file as the parsing result. Although the XMT parser simply divides the input XMT file into the scene file and the mux file during the parsing of the input XMT file, the DlBR object data in the input XMT file has already been compressed into a bitstream, and thus, the scene and mux files can be input to the MPEG-4 encoding unit.

However, in the second method, a scene file and a mux file that are obtained by parsing an input XMT file using meta representation, cannot be input to the MPEG-4 encoding unit, since the MPEG-4 encoding unit can read and process only an input file in a compressed bit stream format. Thus, uncompressed DlBR object data should be encoded into a bitstream using an encoding parameter. Accordingly, the second method further requires a compressor.

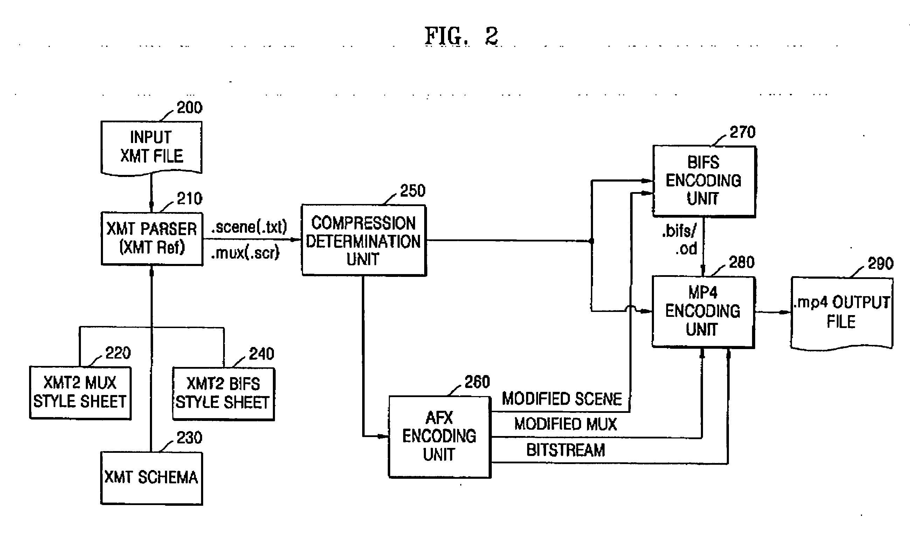

FIG. 2 is a block diagram of an input file generating system for compressing DlBR data using meta representation of 3D DlBR data compression, which defines representation of data compression suggested by the MPEG-4 AFX using the XMT, according to an embodiment of the present invention. Referring to FIG. 2, when a user desires to compress an input XMT file 200 that contains uncompressed DlBR object data and an encoding parameter, an XMT Parser 210 parses the XMT file 200 using an XMT schema 230 and style sheets 220 and 240 of the DIBR object data and generates a scene file and a mux file as the parsing result. When the scene file and the mux file are input to an AFX encoding unit 260, the AFX encoding unit 260 encodes the uncompressed DlBR object data into a bitstream and changes the scene file and the mux file so that they can be input to a BlFS encoding unit 270 and an MP4 encoding unit 280. When the bitstream, the modified scene file, and the modified mux file are input to the BiFS encoding unit 270 and the MP4 encoding unit 280, an ".mp4" bitstream file 290 is output from the MP4 encoding unit 280.

The input file generating system of FIG. 2 includes the XMT schema 230, the XMT2BlFS style sheet 240, the XMT2MUX style sheet 220, the XMT parser 210, a compression determination unit 250, and the AFX encoding unit 260.

The XMT schema 230 defines a compression node that includes information regarding DlBR object data to be compressed and an encoding parameter, BitWrapperEncodingHints that specifies a compression bitstream format, and AFXConfig that specifies the type of a decoder to be used when decoding a transmitted bitstream.

The compression node defined by the XMT schema 230 includes DlBR encoding parameter required for compression of a node field and the DlBR data, a buffer field, a Uniform Resource Locator (URL) field, and a type field that selects a method of compressing DlBR object data included in the node field. The node field includes the DlBR object data to be compressed. The compression node includes the DlBR encoding parameter. The buffer field is not compatible with the URL field. In other words, the buffer field and the URL field are not used simultaneously, that is, the URL field is not used while the buffer field is used. The buffer field allows transmission of a compressed bitstream defined in the node as an in-band bitstream.

The URL field is not compatible with the buffer field. In other words, the URL field and the buffer field are not used simultaneously, that is, the buffer field is not used while the URL field is used.

The URL field allows transmission of the compressed bitstream as an out-band bitstream.

During the transmission of the compressed bitstream as the in-band bitstream, an input XMT file containing the compression node is converted into a scene file, and the scene file is input to the BlFS encoding unit 270 and converted into a ".bifs" file. In this case, the compressed bitstream in the node field of the compression node is included in the bifs file. During the transmission of the compressed bitstream as the out-band bitstream, the input XMT file containing the compression node is converted into a scene file, an the scene file is input to the BlFS encoding unit 270 and converted into a bifs file. In this case, the compressed bitstream in the node field of the compression node is not included in the bifs file, and is transmitted separately from the bifs file.

The DlBR encoding parameter defined in the XMT schema 230 include a parameter for PointTexture of an object to be compressed.

BitWrapperEncodingHints defined in the XMT schema 230 is included in an objectDescriptor with the same binary identification (lD) as a URL lD described in the URL field in the compression node, and further specifies the name of a file of the compressed bitstream and the type of a format in which the bitstream is compressed.

AFXConfig defined in the XMT schema 230 further includes information, e.g., information regarding the type of a decoder, which is required when the compression node compresses the DlBR object data in the node field into a bitstream using the AFX encoding unit 260, transmits the bitstream to a URL, and decodes the bitstream.

The XMT2BlFS style sheet 240 supports conversion of the input XMT file 200 into a scene file based on the XMT schema 230. The XMT2MUX style sheet 220 supports conversion of the input XMT file into a mux file based on the XMT schema 230.

The XMT parser 210 parses the input XMT file 200 containing the DIBR object data according to the XMT schema 230 using the XMT2BlFS style sheet 240, and the XMT2MUX style sheet 220 so as to obtain a scene file and a mux file.

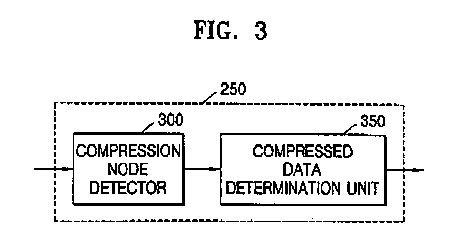

The compression determination unit 250 determines whether the scene file generated by the XMT parser 210 contains uncompressed graphics data. Referring to FIG. 3, the compression determination unit 250 includes a compression node detector 300 and a compressed data determination unit 350. The compression node 300 detects at least one BitWrapper node from the scene file. The compressed data determination unit 350 determines that the scene file contains uncompressed object data when graphics object data is included in a node field of the detected BitWrapper node.

The AFX encoding unit 260 parses the scene file and the mux file in units of keywords (not names), and encodes the DlBR object data into a bitstream using the encoding parameter included in the scene file and generates a modified scene file and a modified mux file when the compression determination unit 250 determines that the DlBR object data is not compressed.

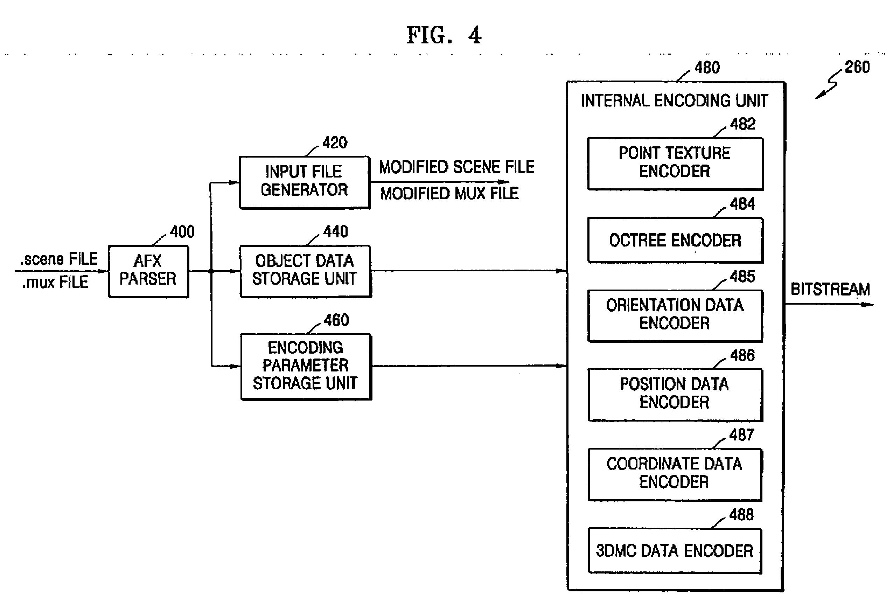

FIG. 4 is a detailed block diagram illustrating the AFX encoding unit 260. Referring to FIG. 4, the AFX encoding unit 260 includes an AFX parser 400, an input file generator 420, an object data storage unit 440, an encoding parameter storage unit 460, and an internal encoding unit 480.

The AFX parser 400 detects at least one compression node from the scene file that includes the BitWrapper node, and stores the DlBR object data and the DlBR encoding parameter, which are included in the compression node of the scene file, when the DlBR object data is present in the node field of the compression node. More specifically, the AFX parser 400 receives the scene and mux files that contain uncompressed DlBR object data. The scene file includes scene information and uncompressed DlBR object data. The mux file includes information regarding a buffer size in which data is to be transmitted and the type of a decoder to be used to decode a transmitted bitstream, and synchronization information specifying a time difference between a plurality of data to be reproduced. Thus, the AFX parser 400 stores nodes and DlBR encoding parameters, as keywords, which are to be used in the scene and mux files, and reads and parses the scene and mux files in units of the keywords. When a node containing the DlBR object data to be compressed is detected during the parsing of the scene and mux files, the AFX parser 400 stores the DlBR object data and the DlBR encoding parameter required for compression of the DlBR object data in the encoding parameter storage unit 460. The DlBR encoding parameter stores in the encoding parameter storage unit 460 are categorized according to node types and respectively transmitted to related encoders of the internal encoding unit 480.

Also, since the AFX parser 400 supports both a single BitWrapper node and a multiple BitWrapper node, it is possible to transmit all DlBR object data consisting of several nodes to a buffer or a URL, or both the buffer and the URL as a user desires.

The object data storage unit 440 stores the DlBR object data received from the AFX parser 400.

The encoding parameter storage unit 460 stores the DlBR encoding parameter received from the AFX parser 400.

The internal encoding unit 480 includes encoders related to MPEG-4 AFX tools corresponding to the node containing the stored object data. The internal encoding unit 480 encodes the DlBR object data stored in the object data storage unit 440 into a bitstream using the DlBR encoding parameter stored in the encoding parameter storage unit 460, and includes at least one of a PointTexture encoder 482 , an Octree encoder 484, an Octree encoder 484, an orientation data encoder 485, position data encoder 486, coordinate data encoder 487, and 3DMC data encoder 488. However, encoders that can be included in the internal encoding unit 480 are not limited. One of the encoders of the internal encoding unit 480 is selected according to the type of a node field in a compression node that contains the DlBR object data to be compressed. The selected encoder receives the uncompressed DlBR object data from the object data storage unit 440 and the DlBR encoding parameter from the encoding parameter storage unit 460, and encodes the DlBR object data into a bitstream using the DlBR encoding parameter.

The PointTexture encoder 482 relates to the stored DlBR object data and DlBR encoding parameter, and encodes PointTexture data using the DIBR encoding parameter.

The Octree encoder 484 relates to the stores DlBR object data and DlBR encoding parameter, and encodes octree data.

The input file generator 420 generates a modified scene file *_modified. scene* and a modified mux file *_modified.mux* when DIBR object data is present in the node field of the compression node of the AFX parser 400.

The modified scene file *_modified. scene* is obtained by deleting DlBR object data and a DlBR encoding parameter from each compression node of the scene file.

The modified mux file *_modified.mux* is modified such that the name of a file output from the BlFS encoding unit 270 can reflect the modified scene file *modifieal scene.*

As described above, the modified scene file*_modified.scene* and the modified mux file *_modified.mux* output from the AFX encoding unit 260 can be input to the BlFS encoding unit 270 and the MP4 encoding unit 280, respectively. When these files are: input to the BlFS encoding unit 270 and the MP4 encoding unit 280, an "mp4" bitstream file 290 is generated. The mp4 bitstream file 290 is executed and visualized by an MPEG-4 Player.

Whether an encoder of the internal encoding unit 480 is appropriately encoded according to uncompressed object data and an encoding parameter output from the AFX parser 400, the object data storage unit 440, and the encoding parameter storage unit 460, is determined by checking an output compressed bitstream.

The XMT file 200 of FIG. 2 may be largely categorized into five types. A first type of the XMT file 200 is used for transmission of compressed DlBR object data to an MPEG-4 encoding unit (BlFS encoding unit 270, MP4 encoding unit 280) using a buffer field (first case). A second type of the XMT file 200 is used for transmission of the compressed DlBR object data to the MPEG-4 encoding unit using a URL field (second case). A third type of the XMT file 200 is used to encode uncompressed DlBR object data using the AFX encoding unit 260 and transmit the encoding result to the MPEG-4 encoding unit using the buffer field (third case). A fourth type of the XMT file 200 is used to encode the uncompressed DlBR object data by the AFX encoding unit 260 and transmit the encoding result to the MPEG-4 encoding unit using the URL field (fourth case). A fifth type of the XMT file 200 can be used when the above first through fourth cases are mixed (fifth case). A scene file and a mux file are generated suitably for each of the five cases.

More specifically, the first type of the input XMT file 200 input to the XMT parser 210 consists of a header having an InitialObjectDescriptor, and a body having at least one compression node and a DepthImage node that contains camera information required to reproduce data in the compression node.

The InitialObjectDescriptor of the header contains information required to decode StreamSource, synchronization information, and a file encoded by the BlFS encoding unit 270. The StreamSource indicates the name of a file output from the BlFS encoding unit 270. The synchronization information specifies a time sequence in which objects are displayed. The compression node of the body includes a node field storing the name of a node of DlBR object data, and a buffer field storing the name of already compressed DlBR object data.

The Depthlmage node of the body stores information regarding a camera orthographic field, a camera position field, a camera orientation field, a camera fieldOfView field, and a nearPlane field and a farPlane field regarding a near plane and a far plane of camera's view volume; and a USE field storing the name of a compression node linked to the camera information.

The scene file includes at least one compression node that is the same as that of the body. The mux file includes an InitialObjectDescriptor that is the same as that of the header. The InitialObjectDescriptor includes a file output from the BIFS encoding unit 270 and stream format information thereof.

The second type of the XMT file 200 input to the XMT parser 210 includes a header with an InitialObjectDescriptor, and a body.

The body includes at least one compression node, a DepthImage node having camera information required to reproduce data in the compression node, and an ObjectDescriptorUpdate having at least one objectDescriptor.

The InitialObjectDescriptor of the header stores a StreamSource indicating the name of a file output from the BlFS encoding unit 270, information required to decode ; a file encoded by the BlFS encoding unit 270, and an ObjectDescriptorUpdate having at least one objectDescriptor.

The compression node of the body indicates a URL lD that is the same as the binary lD of the objectDescriptor in the ObjectDescriptorUpdate. The ObjectDescriptorUpdate has BitWrapperEncodingHints including the name of a file storing a bitstream of already compressed DlBR object data.

The Depthlmage node of the body includes information regarding a camera orthographic field, a camera position field, a camera orientation field, a camera fieldOfView field, and a nearPlane field and a farPlane field regarding a near plane and a far plane of camera's view volume; and a USE field storing the name of a compression node linked to the camera information.

The objectDescriptor in the ObjectDescriptorUpdate of the body includes binary lD, as a field, that has the same value as the URL lD of the compression node of the body; an AFXConfig used to decode the encoded DlBR object data; and a BitWrapperEncodingHints indicating the name of a file storing a bitstream of the compressed DlBR object data and a format in which the bitstream is compressed.

The mux file includes an InitialObjectDescriptor that is the same as that of the header, and an objectDescriptor.

The scene file includes at least one compression node and a Depthlmage node that are the same as those of the body; and an UPDATE OD(ObjectDescriptor) having an objectDescriptor that has objectDescriptorlD that is the same as the binary lD of the objectDescriptor in the ObjectDescriptorUpdate of the body, and has the name of the mux file, as the value of a muxScript.

The third type of the XMT file 200 input to the XMT parser 210 includes a header having an lnitialObjectDescriptor, and a body having at least one compression node and a Depthlmage node storing camera information required to reproduce data in the compression node.

The InitialObjectDescriptor of the header includes a StreamSource indicating the name of a file output from the BlFS encoding unit 270, information required to decode a file encoded by the BlFS encoding unit 270, and synchronization information indicating a time sequence in which objects are displayed.

The compression node of the body stores the names of nodes to be compressed, and includes a node field storing DlBR object data to be encoded, DlBR encoding parameter used to encode the DlBR object data, and a buffer field storing the name of a bitstream file of the DlBR object data encoded using the DlBR encoding: parameter.

The Depthlmage node of the body includes a camera orthographic field, a camera position field, a camera orientation field, a camera fieldofview field, and a nearPlane field and a farPlane field regarding a near plane and a far plane of camera's view volume; and a USE field storing the name of a compression node linked to the camera information.

The scene file includes at least one compression node and a Depthlmage node that are the same as those of the body. The mux file includes an InitialObjectDescriptor that is the same as that of the header, and stream format information of a file output from the BlFS encoding unit 270, the stream format information being included in the InitialObjectDescriptor.

The fourth type of the XMT file 200 input to the XMT parser 210 consists of a header that has an InitialObjectDescriptor; and a body that has at least one compression node, a Depthlmage node including camera information required to reproduce data in the compression node, and an ObjectDescriptorUpdate having at least one objectDescriptor.

The InitialObjectDescriptor of the header includes a StreamSource indicating the name of a file output from the BlFS encoding unit 270, information required to decode a file encoded by the BlFS encoding unit 270, and synchronization information indicating a time sequence in which objects are displayed.

The compression node of the body stores the names of nodes to be encoded; and includes a node field containing DlBR object data to be encoded, DlBR encoding parameter used to encode the DlBR object data, and a URL field storing URL lD that is the same as the binary lD of the objectDescriptor in the ObjectDescriptorUpdate.

The objectDescriptor in the ObjectDescriptorUpdate of the body includes binary ID; as a file, that has the same value as the URL lD of the compression node of the body; an AFXConfig used to decode the encoded DlBR object data; and a BitWrapperEncodingHints indicating the name of a bitstream of the DlBR object data encoded using the DlBR encoding parameter and a format in which the bitstream is compressed.

The mux file includes an InitialObjectDescriptor that is the same as that of the header, and an objectDescriptor that is the same as that in the ObjectDescriptorUpdate of the body.

The scene file has at least one compression node and a DepthImage node that are the same as those of the body; and an UPDATE OD(ObjectDescriptor) having objectDescriptor that has objectDescriptorlD that is the same as the binary lD of the objectDescriptor in the ObjectDescriptorUpdate of the body and has the name of the mux file, as the value of a muxScript.

The fifth type of the XMT file 200 input to the XMT parser 210 consists of a header having an InitialObjectDescriptor, and a body having at least one compression node with a buffer field, at least one compression node with a URL field, a Depthlinage node storing camera information required to reproduce data in the compression nodes, and an ObjectDescriptorUpdate that includes objectDescriptors corresponding to the at least one compression node having the URL field.

The InitialObjectDescriptor of the header stores a StreamSource indicating the name of a file output from the BlFS encoding unit 270, information required to decode a file encoded by the BlFS encoding unit 270, and synchronization information indicating a time sequence in which objects are displayed. The compression node of the body, which has the buffer field, further includes a node field storing the name of a node to be encoded, object data that is stored in the node field and is to be encoded, an encoding parameter used to encode the object data, and a buffer field storing the name of a bitstream file of the object data encoded using the encoding parameter.

The compression node with the URL field of the body includes a node field storing the name of a node to be encoded, object data that is stored in the node field and is to be encoded, an encoding parameter used to encode the object data, and a URL field storing URL lD that is the same as the binary lD of the objectDescriptor in the ObjectDescriptorUpdate. The objectDescriptor in the ObjectDescriptorUpdate of the body includes the binary lD, as a field, that has the same value as the URL lD of the compression node of the body; AFXConfig used to decode the encoded object data; and a BitWrapperEncodingHints indicating the name of a file storing a bitstream of the bitstream encoded using the encoding parameter and a format in which the bitstream is compressed.

The Depthlmage node of the body includes a camera orthographic field; a camera position field; a camera orientation field; a camera fieldOfView field; a nearPlane field and a farPlane field regarding a near plane and a far plane of camera's view volume; and a USE field storing the name of a compression field linked to the camera information.

The mux file includes an InitialObjectDescriptor that is the same as the InitialObjectDescriptor of the header, and an objectDescriptor that is the same as the objectDescriptor in the ObjectDescriptorUpdate of the body.

The scene file includes a compression node and a Depthimage node that are the same as those of the body; an UPDATE OD(ObjectDescriptor) having objectDescriptor that has objectDescriptorlD which is the same as the binary identification of the objectDescriptor in the ObjectDescriptorUpdate of the body, and has the name of the mux file, as the value of a muxScript.

The input file generating system illustrated in FIG. 2 will now be described in greater detail. First, the structure of a node for compressing DlBR object data and a method of compressing the DlBR object data using an XMT-A schema regarding an encoding parameter will be described.

The conventional XMT technique does not define the XMT-A schema regarding DlBR data compression, and thus does not allow parsing of an input XMT file regarding DlBR data compression. To solve this problem, as illustrated in FIG. 2, the present invention provides the XMT-A schema 230 that defines the compression node regarding DIBR data compression and an encoding parameter. Thus, when the XMT file 200 regarding DIBR data compression using the compression node is input to the XMT parser 210, the XMT parser 210 can parse the XMT file 200 according to the XMT-A schema 230, the XMT2MUX style sheet 220, and the XMT2BlFS style sheet 240. If the XMT file 200 contains compressed data, the XMT parser 210 parses the XMT file 200 and generates input files such as a scene file and a mux file to be input to an MPEG-4 encoding unit without an additional process. If the XMT file 200 contains uncompressed DIBR data, the XMT parser 210 encodes the uncompressed DlBR data using the AFX encoding unit 260 to generate input files, i.e., modified scene and mux files to be input to the MPEG-4 encoding unit.

The MPEG-4 encoding unit includes the BlFS encoding unit 270 and the MP4 encoding unit 280. When the generated scene and mux files are respectively input to the BIFS encoding unit 270 and the MP4 encoding unit 280, the ".mp4" bitstream file 290 is generated, and visualized by an MPEG-4 player to be viewed by a user.

Use of the compression node and meta representation of an encoding parameter, i.e., the XMT-A schema 230, allows an author to determine whether DlBR data is to be compressed during an authoring process, depending on whether the meta representation is selected. Also, when the author determines to compress the DlBR data, the encoding parameter regarding the DlBR data may be represented using the meta language.

lf the author determines to compress the DlBR data, the author can transmit the DlBR data to the MPEG-4 encoding unit by adjusting the encoding parameter, using one of the following ways of: (i) encoding the DlBR data into a bitstream using the AFX encoding unit 260; and (ii) transmitting an already compressed bitstream to the MPEG-4 encoding unit.

The above ways are subdivided into the following five ways of: (i) transmitting an already compressed bitstream using a buffer; (ii) transmitting an already compressed bitstream using an URL: (iii) compressing uncompressed DlBR object data into a bitstream using a DlBR encoding parameter and transmitting the bitstream using a buffer; (iv) compressing uncompressed DlBR object data into a bitstream using a DlBR encoding parameter and transmitting the bitstream using a URL; and (v) transmitting DlBR object data using at least two ways of the above ways (i) through (iv).

Next, a method of representing factors required to compress DlBR data using the meta language, i.e., the XMT, will now be described. In this method, a compression node and parameter related to compression of the DlBR data are presented using the meta language. In this disclosure, the method will be described with respect to a "BitWrapper" node and a parameter required for compression of the DlBR data.

### 1. XMT-A Schema regarding BitWrapper Node

In brief, the "BitWrapper" node defines compression of data in a "node" field into a bitstream and transmission of the bitstream as in-band data (OK?) or out-band data. A "URL" field defines transmission of the data as an out-band bitstream, and a "buffer" field defines transmission of the data are an in-band bitstream such as a BlFS bitstream.

lf the author desires to compress and transmit the data using the "BitWrapper" node, the author must adjust a parameter for generating a bitstream. The parameter can be adjusted using XMT-A schema syntax. However, since the parameter is related to decoding syntax other than particular encoding syntax, they can be adjusted during data compression. In the present embodiment, the "BitWrapper" node supports transmission of a bitstream compressed using compression tools regarding PointTexture data and Octree data as DlBR data.

The "BitWrapper" node is a dedicated scheme for node compression. The representation of compressed data is transmitted as the BlFS stream or a stream separated from the BlFS stream. When a stream is transmitted within a BlFSUpdate, the "buffer" field contains representation of compressed data. If the stream is transmitted separately from the BlFSUpdate, the "URL" field contains the URL of the stream. The "buffer" field and the "URL" field are not compatible with each other. That is, the "URL" field is not used during use of the "buffer" field, and vice versa. The "node" field includes a node containing representation of compressed data. The "BitWrapper" node can be used at a "node". The "type" field indicates that a node compression scheme must be used. 0 is a default value of the "type" field. The value of the "type" field is determined in consideration of a possibility that a further scheme for node compression will be developed.

When representation of compressed data is included in a separate stream and transmitted, a node decoder must be presented in a predetermined frame. In an object descriptor stream, the node decoder must be defined in DecoderConfig descriptor with respect to "streamType 0x03" and "objectTypeIndication 0x05". The decoder is configured with an AFXConfig descriptor.

### 2- XMT-A Schema for BitWrapperEncodingHints

BitWrapperEncodingHints specifies a "MuxInfo" description in a script (.mux) file, and thus, the format of BitWrapperEncodingHints is the same as a binary textual format. The "BitWrapper" node is used for an out-band data transmission that uses the "URL" field in the "BitWrapper" node. BitWrapperEncodingHints defines a stream format type of the "MuxInfo" description, and provides EncodingHints corresponding to each of PointTexture data and Octree data.

### 3. XMT-A Schema regarding AFXConfig

When the AFX tool is encoded into a bitstream and the bitstream is transmitted using the "BitWrapper" node, AFXConfig provides information regarding decoding of the transmitted bitstream. The "BitWrapper" node is used for the out-band data transmission that uses the "URL" field included in the "BitWrapper" node. That is, AFXConfig is very significant information indicating that the bitstream is encoded using the AFX tool and specifying a method of encoding the bitstream. Also, in the present embodiment, AFXConfig defines two methods of decoding PointTexture data and Octree data.

MuxInfo and BitWrapperEncodingHints syntax must be added to the XMT2MUX style sheet 220.

In the original syntax, the XMT2MUX style sheet does not sufficiently describe MUX information regarding a bitstream to be transmitted to an MP4 encoding unit. For instance, the MUX information specifies the name and type of the bitstream, e.g., a ".bifs" file and an ".od" file. Also, the XMT2MUX style sheet does not describe the information, e.g., a "bunny-15000-tcp.m3d" file which will be described in "Embodiment 3" and the type of the bitstream, regarding a bitstream to be transmitted via a URL when the URL is defined in the `"BitWrapper" node. Accordingly, the name of a file storing the bitstream presented in the "BitWrapper" node and the type of the bitstream must be described.

Further, the XMT parser 210 requires an XMT style sheet to make files (a ".scene" file and a ".mux" file) to be input to the MPEG-4 encoding unit, based on the XMT-A schema. To output AFXConfig information in a format of the ".mux" file, the XMT style sheet must be designed to include the AFXConfig information. In detail, the AFXConfig information is added to the XMT2MUX style sheet. In the present embodiment, AFXConfig information specifying two decoding methods is added to the XMT style sheet.

DecConfigDescr includes decSpecificlnfo, and represents information required to decode a bitstream during a decoding process. To allow the XMT parser 210 to make a file to be input to the MPEG-4 encoding unit based on the XMT-A schema and the XMT style sheet, DecConfigDescr must be added to the XMT2MUX style sheet.

SLConfigDescriptor presents time information required for synchronization between bitstreams during a decoding process. To allow the XMT parser 210 to make a file to be input to the MPEG-4 encoding unit based on the XMT-A schema and the XMT style sheet, SLConfigDescriptor must be added to the XMT2MUX style sheet.

"Update OD" is used when an author links a scene description stream (BlFS stream) to another element stream via the "URL" field. ObjectDescriptorlD and a description regarding the name of a script file are added into "Update OD". The format of "Update OD" is the same as a binary textual format.

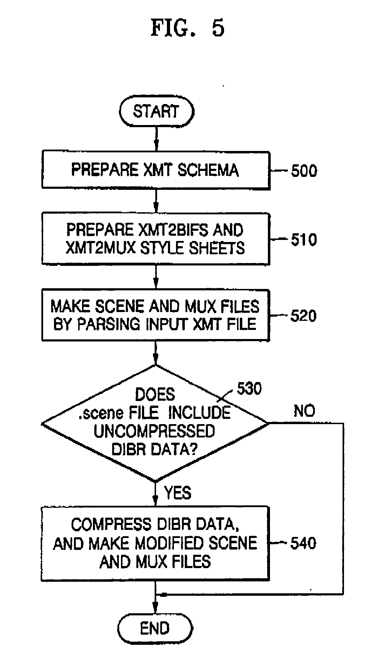

FIG. 5 is a flowchart illustrating a method of generating an input fie using meta representation of DlBR data compression according to an embodiment of the present invention. Referring to FIG. 5, first, an XMT schema that defines a compression node containing information regarding DlBR object data to be encoded, an encoding parameter required for data compression, and BitWrapperEncodingHints describing at least the location of a compressed DlBR object data file, is prepared (operation 500). Next, an XMT2BlFS style sheet that supports conversion of an input XMT file into a scene file according to the XMT schema, and an XMT2MUX style sheet that supports conversion of the input XMT file into a mux file based on the XMT schema, are prepared (operation 510). Next, when the input XMT file is input to an XMT parser, the XMT file is parsed using the XMT schema, the XMT2BlFS style sheet, and the XMT2MUX style sheet to generate a scene file and a mux file (operation 520). Then, whether the scene file obtained by parsing the XMT file contains uncompressed DlBR data is determined (operation 530). When it is determined in operation 530 that the scene file contains uncompressed DlBR data, the DlBR data is encoded into a bitstream using a DlBR encoding parameter included in the scene file so as to obtain the compressed bitstream and modified scene and mux files (operation 540).

More specifically, when already compressed DlBR data is transmitted using a buffer or a URL, it is possible to make an input file to be input to an MPEG4-encoding unit without the AFX encoding unit 260 of FIG. 2. However, when uncompressed DlBR data is compressed into a bitstream using a DlBR encoding parameter and the bitstream is transmitted using the buffer or the URL, the AFX encoding unit 260 of FIG. 2 is required to make the input file to be input to the MPEG-4 encoding unit.

### (1) When transmitting an already compressed bitstream using a buffer:

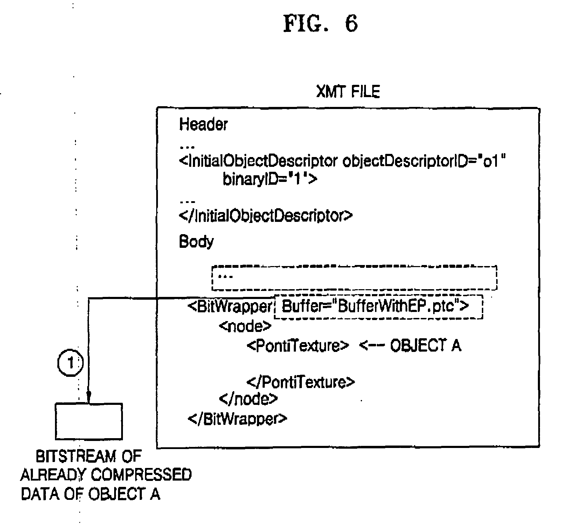

A method of transmitting a bitstream of already compressed DlBR data using a buffer, according to an embodiment of the present invention, will be described with reference to FlGS. 2 and 6. As indicated by an arrow ① of FIG. 6, an already compressed bitstream of 3D DlBR data, e.g., depth and color thereof, of an object A is transmitted using a compressed bitstream name "BufferWithEP.ptc" of a buffer field in a compression node.

As illustrated in FIG. 2, when the XMT file 200 is input to the XMT parser 210, the XMT parser 210 inserts the compressed bitstream together with scene data into a ".scene" bitstream according to the XMT-A schema 230, the XMT2BlFS style sheet 240, and the XMT2MUX style sheet 220, and transmits the ".scene" bitstream.

The XMT file 200 includes a header having an lnitialObjectDescriptor, and a body having at least one compression node and a Depthlmage node having camera information required to reproduce data in the compression node. The InitialObjectDescriptor of the header includes a StreamSource indicating the name of a file output from the BlFS encoding unit 270, information required to decode a file encoded by the BlFS encoding unit 270, and synchronization information indicating a time sequence in which objects are displayed. The compression node of the body includes a node field storing the name of an already compressed node, and a buffer field storing the name of an already compressed DlBR object data file.

The DepthImage node of the body includes a camera orthographic field, a camera position field, a camera orientation field, a camera fieldOfView field, and a nearPlane field and a farPlane field regarding a near plane and a far plane of camera's view volume; and a USE field storing the name of a compression node linked to the camera information.

The scene file includes at least one compression node that is the same as the compression node of the body. The mux file includes an InitialObjectDescriptor that is the same as the InitialObjectDescriptor of the header, and a file output from the BlFS encoding unit 270 and stream format information thereof that are included in the lnitial0bjectDescriptor.

The information in the mux file contains a ".bits/.od" file generated by the BlFS encoding unit 270 that is a type of the MPEG-4 encoding unit. When the information in the mux file and the ".bifs/.od" file are input to the MP4 encoding unit 280, the ".mp4" bitstream file 290 is generated and then visualized by an MPEG-4 player. This method will now be described in greater detail with reference to Embodiment 1.

Embodiment 1 that is an example of an XMT file describing transmission of a bitstream of already compressed DlBR data using a buffer, is as follows:

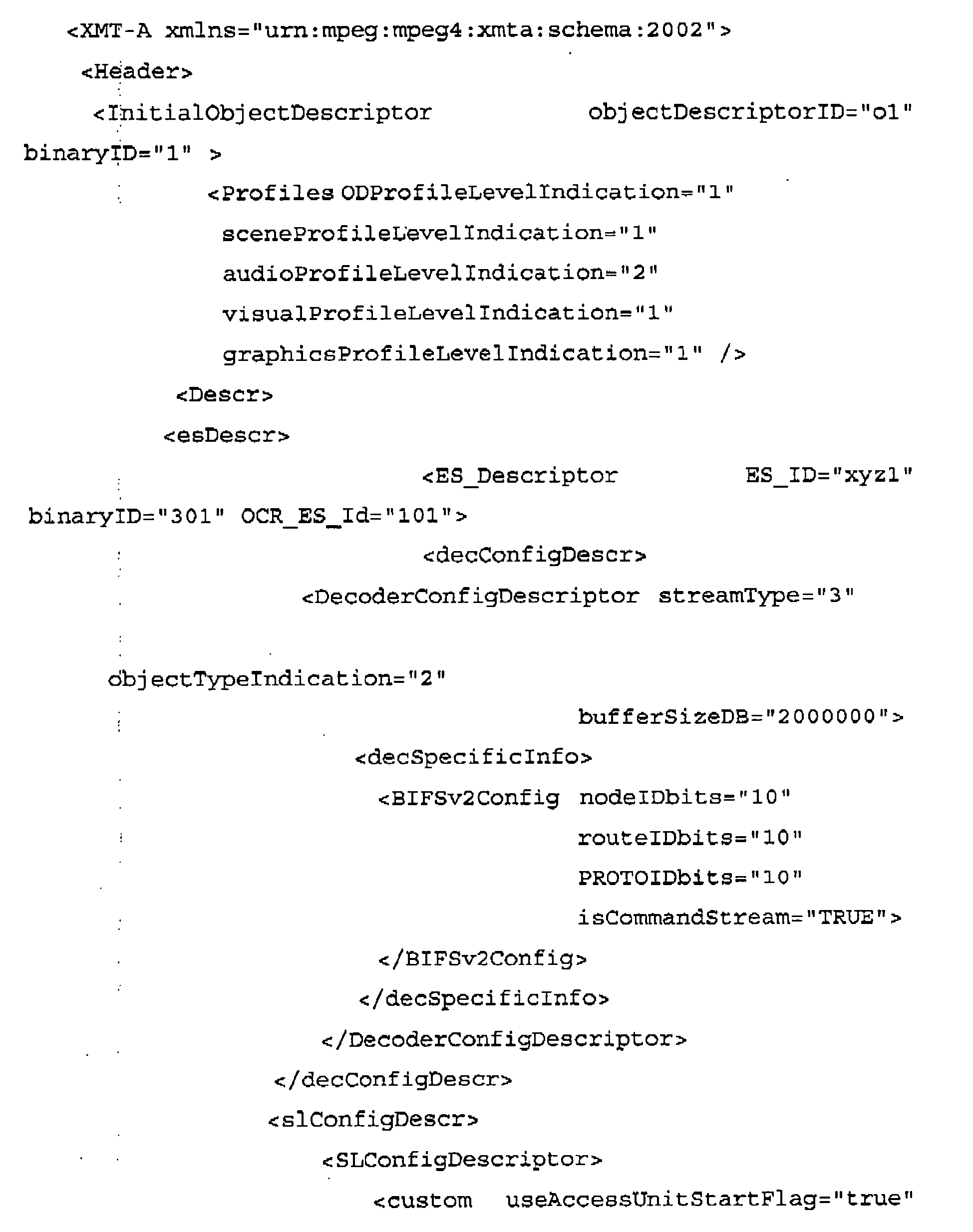

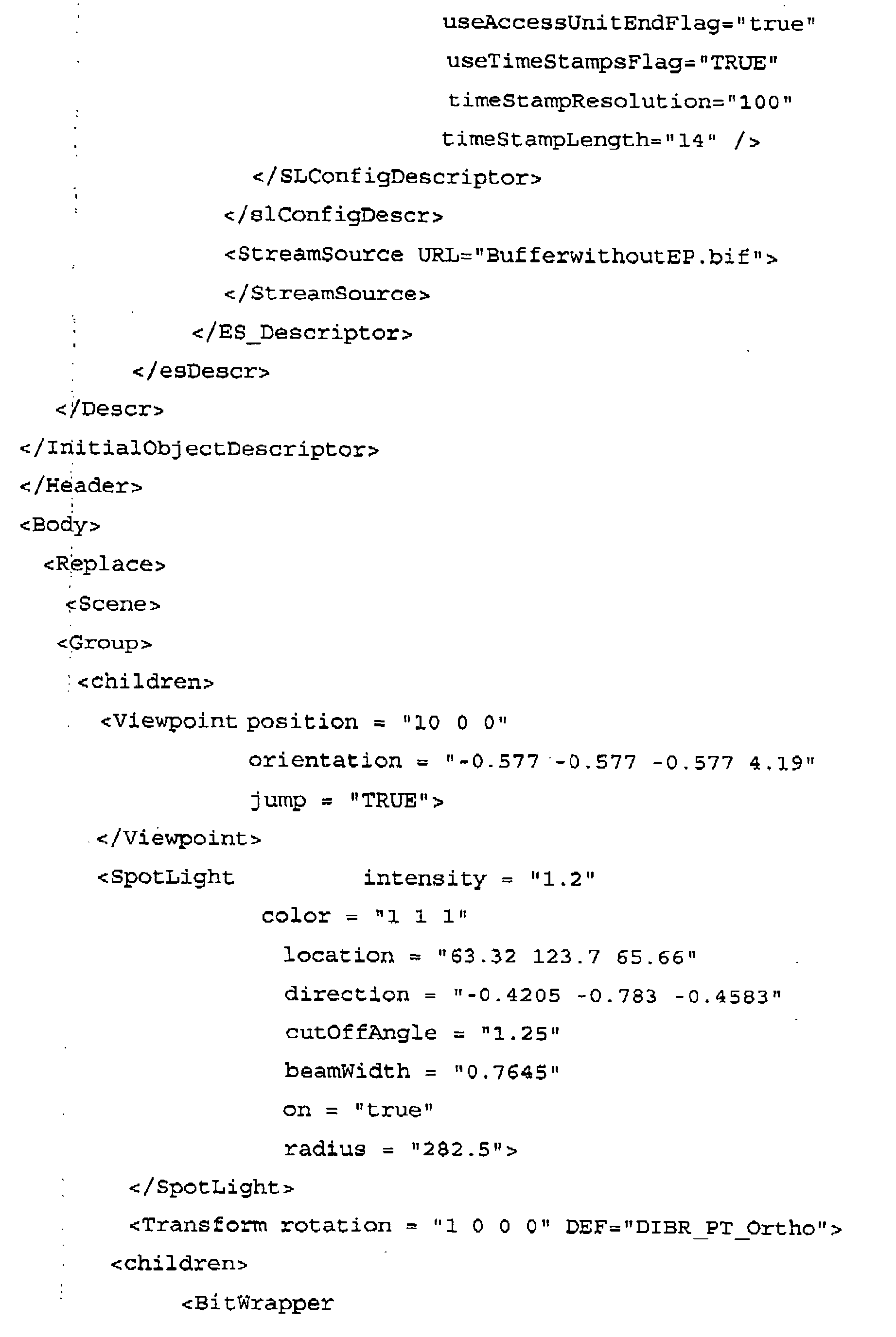

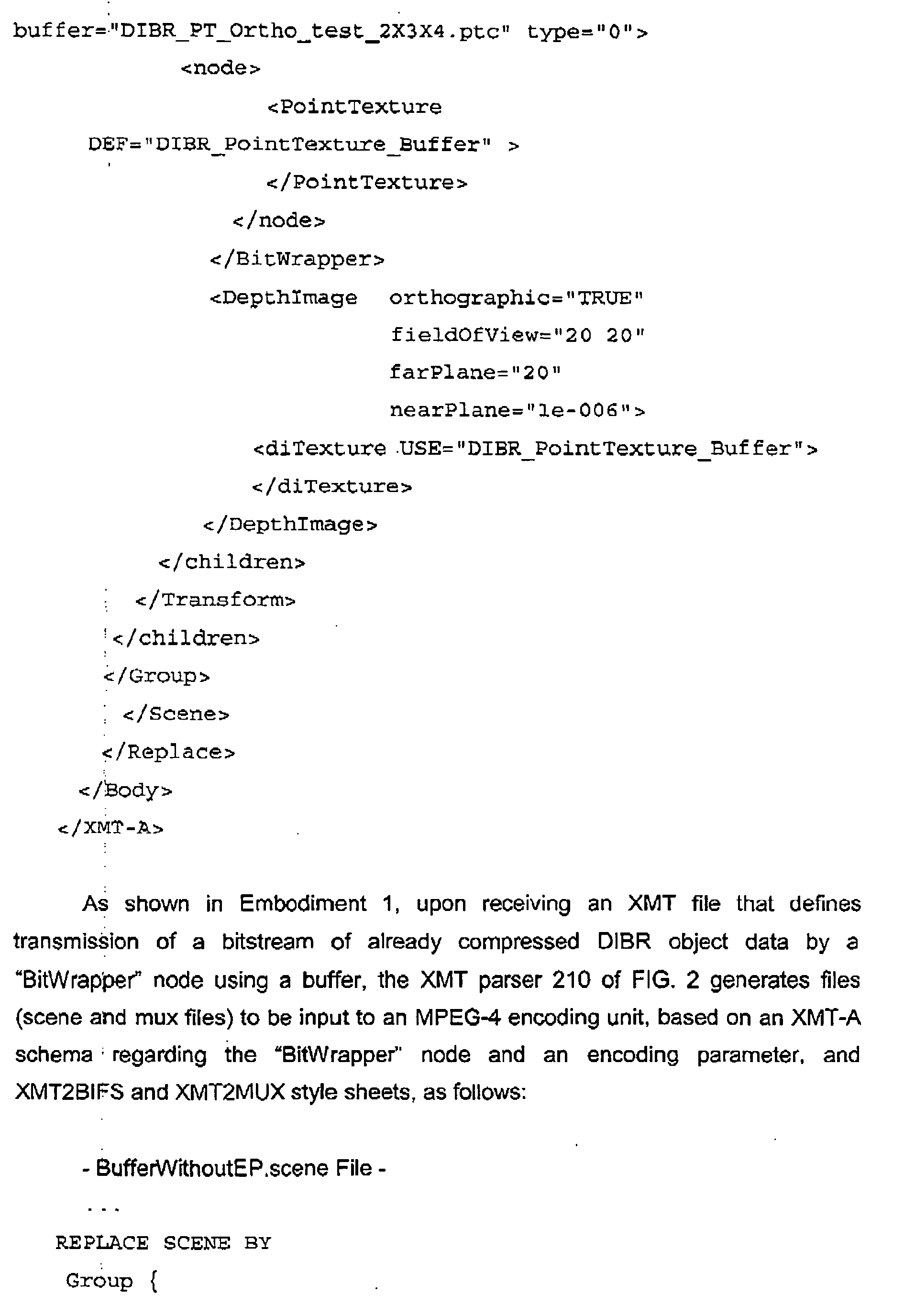

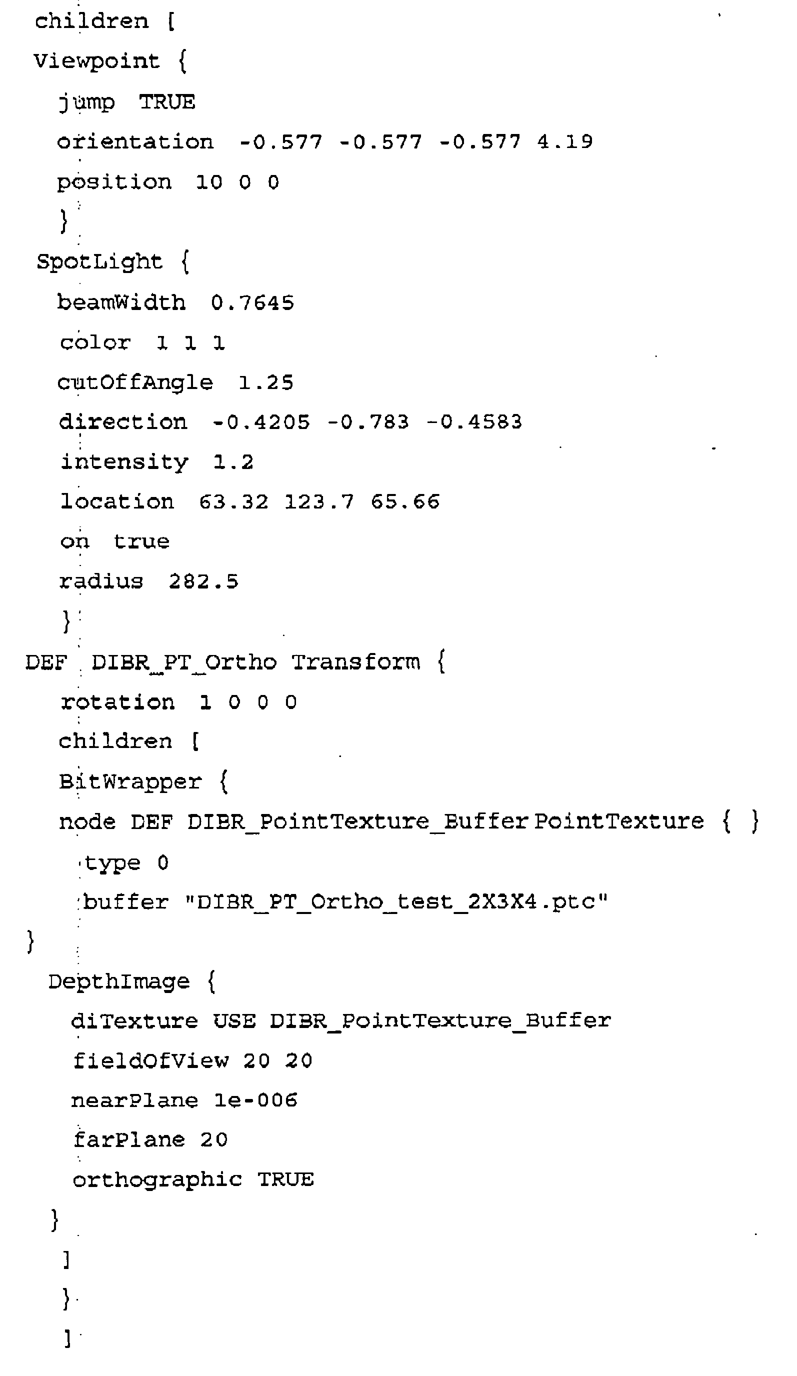

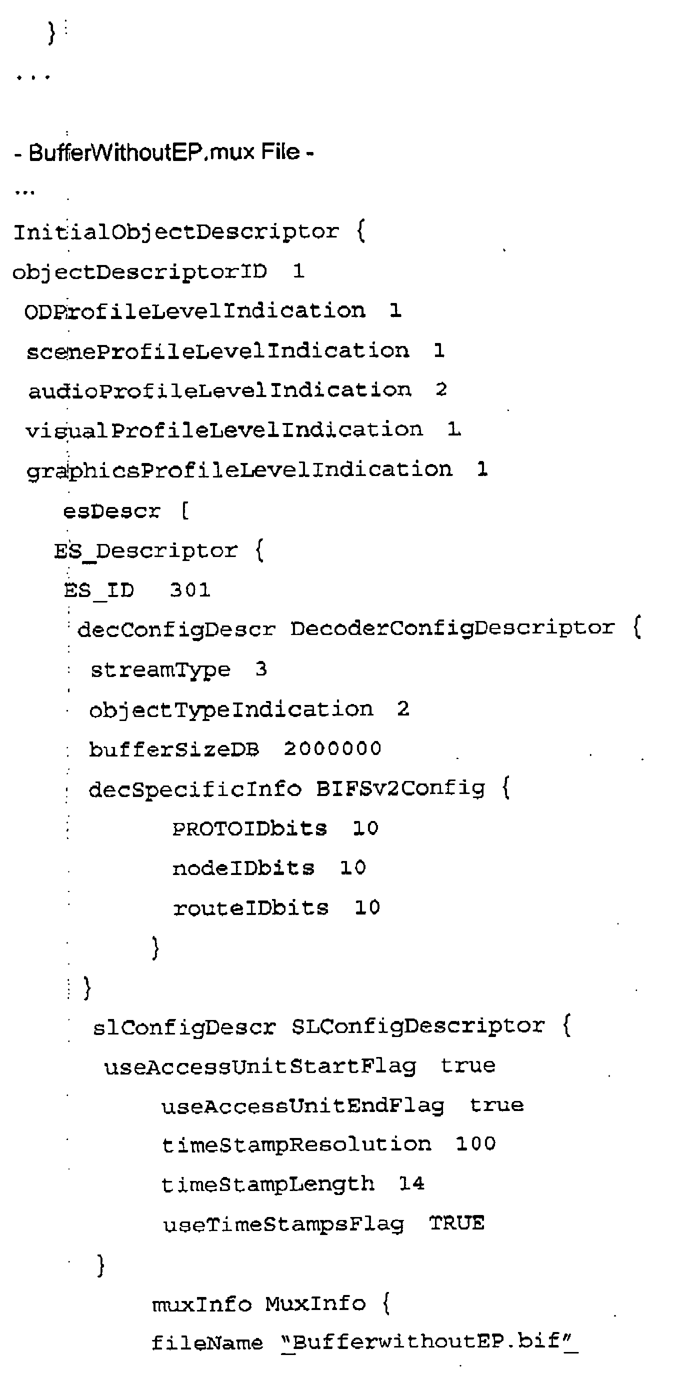

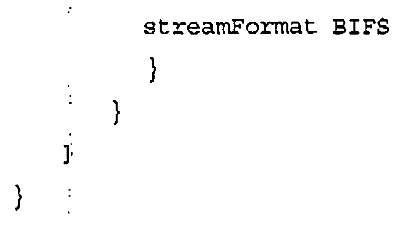

When the scene and mux files are input to the MPEG-4 encoding unit, a ".bifs/.od" file is output from the BlFS encoding unit 270. The ".bifs/.od" file and the mux file are input to the MP4 encoding unit 280, an ".mp4" bitstream file is output from the MP4 encoding unit 280. The ".mp4" bitstream file is visualized by an MPEG-4 player.

### (2) When transmitting an already compressed bitstream using a URL:

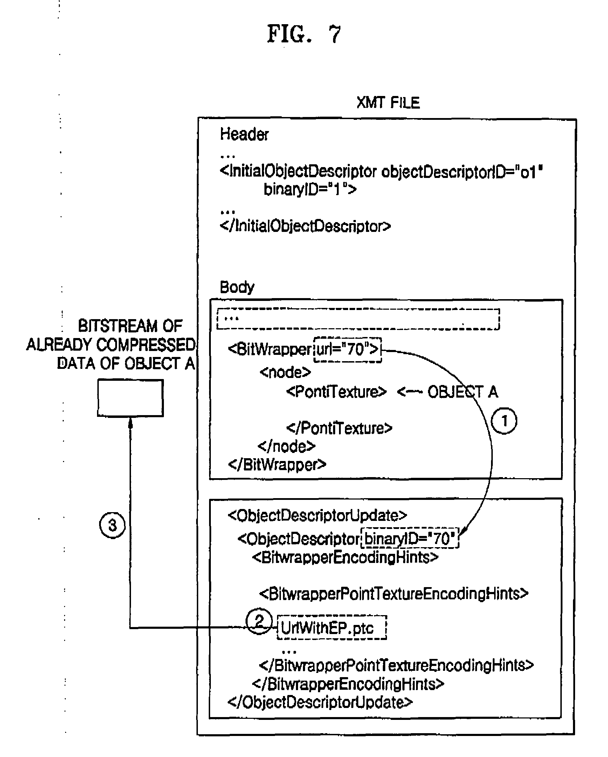

A method of transmitting an already compressed bitstream using a URL, according to an embodiment of the present invention, will now be described with reference to FIGS. 2 and 7.

FIG. 7 illustrates a method of transmitting a bitstream of already compressed DlBR data (depth, color, etc.) regarding an object A in a "BitWrapper" node using a URL, according to an embodiment of the present invention.

In the method of FIG. 7, first, an object descriptor having binary lD, as a field, the value of which is equal to the value of 70, for example, of URL lD defined in a URL field in a compression node ("BRWrapper" node) is updated, as indicated by ①. Next, the name of an already compressed bitstream defined in BitWrapperEncodingHints in the object descriptor is detected, as indicated by ①. Next, the already compressed bitstream is transmitted using the name of the already compressed bitstream defined in BitWrapperEncodingHints, as indicated by ①.

As illustrated in FIG. 2, when the XMT file 200 is input to the XMT parser 210, the XMT parser 210 inserts the already compressed bitstream together with scene data into a bitstream regarding a scene and transmits the inserting result, based on the XMT-A schema 230, using the XMT2BlFS style sheet 240 and the XMT2MUX style sheet 220.

The XMT file 200 includes a header having an InitialObjectDescriptor; and a body having at least one compression node, a DepthImage node that includes camera information required to reproduce data in the compression node, and an ObjectDescriptorUpdate that has at least one objectDescriptor.

The InitialObjectDescriptor of the header includes a StreamSource indicating the name of a file output from BlFS encoding unit 270, and synchronization information indicating a time sequence in which objects are displayed.

The compression node of the body has URL lD that is the same as binary lD of the objectDescriptor in the ObjectDescriptorUpdate that includes BitWrapperEncodingHints including the name of a file storing a bitstream of the already compressed DlBR object data.

The Depthlmage node of the body includes a camera orthographic field, a camera position field, a camera orientation field, a camera fieldOfView field, and a nearPlane field and a farPlane field regarding a near plane and a far plane of camera's view volume; and a USE field storing the name of a compression node linked to the camera information.

The objectDescriptor in the ObjectDescriptorUpdate of the body includes binary lD, as a field, the value of which is equal to the value of the URL lD of the compression node of the body; AFXConfig that is information used to decode the compressed DlBR object data; and BitWrapperEnoodingHints indicating the name of a file storing the bitstream of the compressed DlBR object data and a format in which the bitstream is compressed.

The mux file includes an InitialObjectDescriptor that is the same as the InitialObjectDescriptor of the header, and an objectDescriptor that is the same as the objectDescriptor in the ObjectDescriptorUpdate of the body.

The scene file has at least one compression node and a Depthlmage node that are the same as those of the body; an UPDATE OD(ObjectDescriptor) having an objectDescriptor that has objectDescriptorlD that is the same as the binary identification of the objectDescriptor in the ObjectDescriptorUpdate of the body of the input XMT file, and has the name of the mux file, as the value of a muxScript.

The mux file contains the ".bifs/.od" file output from the BlFS encoding unit 270 that is an MPEG-4 encoding unit. When the mux file and the ".bifs/.od file are input to the MP4 encoding unit 280, the ".mp4" bitstream file 290 is generated, and visualized by an MPEG-4 player. The method of FIG. 7 will be described in greater detail with reference to Embodiment 2.

Embodiment 2 that is an example of an XMT file describing transmission of a bitstream of an already compressed DlBR data using the "BitWrapper" node, using a URL" is as follows:

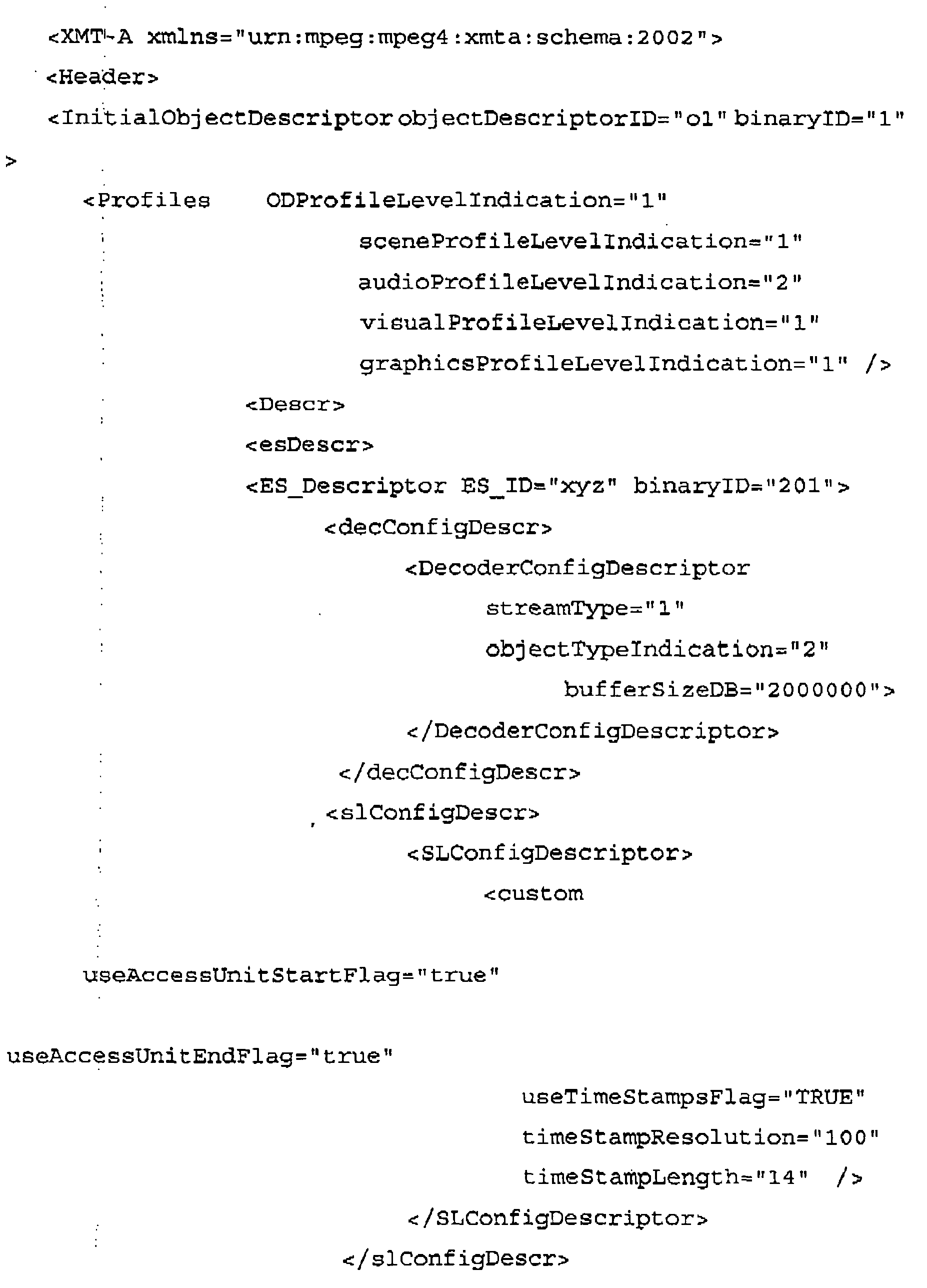

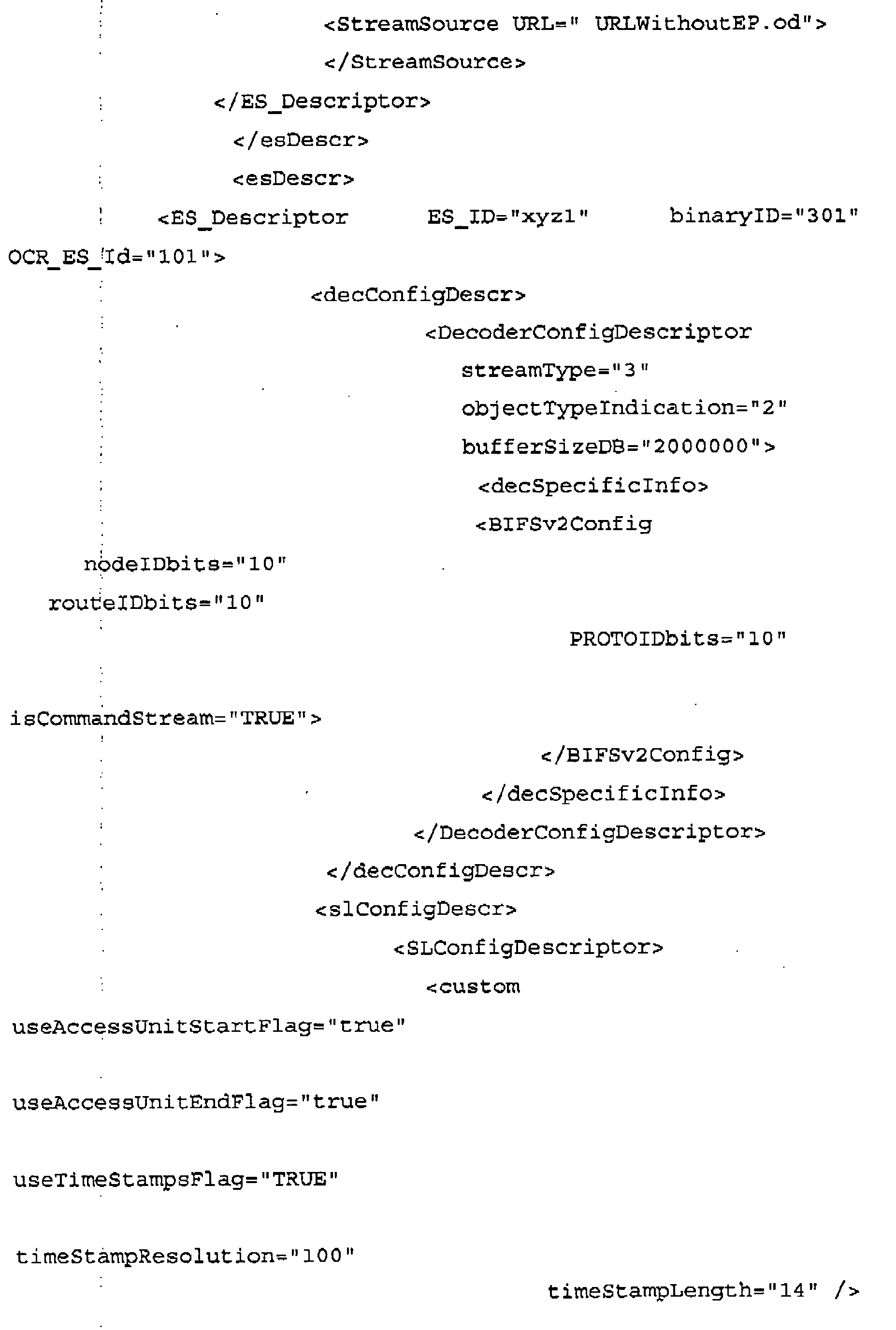

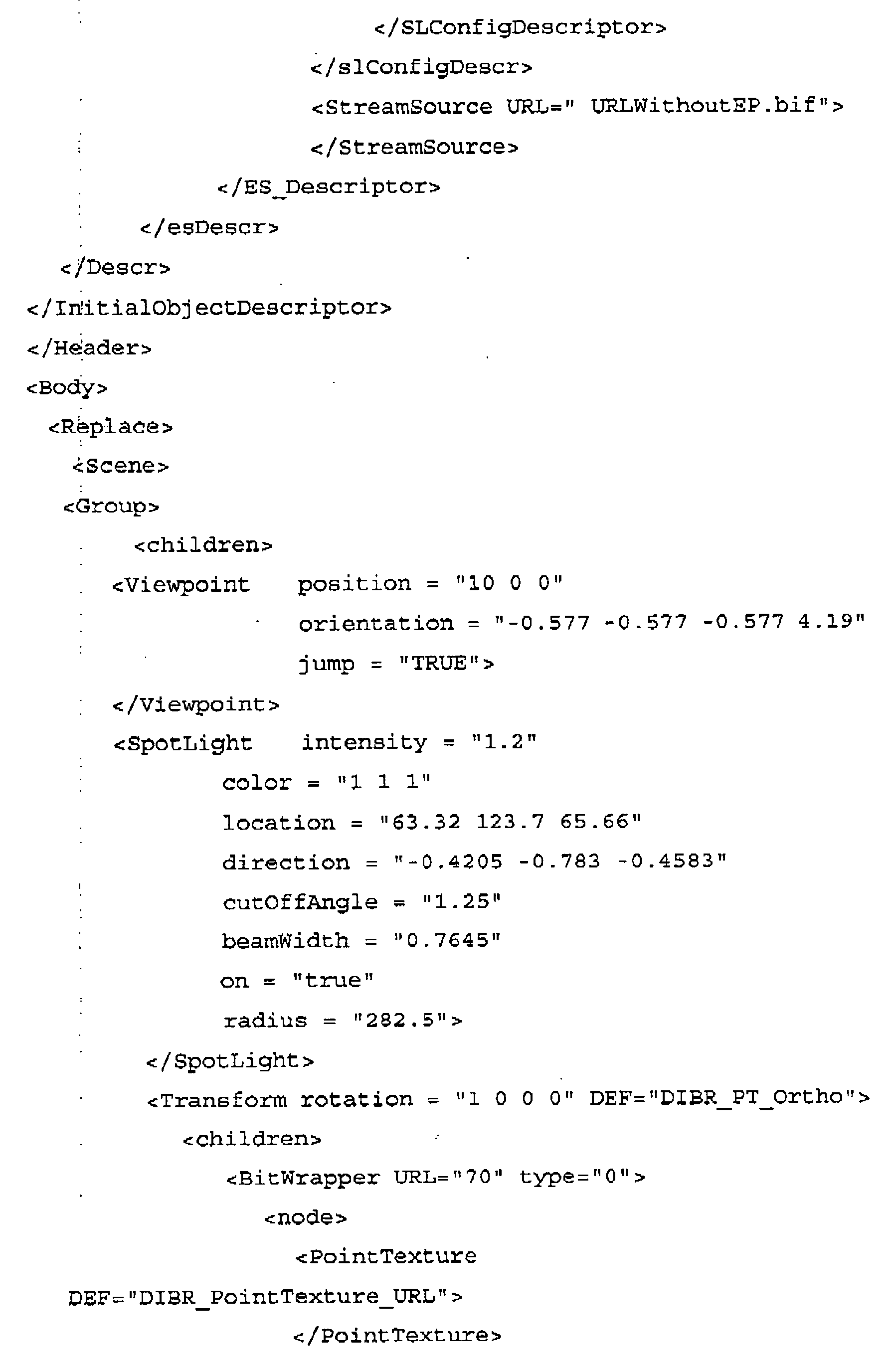

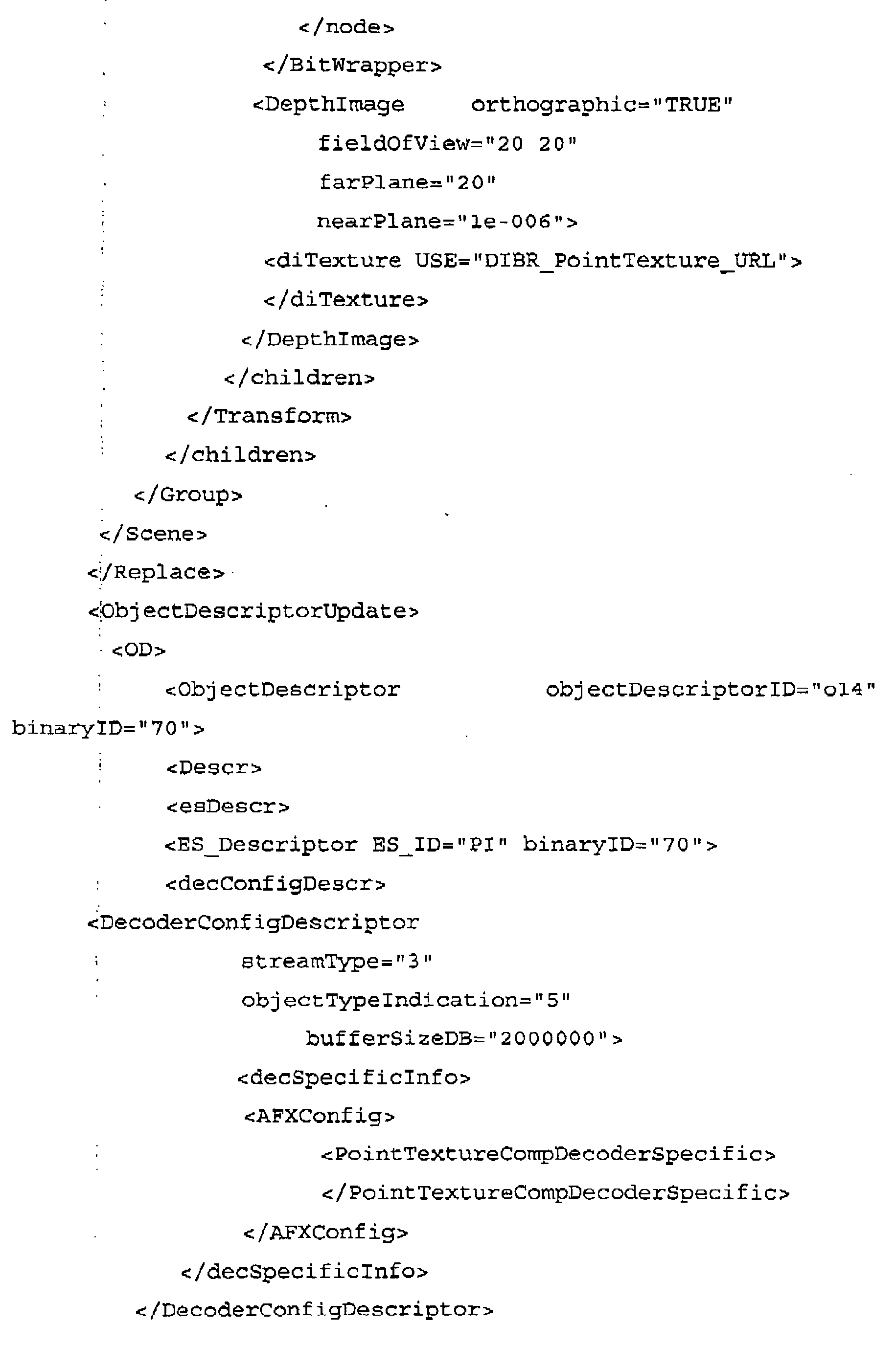

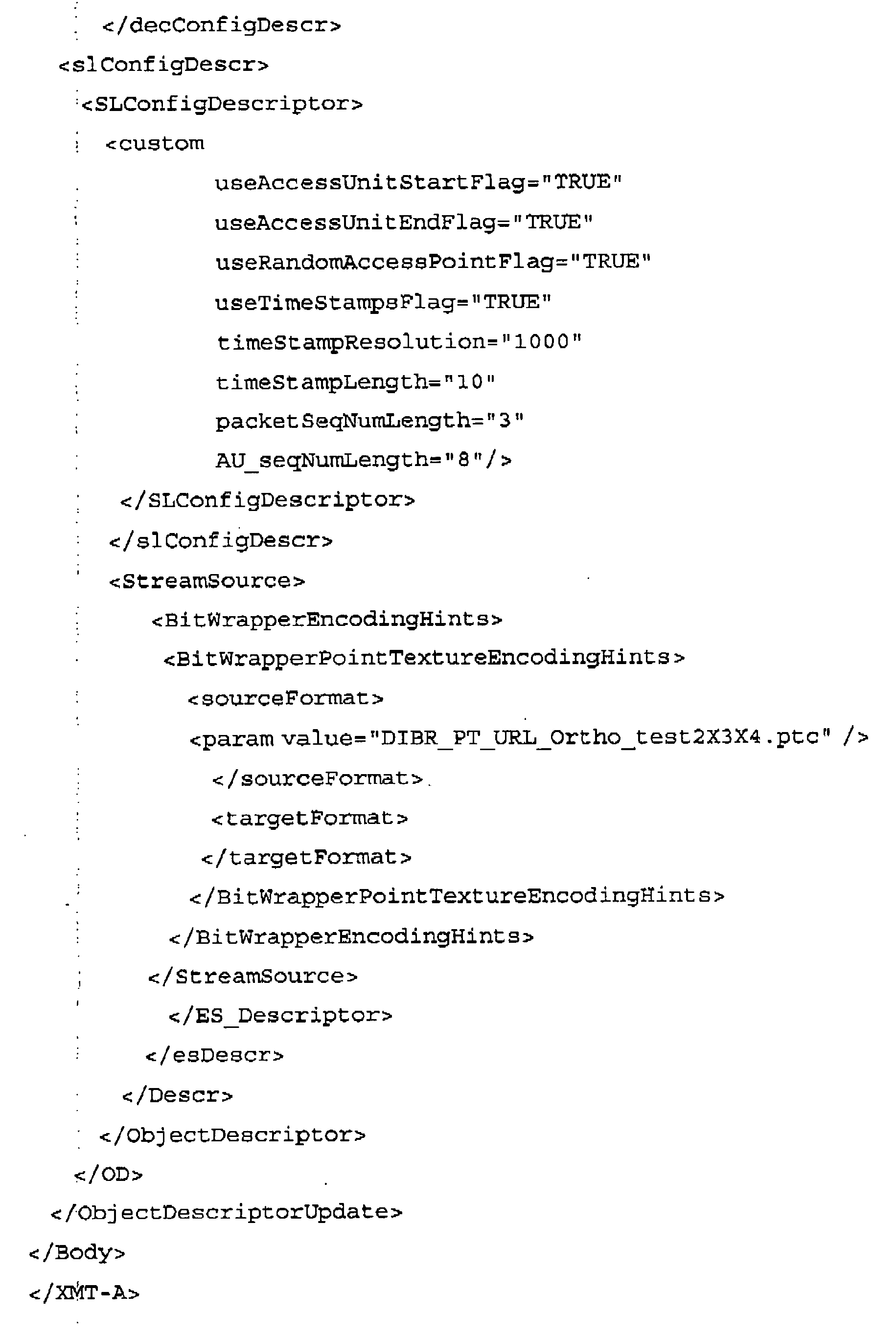

As illustrated in Embodiment 2, upon receiving an XMT file that defines transmission of a bitstream of an already compressed DlBR data using the "BitWrapper" node through a URL, the XMT parser 210 makes input files (scene and mux files) to be input to an MPEG-4 encoding unit, based on the XMT-A schema 230, the XMT2BIFS style sheet 240, and the XMT2MUX style sheet 220, as follows:

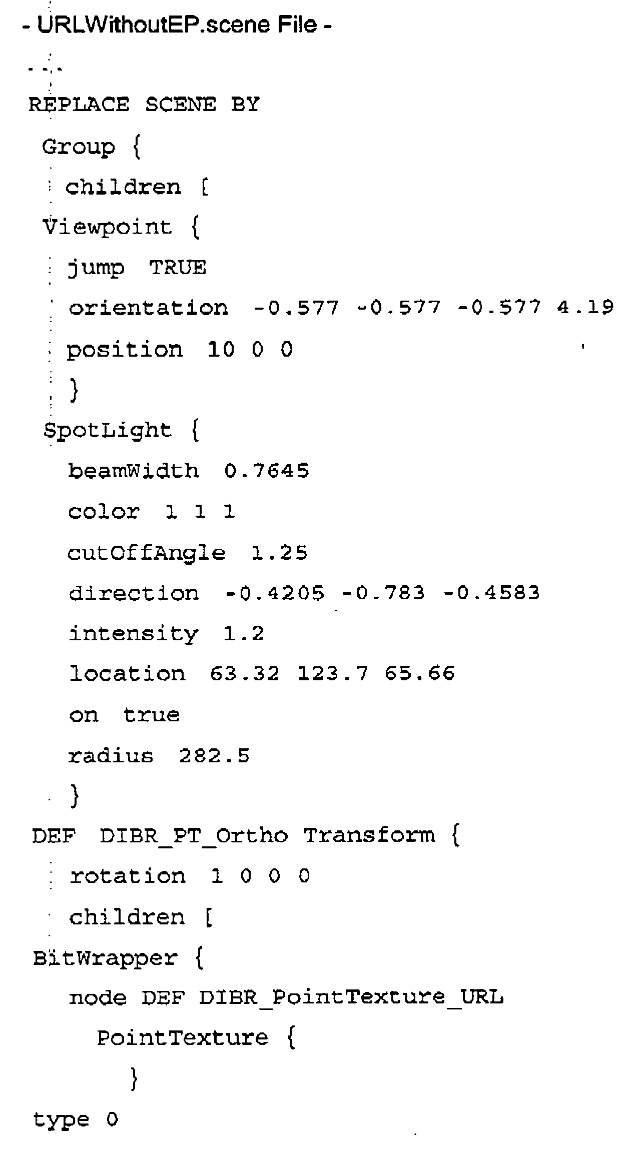

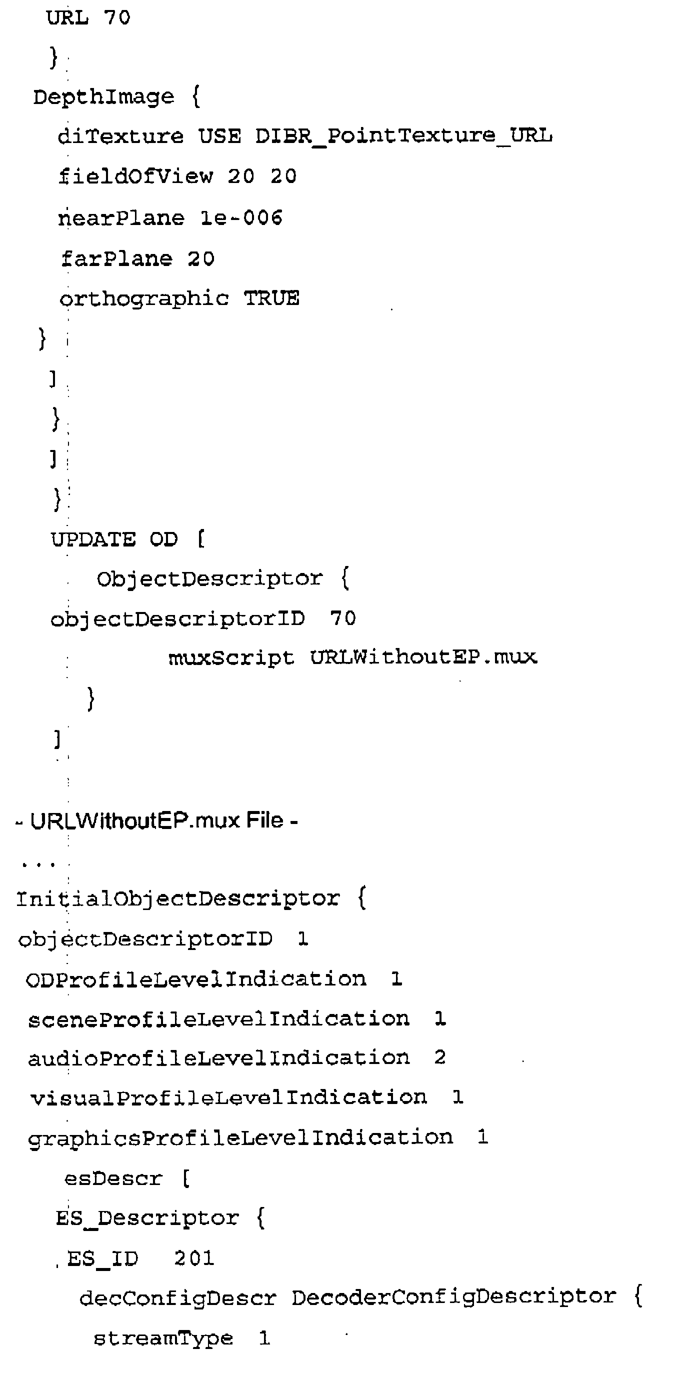

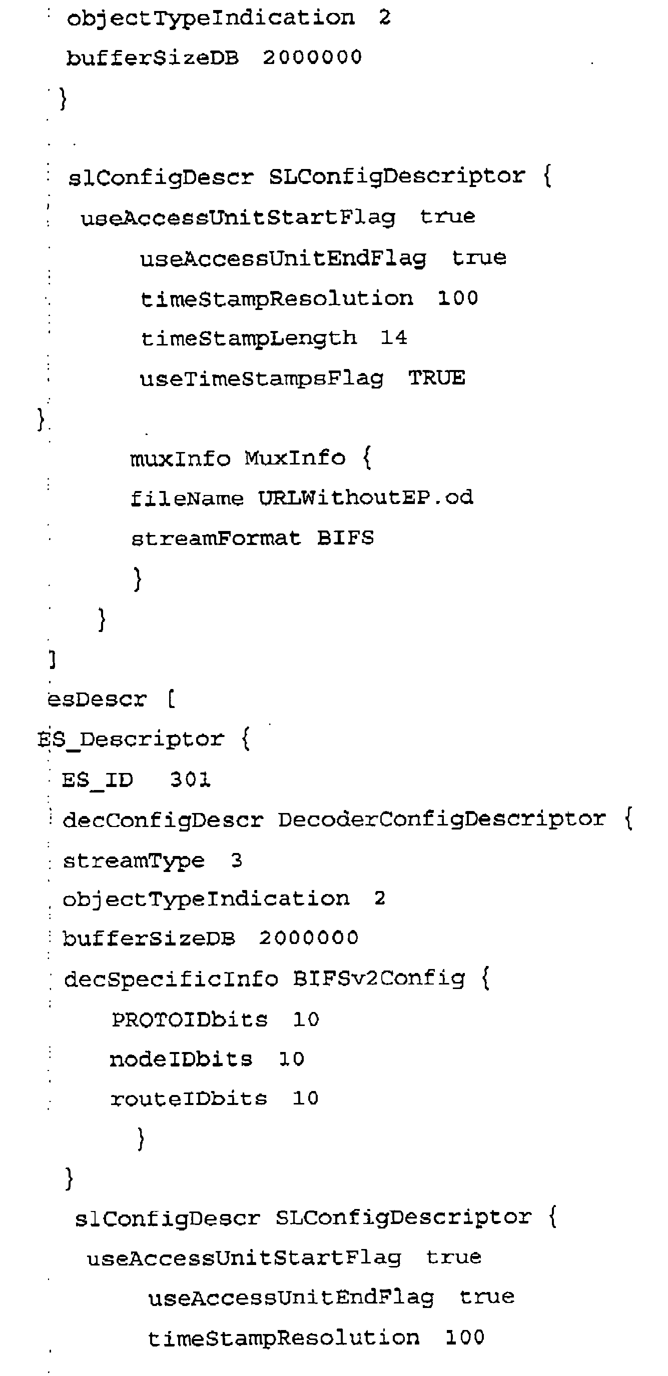

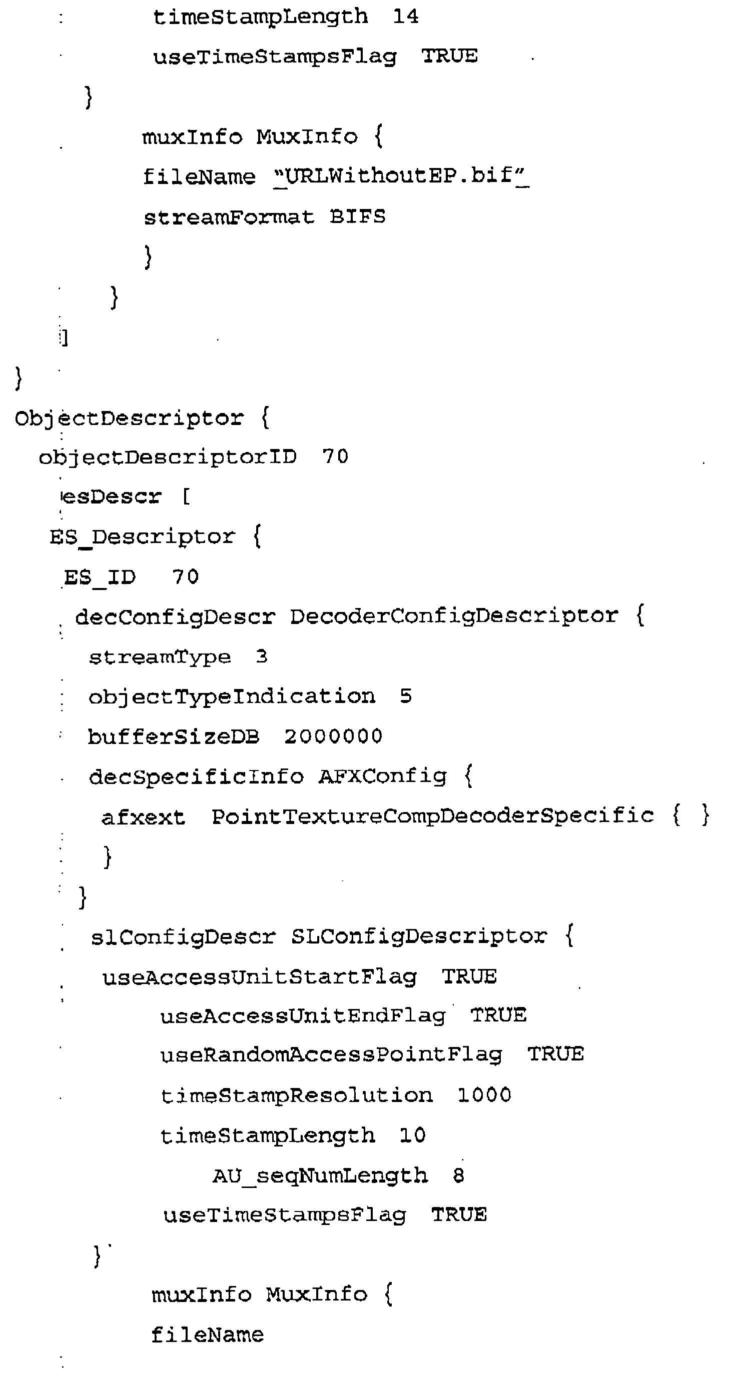

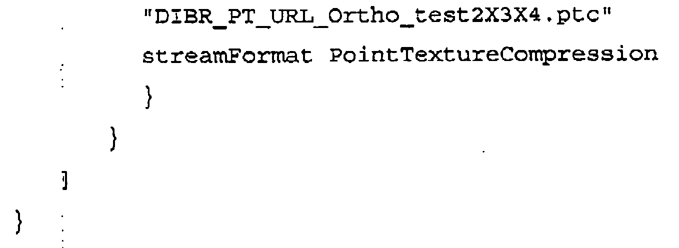

The scene and mux files are input to the MPEG-4 encoding unit. When the scene file is input to the BlFS encoding unit 270, a ".bifs/.od" file is generated, and when the ".bifs/.od" file and the mux file are input to the MP4 encoding unit 280, an ".mp4" bitstream file is generated. The ".mp4" bitstream file is visualized by an MPEG-4 player.

### (3) When compressing uncompressed DlBR object data into a bitstream using an encoding parameter and transmitting the bitstream using a buffer.

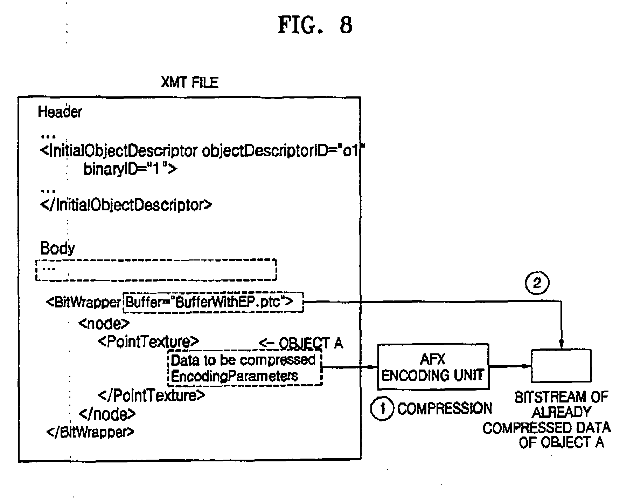

A method of compressing uncompressed DlBR object data into a bitstream using an encoding parameter and transmitting the bitstream using a buffer, according to an embodiment of the present invention, will be described with reference to FIGS. 2 and 8.

Referring to FIG. 8, DlBR object data (depth, color, etc.) regarding an object A is compressed into a bitstream by the AFX encoding unit 260 using an encoding parameter, as indicated by ①. The compressed bitstream is transmitted to the name ("BufferWithEP.m3d") of a compressed bitstream defined in a buffer field in the compression node, as indicated by ①.

As illustrated in FIG. 2, upon receiving the XMT file 200, the XMT parser 210 inserts the compressed bitstream together with scene data into a bitstream regarding a scene and transmits the inserting result, according to the XMT-A schema 230, using the XMT2BlFS style sheet 240 and the XMT2MUX style sheet 220. The XMT file 200 consists a header having an InitialObjectDescriptor; and a body having at least one compression node and a Depthlmage node including camera information required to reproduce data in the compression node. The InitialObjectDescriptor of the header includes a StreamSource indicating the name of a file output from the BlFS encoding unit 270, information used to decode a file encoded by the BlFS encoding unit 270, and synchronization information indicating a time sequence in which objects are displayed.

The compression node of the body includes a node field storing the name of a node to be compressed; DlBR object data, which is to be compressed, which is stored in a node field of the node; DlBR encoding parameter used to compressed the DlBR object data; and a buffer field storing the name of a bitstream file of the DlBR object data compressed using the DlBR encoding parameter.

The Depthlmage node of the body includes a camera orthographic field, a camera position field, a camera orientation field, a camera fieldOfView field, and a nearPlane field and a farPlane field regarding a near plane and a far plane of camera's view volume; and a USE field storing the name of a compression node linked to the camera information.

The scene file includes at least one compression node and a Depthlmage node that are the same as those of the body. The mux file includes an initialObjectDescriptor that is the same as the InitialObjectDescriptor of the header, and stream format information regarding a file output from the BlFS encoding unit 270, the stream format information being stored in the InitialObjectDescriptor. When the mux and scene files are input to the AFX encoding unit 260, object data in the scene file is compressed, and modified mux and scene files are obtained.

Compression of the DlBR object data will now described in greater detail. When it is determined that the DlBR object data is not compressed, the DlBR object data and the DlBR encoding parameter in the compression node of the scene file are stored. The stored DlBR object data and encoding parameter are transmitted to a predetermined encoding unit that matches DlBR object data in a node field of the compression node containing the stored object data. The DlBR object data is compressed into a bitstream using the DlBR encoding parameter.

The modified mux file includes a ".bifs/.od" file output from the BlFS encoding unit 270 which is an MPEG-4 encoding unit. When the modified mux file and the ".bifs/.od" file are input to the MP4 encoding unit 280, the ". mp4" file is generated, and visualized by an MPEG-4 player. The method illustrated in FIG. 8 will be described in greater detail with reference to Embodiment 3.

Embodiment 3 that is an example of an XMT file describing compression of the original DlBR data into a bitstream using the DlBR encoding parameter, and transmission of the bitstream using the "BitWrapper" node through a buffer, is as follows:

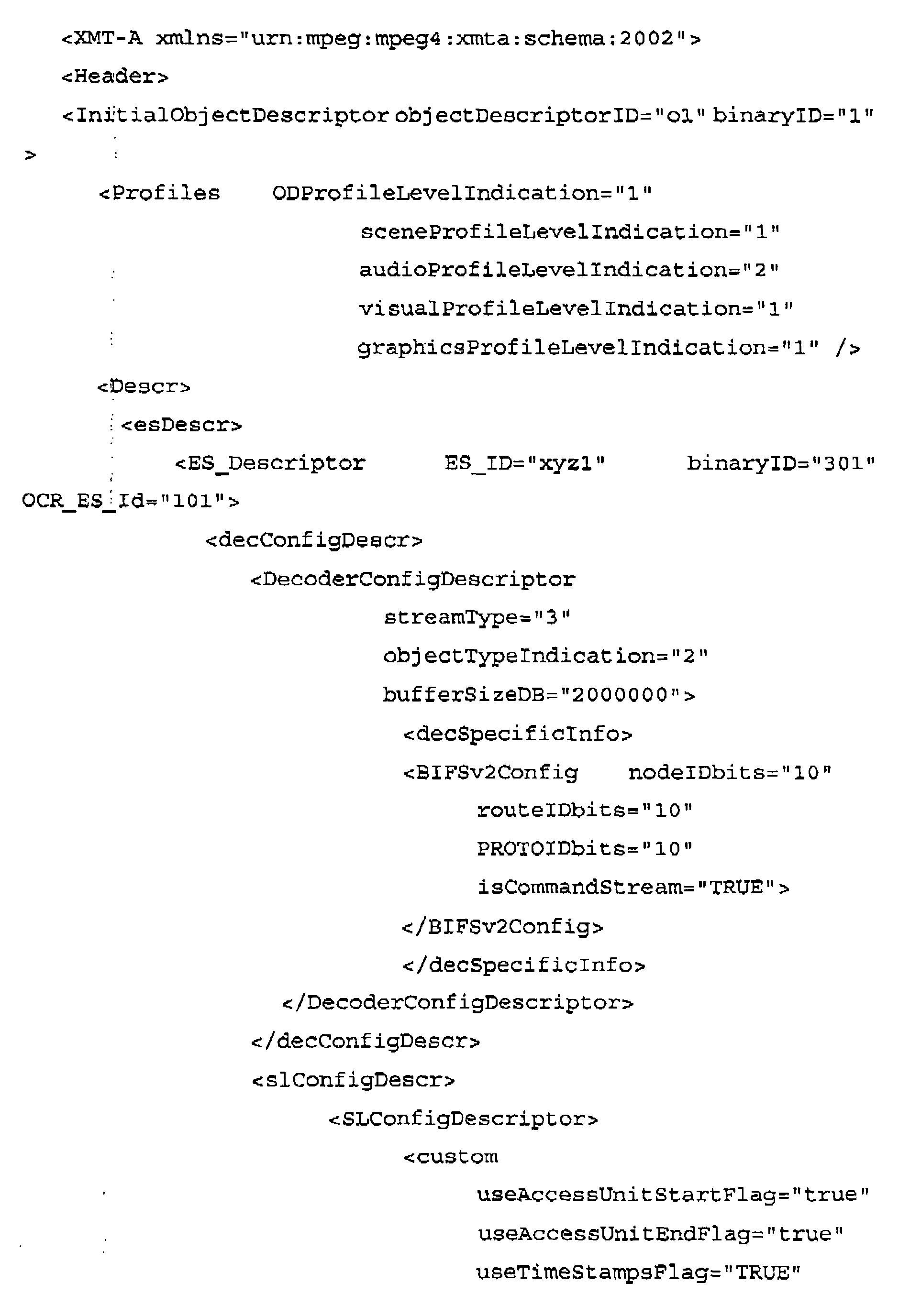

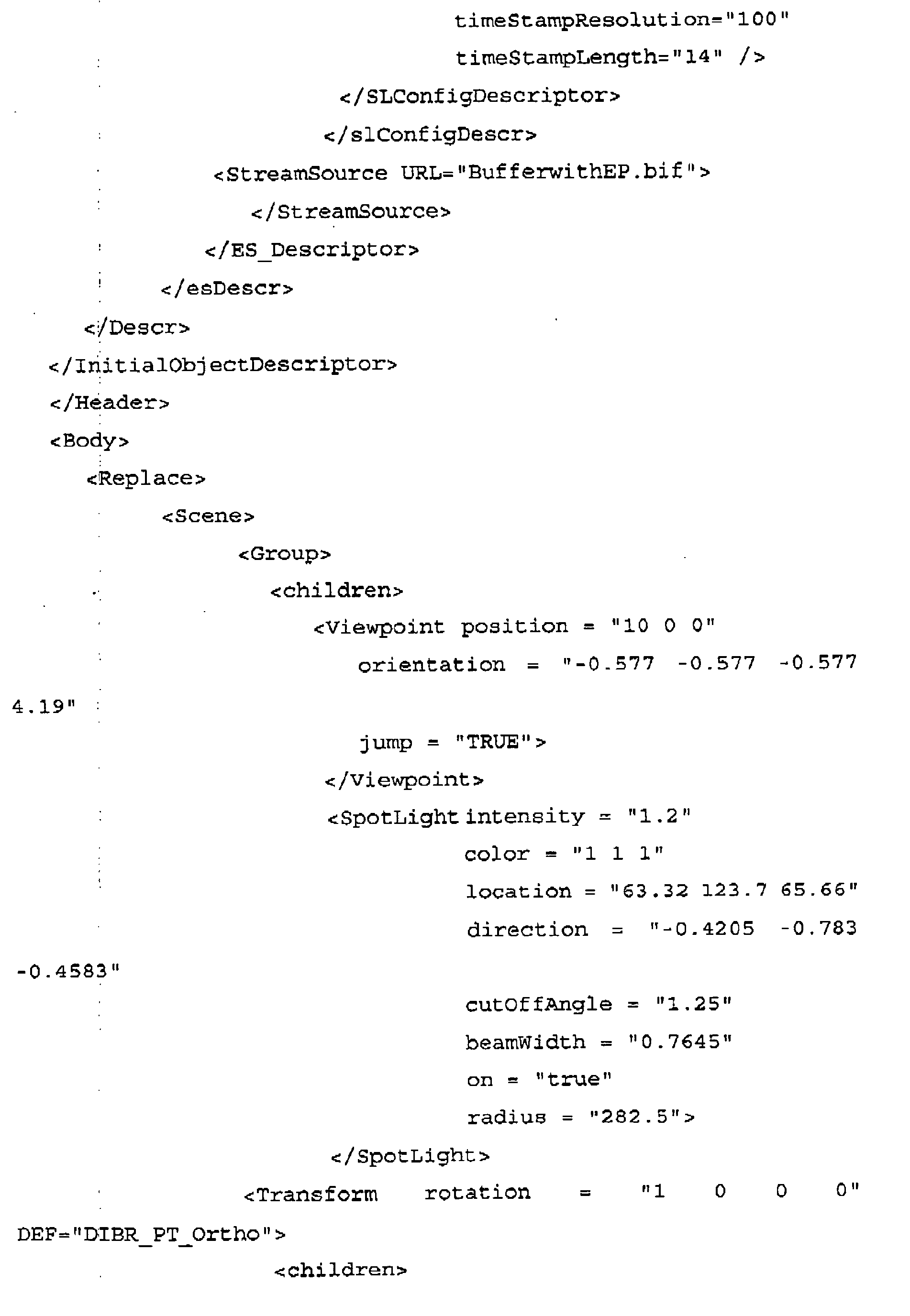

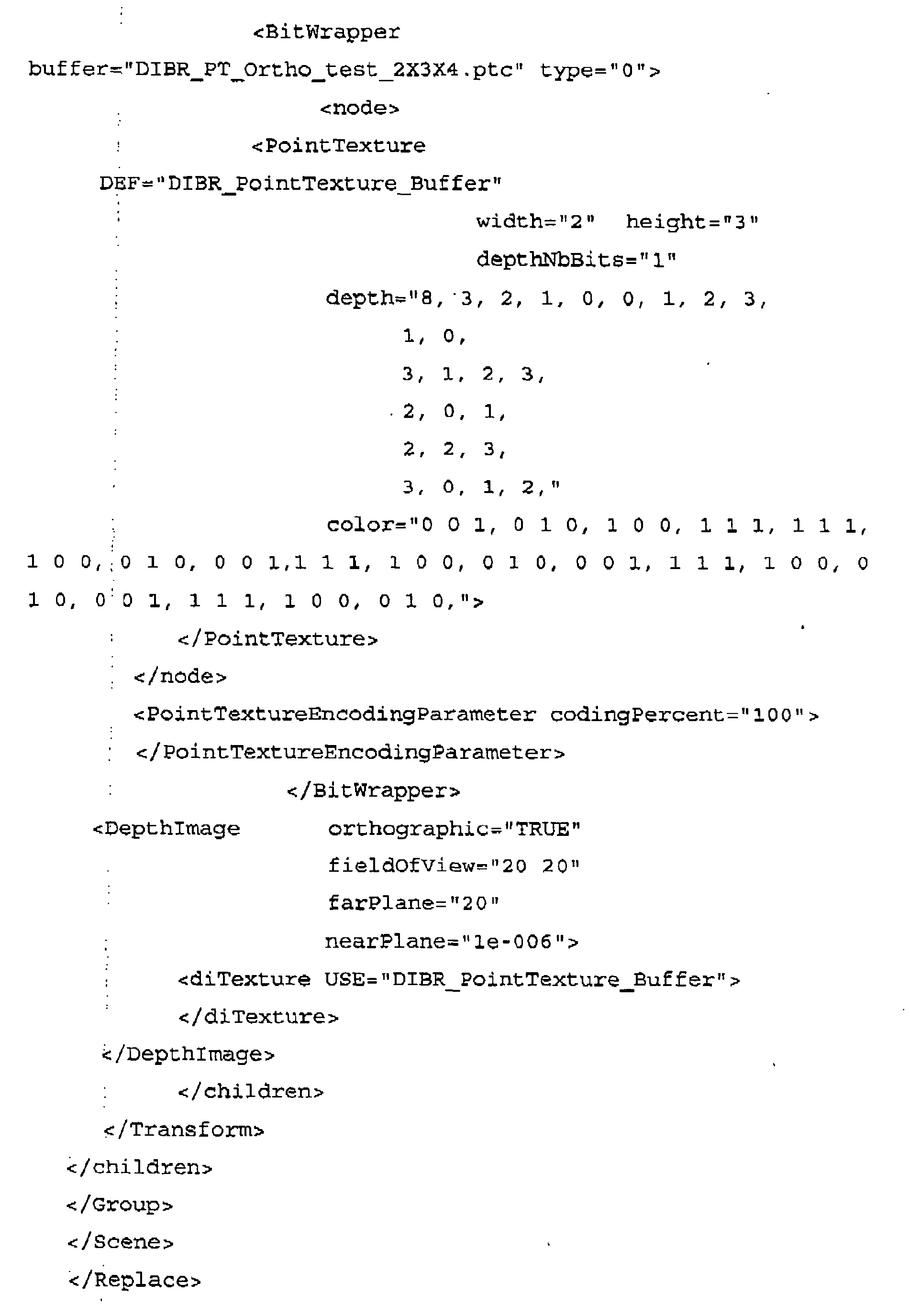

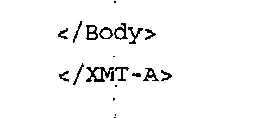

Upon receiving an XMT file that defines compression of DIBR data and a DIBR encoding parameter using the "BitWrapper" node, the XMT parser 210 outputs a scene file that contains the DIBR data and encoding parameter and scene information in the "BitWrapper" node, and a mux file that contains information regarding transmission of the DIBR object data or a method of synchronizing the DIBR object data with other data, based on the XMT-A schema 230 and the XMT2BIFS and XMT2MUX style sheets 240 and 220.

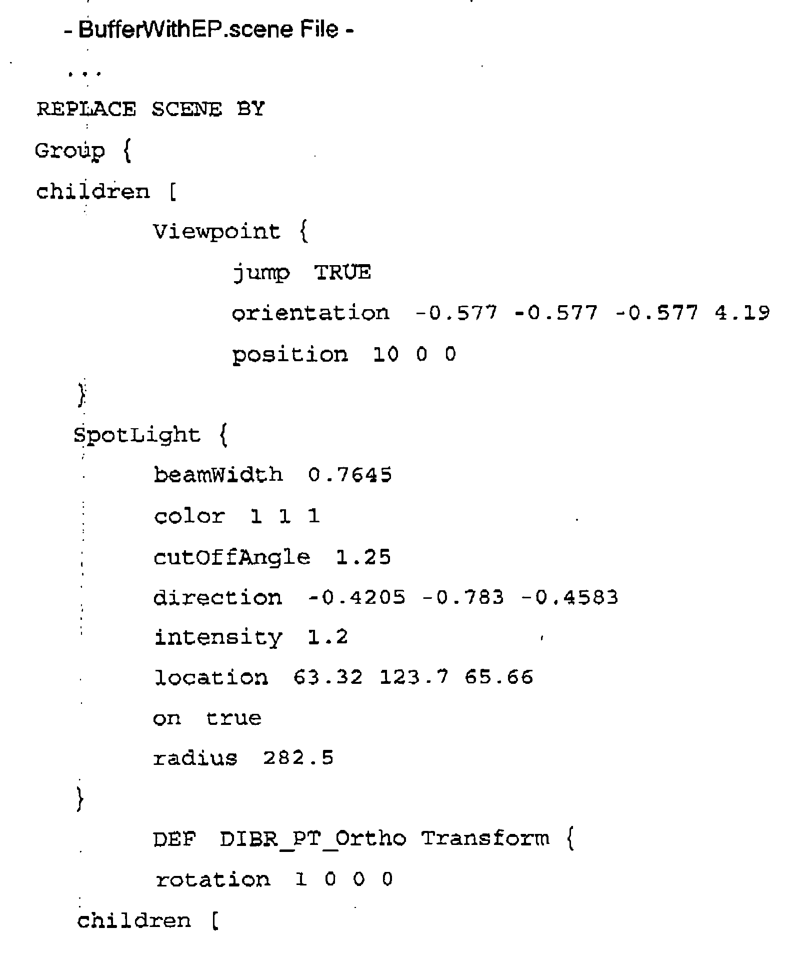

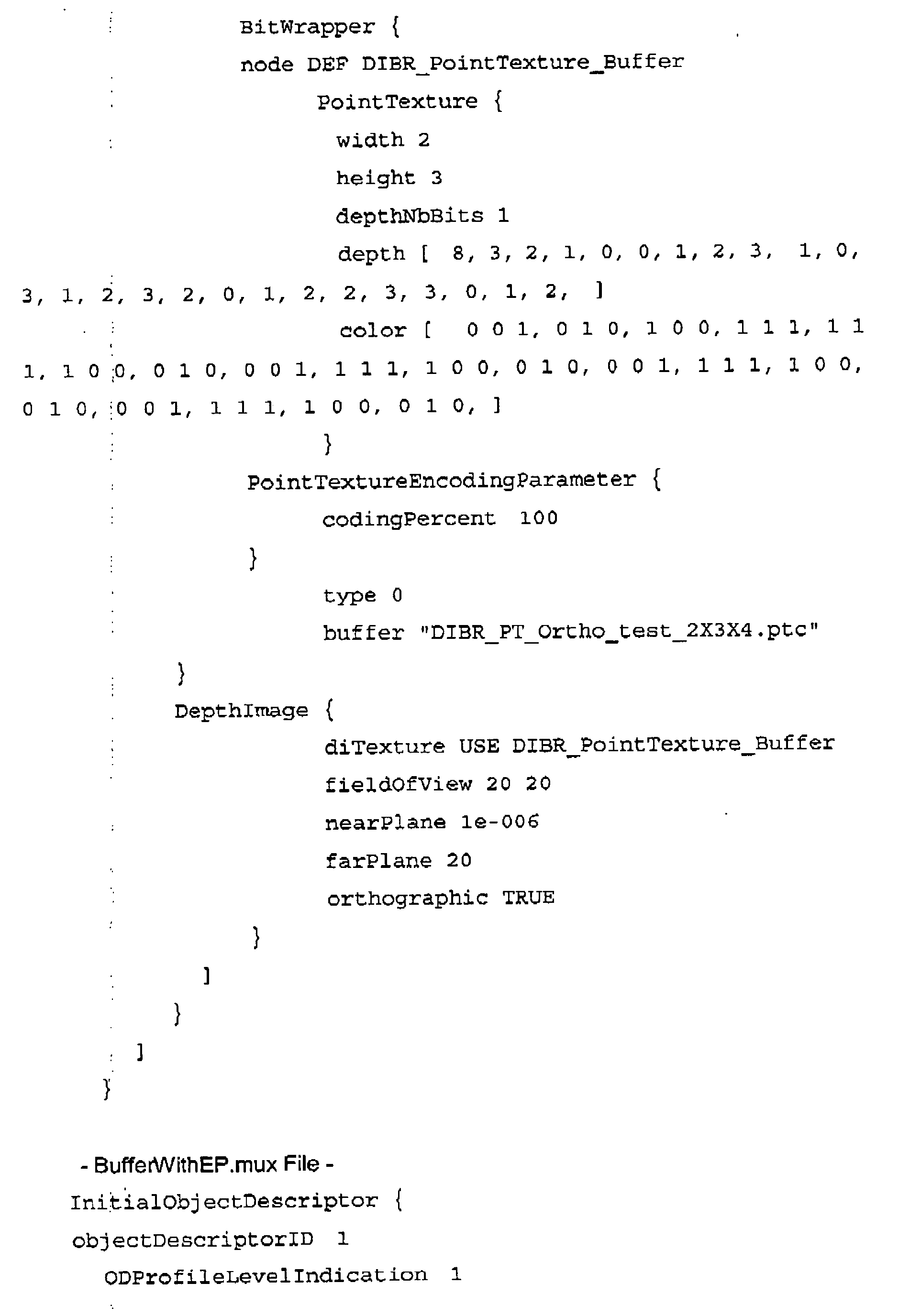

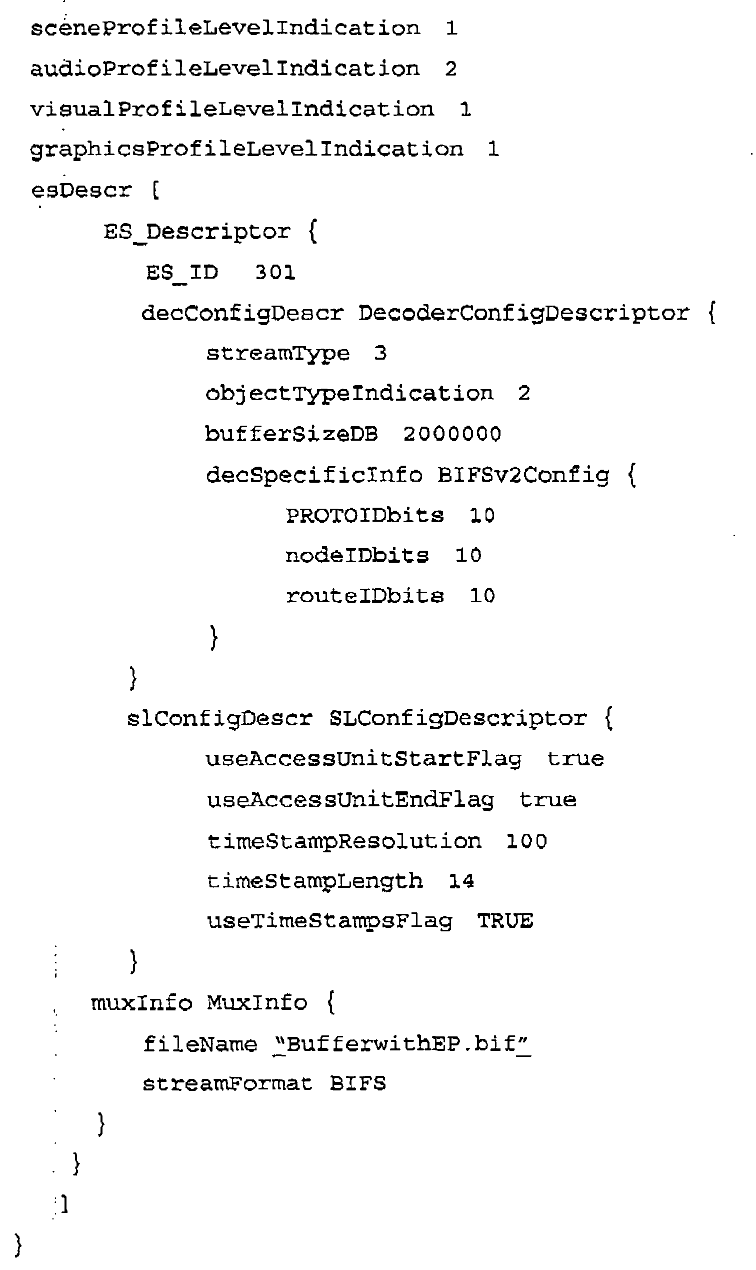

Since the scene and mux files cannot be input to an MPEG-4 encoding unit, the scene and mux files are input to the AFX encoding unit 260 so that they are respectively converted into _modified.scene and _modified.mux files to be input to the MPEG-4 encoding unit and the DlBR object data is compressed into a bitstream, as follows:

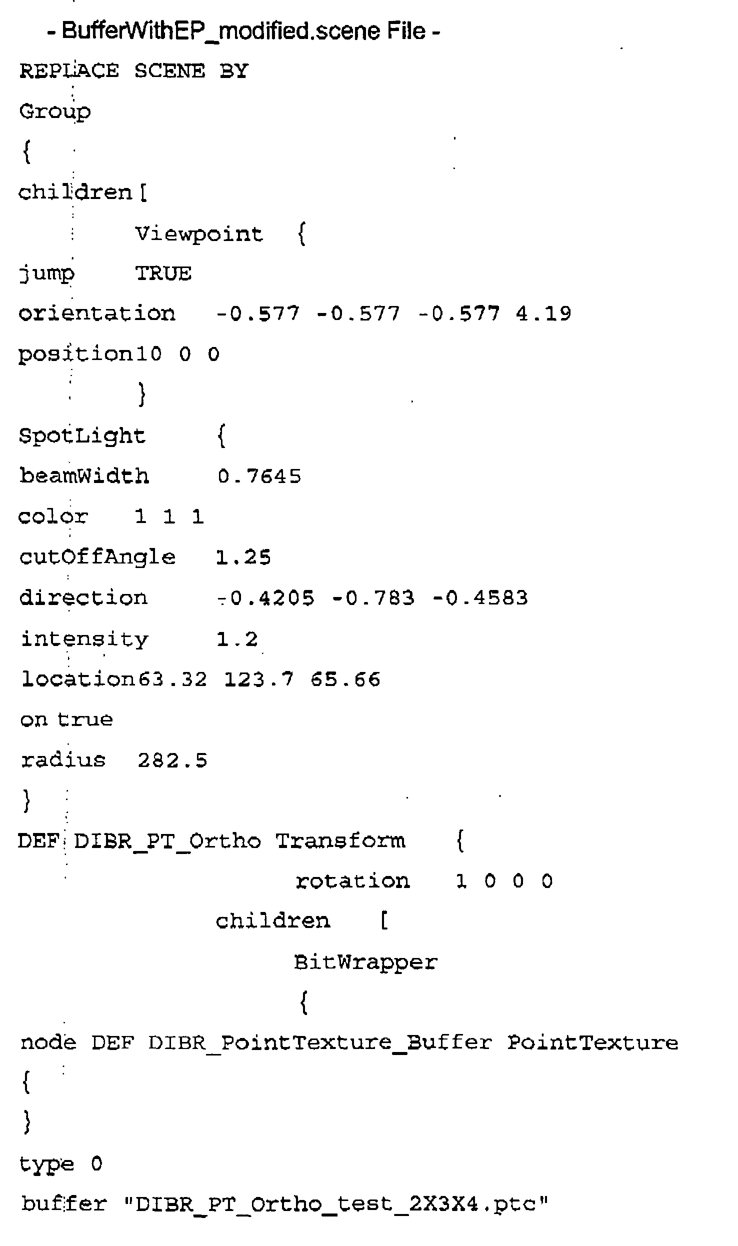

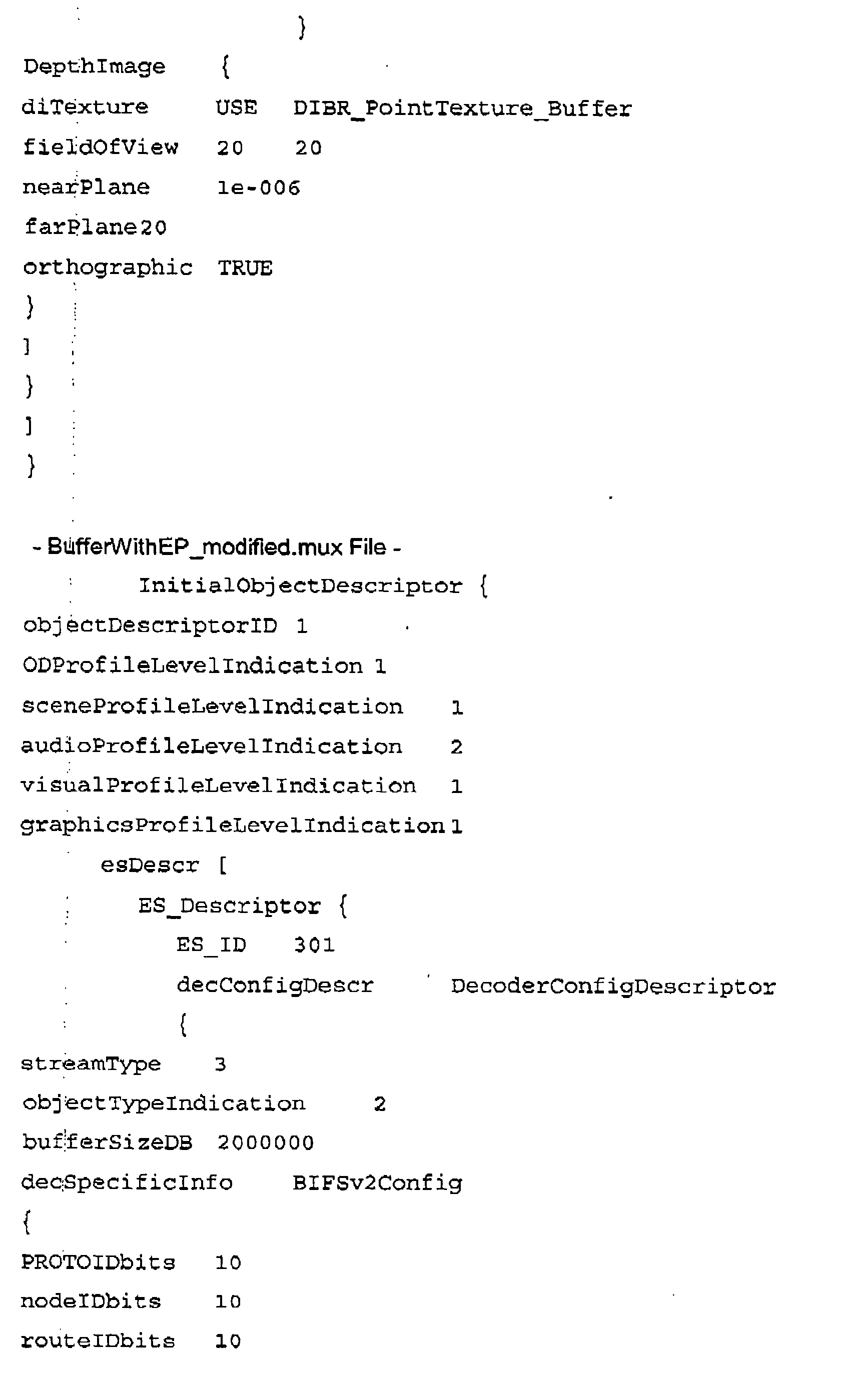

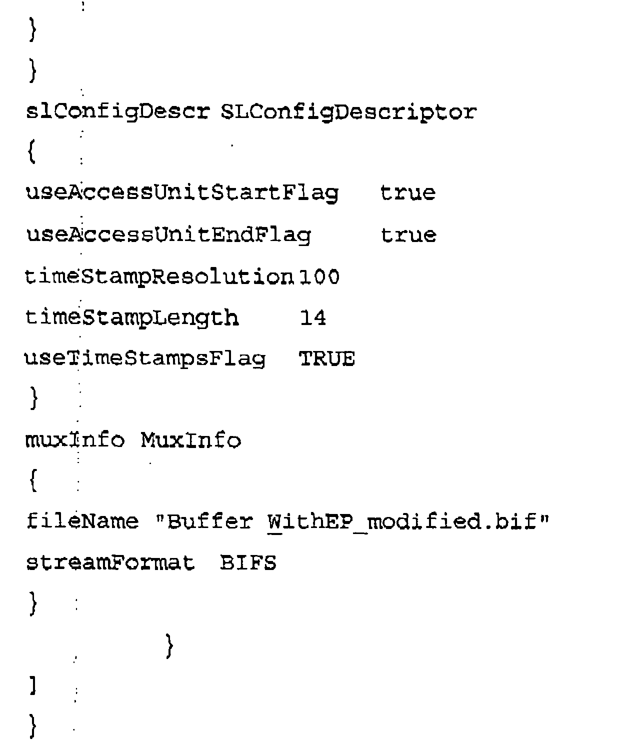

The _modified.scene and _modified.mux files outputted from the AFX encoding unit 260 using MPEG-4 player are input to the BlFS encoding unit 270 to obtain a ".bifs/.od" file, and the ".bifs/.od" file are input to the MP4 encoding unit 280 to obtain the ".mp4" bitstream file 290. Then, the ".mp4" bitstream file 290 is visualized by the MPEG-4 player.

### (4) When compressing the original DlBR data into a bitstream using a DlBR encoding parameter and transmitting the bitstream using a URL:

A method of compressing the original DlBR data into a bitstream using a DlBR encoding parameter and transmitting the bitstream using a URL, according to an embodiment of the present invention, will now be described with reference to FIGS. 2: and 9.

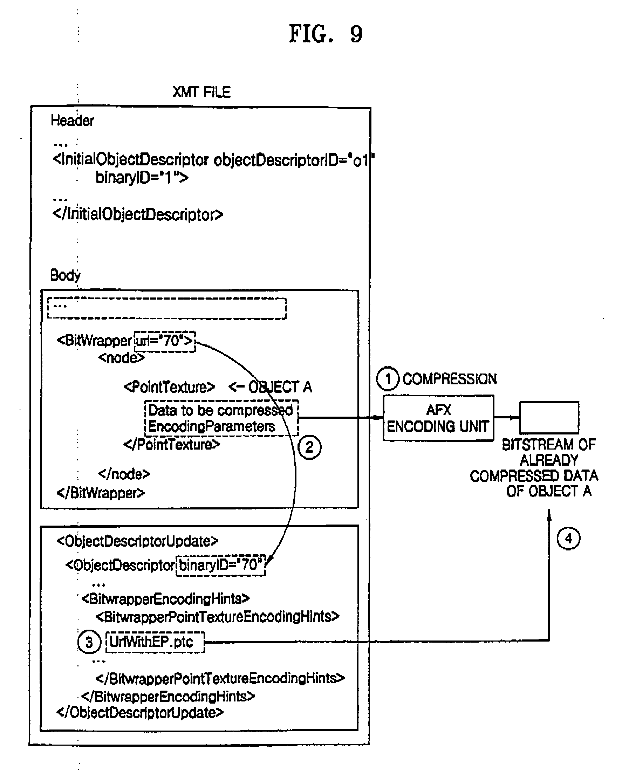

FIG. 9 illustrates a method of compressing DlBR object data (depth, color, etc.) regarding an object A in a "BitWrapper" node using an encoding parameter and the AFX encoding unit 260, and transmitting the bitstream using a URL, according to an embodiment of the present invention.

Referring to FIG. 9, DlBR object data in a node field in a compression node (BitWrapper node) is compressed into a bitstream by the AFX encoding unit 260, using an encoding parameter, as indicated by ①. Next, an object descriptor having a binary lD value that is equal to a value of 12, for example, of URL lD described in a URL field: in the compression node, is detected, as indicated by ②. Next, the name of a compressed bitstream induded in a BitWrapperEncodingHints in the object descriptor is detected, as indicated by ③. The bitstream compressed by the AFX encoding unit 260 is transmitted using the name of the compressed bitstream in the BitWrapperEncodingHints, as indicated by ④.

Upon receiving the XMT file 200 as illustrated in FIG. 2, the XMT parser 210 makes mux and scene files according to the XMT-A schema 230, using the XMT2BIFS and XMT2MUX style sheets 240 and 220. When it is determined that the object data in the node field in the compression node is not compressed by the AFX encoding unit 260, the object data is compressed into a bitstream using an encoding parameter that matches the object data, and the bitstream is transmitted to the MP4 encoding unit 280 using a URL. Also, the AFX encoding unit 260 makes input files (modified scene and mux files) to be input to the BlFS encoding unit 270 and the MP4 encoding unit 280, respectively. The BlFS encoding unit 270 receives scene information, and the modified scene file storing information linked to the modified mux file indicating the name of a file that stores a bitstream of the DIBR object data compressed by the AFX encoding unit 260, inserts them into a bitstream regarding a scene, i.e., a ".bifs/.od" bitstream, and transmits the inserting result to the MP4 encoding unit 280. The MP4 encoding unit 280 receives and multiplexes the modified mux file indicating the name of the file that stores the bitstream of the DlBR object data compressed by the AFX encoding unit 260, the compressed bitstream, and the ".bifs/.od" bitstream output from the BlFS encoding unit 270, and outputs the ".mp4" file 290.

The XMT file 200 consists of a header having an InitialObjectDescriptor, and a body having at least one compression node, a Depthlmage node that contains camera information used to reproduce data in the compression node, and an ObjectDescriptorUpdate including at least one objectDescriptor.

The InitialObjectDescriptor of the header includes a StreamSource indicating the name of a file output from the BlFS encoding unit 270, information used to decode a file compressed by the BlFS encoding unit 270, and synchronization information indicating a time sequence in which objects are displayed. The compression node of the body includes a node field storing the name of a node to be compressed; DlBR object data, which is to be compressed, which is stored in a node field of the node; DlBR encoding parameter used to compress the DlBR object data; and a field storing URL lD that is the same as the binary lD of an objectDescriptor in an ObjectDescriptorUpdate that has BitWrapperEncodingHints including the name of a file that stores a bitstream of the object data encoded using the DlBR encoding parameter.

The objectDescriptor in the ObjectDescriptorUpdate of the body includes the binary lD as a field, that is the same as the URL lD of the compression node of the body; AFXConfig that is information to be used to decode the compressed object data; and BitWrapperEncodingHints including the name of a file storing a bitstream of the compressed object data and a format in which the bitstream is compressed.

The Depthlmage node of the body includes a camera orthographic field, a camera position field, a camera orientation field, a camera fieldOfView field, and a nearPlane feld and a farPlane field regarding a near plane and a far plane of camera's view volume; and a USE field storing the name of a compression node linked to the camera information.

The mux file includes an InitialObjectDescriptor that is the same as the InitialObjectDescriptor of the header, and an objectDescriptor that is the same as the objectDescriptor in the ObjectDescriptorUpdate of the body. The scene file includes at least one compression node and a Depthlmage node that are the same as those of the body; an UPDATE OD(ObjectDescriptor) having objectDescriptor that has objectDescriptorlD which is the same as binary identification of an objectDescriptor in an ObjectDescriptorUpdate of the body, and has the name of the mux file, as the value of a muxScript.

The mux file contains a ".bifs/.od" bitstream output from the BlFS encoding unit 270 which is an MPEG-4 encoding unit, and the name of the compressed bitstream regarding the object A. When the mux and scene files are input to the AFX encoding unit 260, the object data in the scene file is compressed into modified mux and scene files.

Compression of the object data will now be described. When it is determined that the DlBR object data is not compressed, the object data and encoding parameter in the compression node of the scene file are stored. The object data and encoding parameter are transmitted to a predetermined encoding unit that matches DlBR object data in a node field of the compression node that stores the stored object data. The object data is compressed into a bitstream using the encoding parameter.

The modified mux file contains the ".bifs/.od" bitstream output from the BlFS encoding unit 270 which is an MPEG-4 encoding unit. When the modified mux file and the "bifs/od" bitstream are input to the MP4 encoding unit 280, the ".mp4" bitstream file is generated, and visualized by an MPEG-4 player. The method of FIG. 9 will now be described in greater detail with reference to Embodiment 4.

Embodiment 4 that is an example of an XMT file defining compression of the original DlBR object data into a bitstream using a DlBR encoding parameter and a "BitWrapper" node, and transmission of the bitstream using a URL, is as follows:

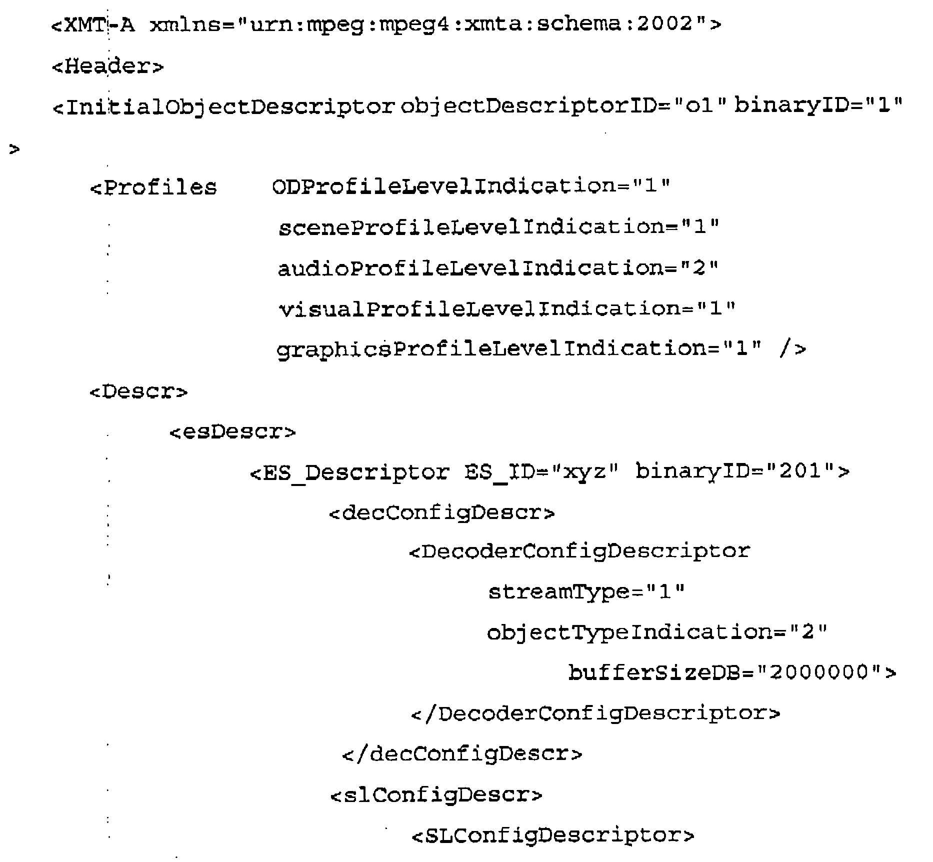

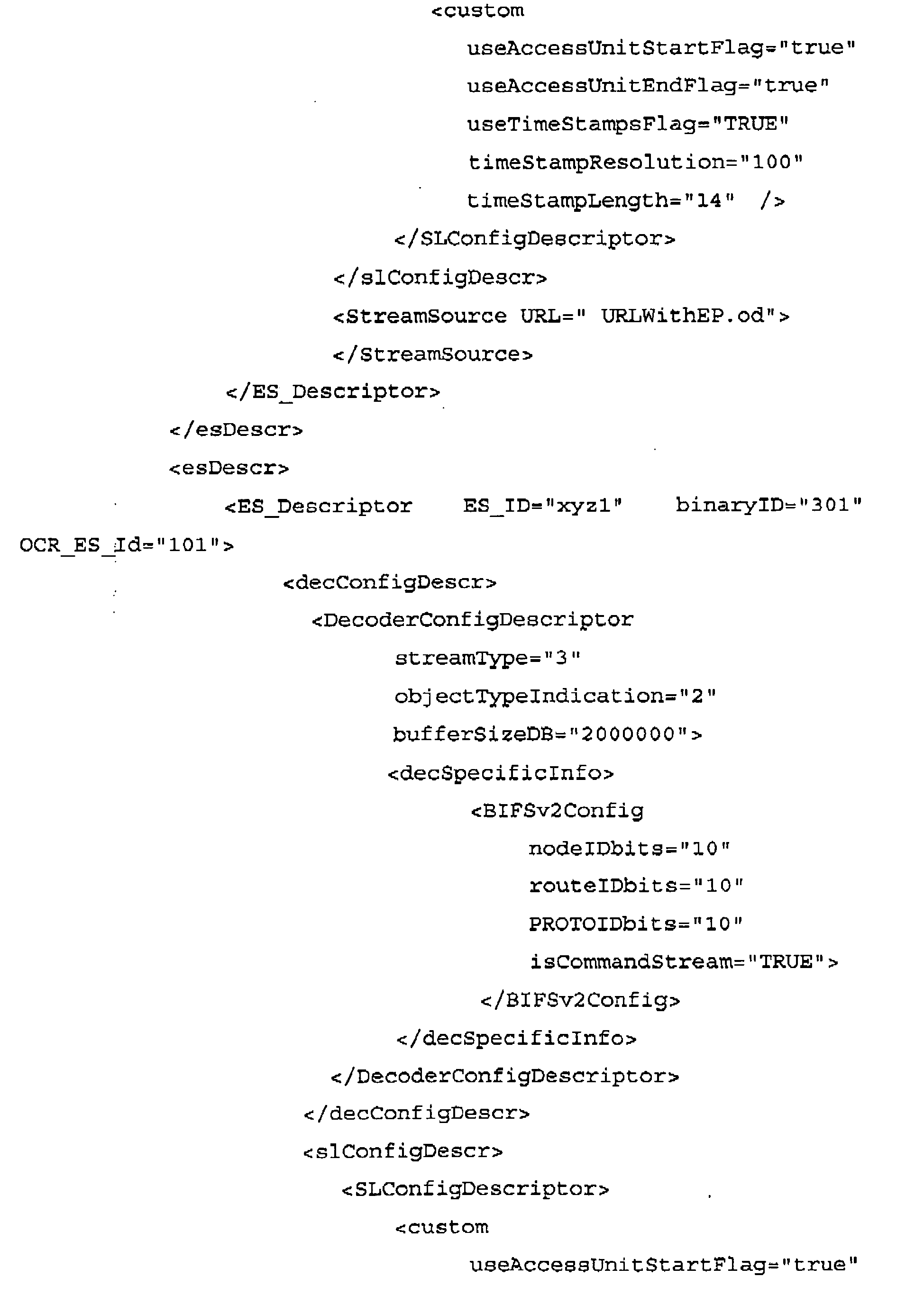

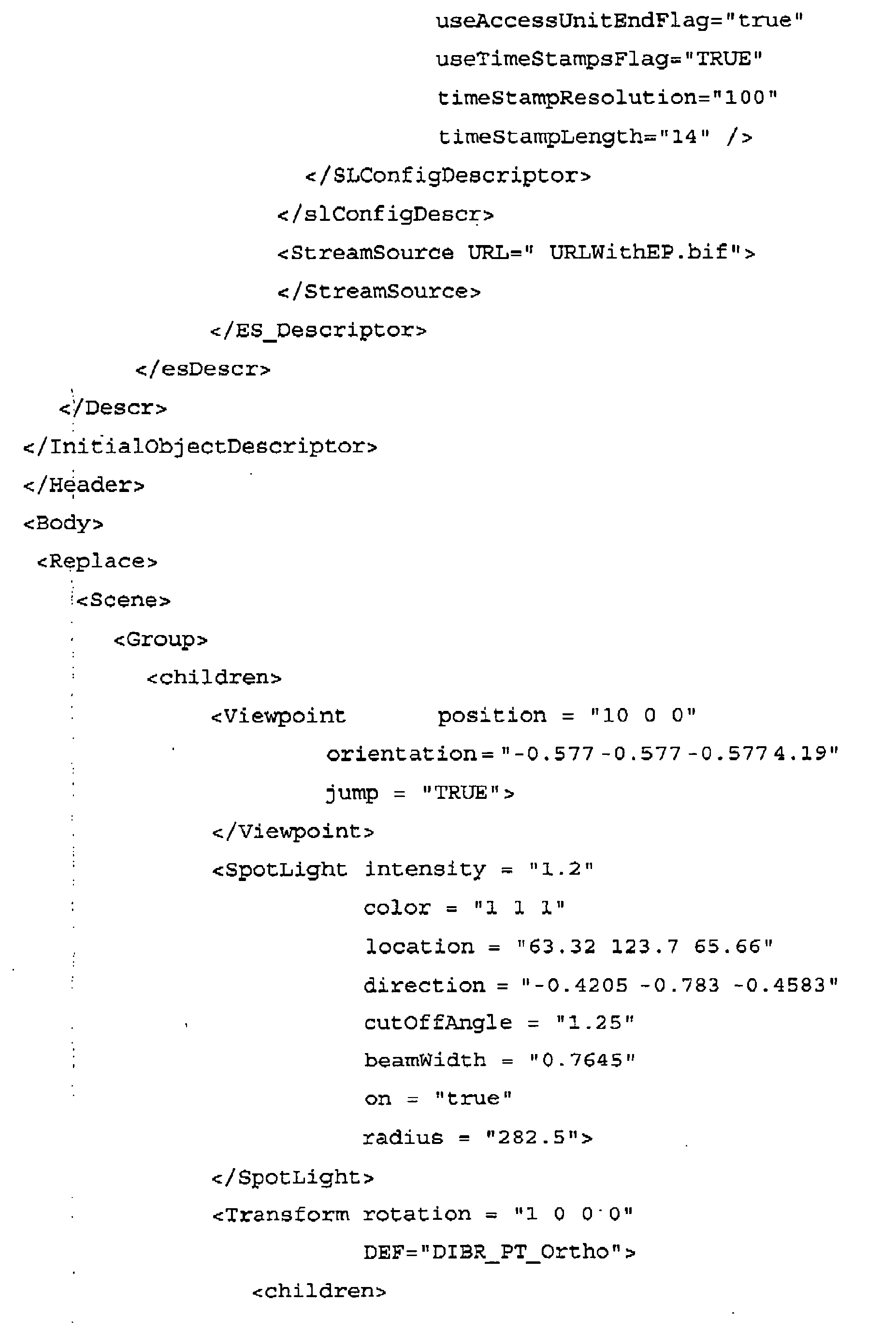

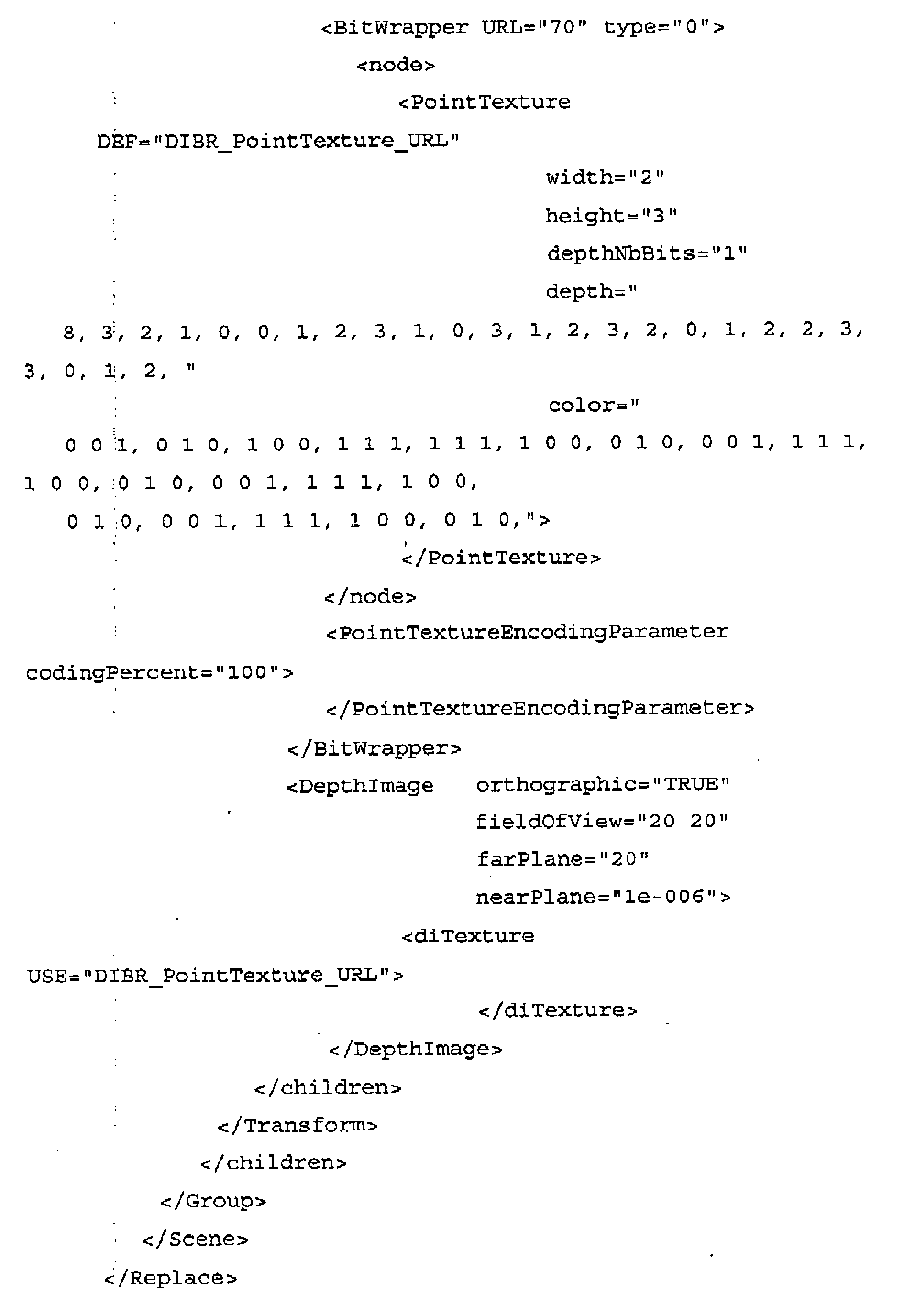

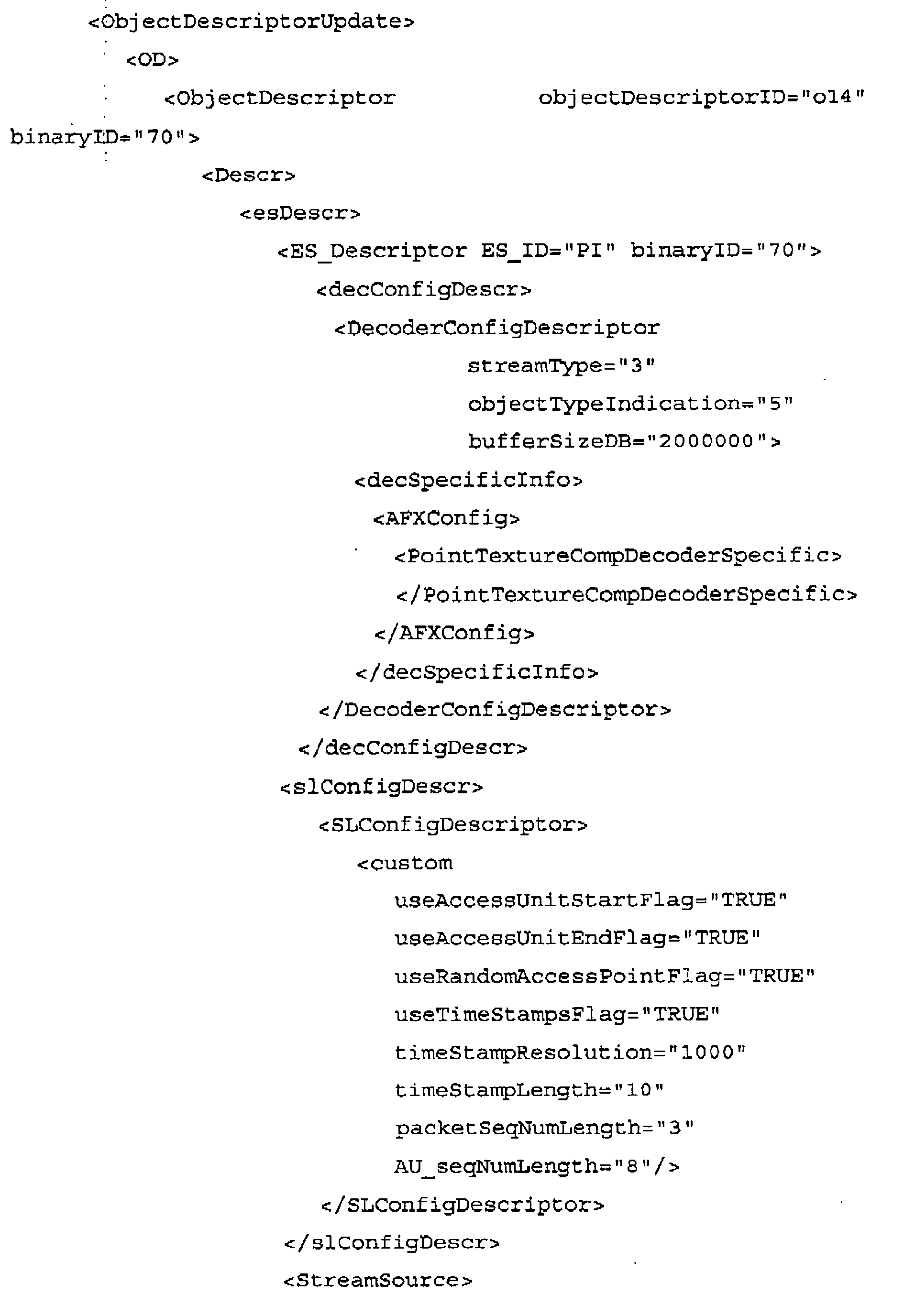

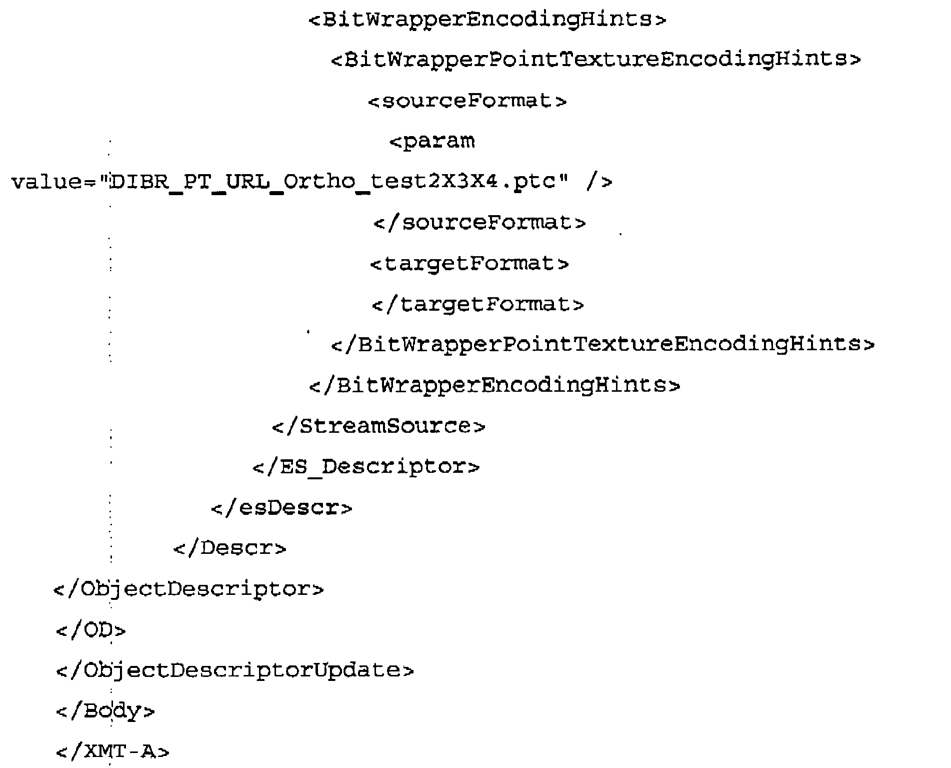

Upon receiving the XMT file that defines compression of DlBR data and an encoding! parameter using the "BitWrapper" node, the XMT parser 210 outputs a scene file that contains the DlBR object data, the DlBR encoding parameter, and scene information in the "BitWrapper" node; and a mux file that contains information regarding transmission of the DlBR object data and a method of synchronizing the DlBR object data with other data, based on the XMT-A schema 230 and the XMT2BlFS and XMT2MUX style sheets 240 and 220.

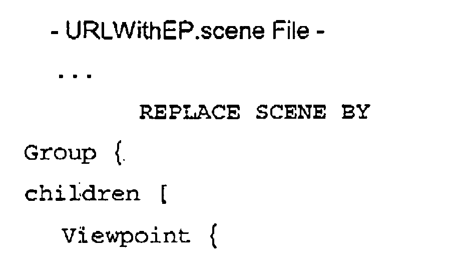

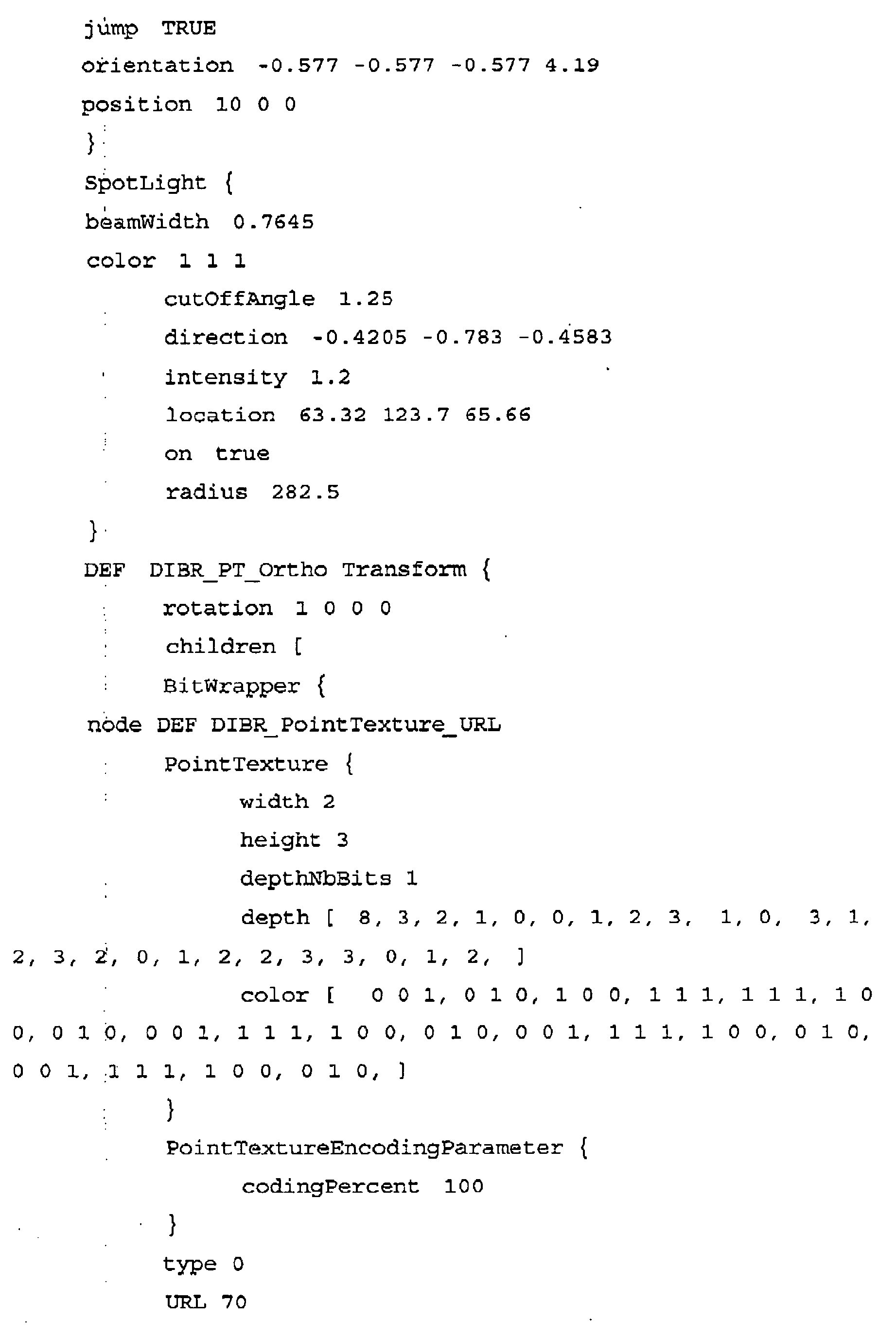

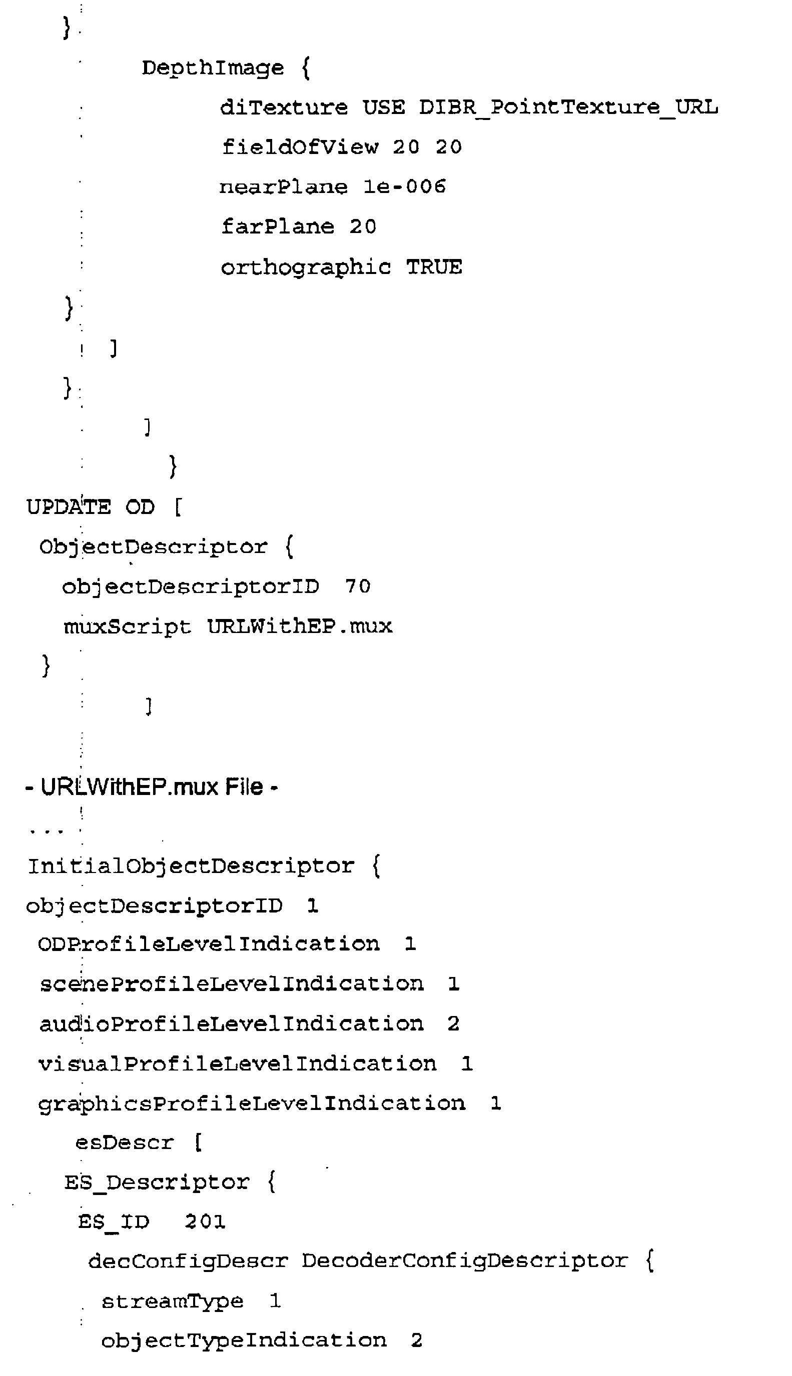

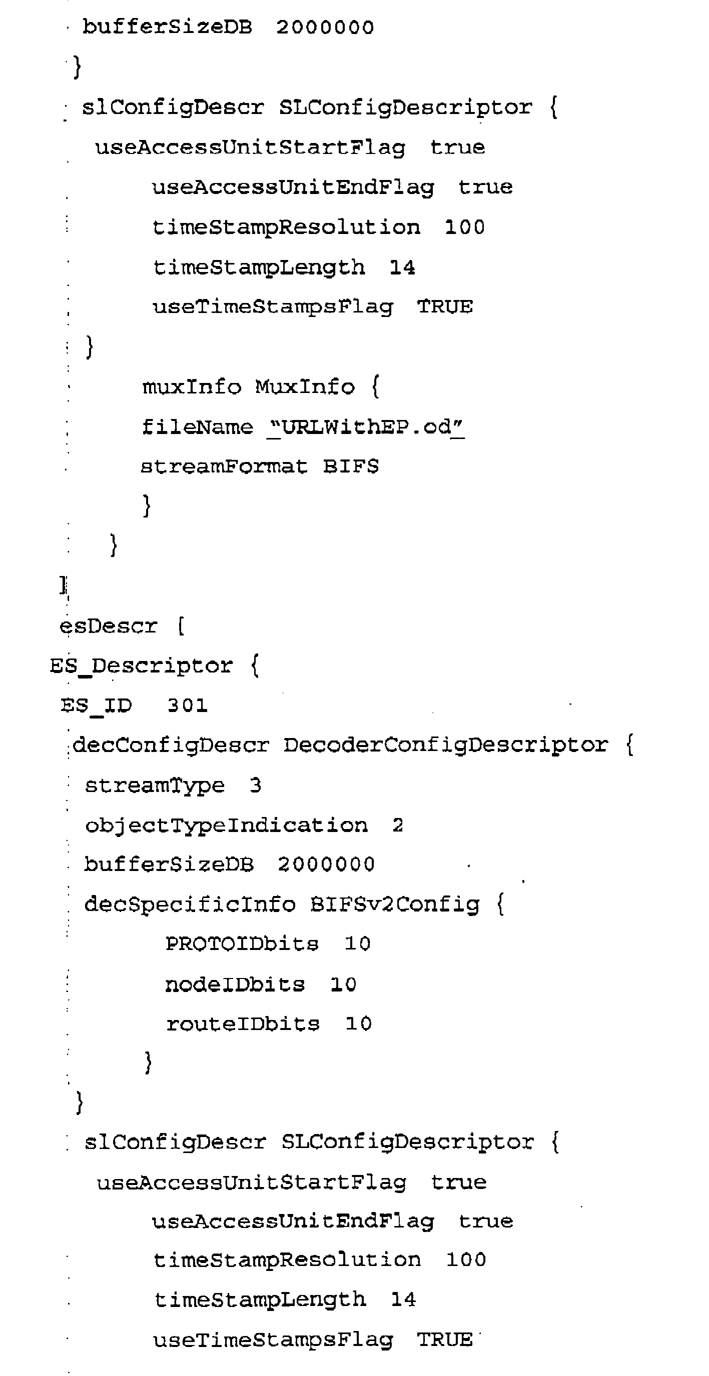

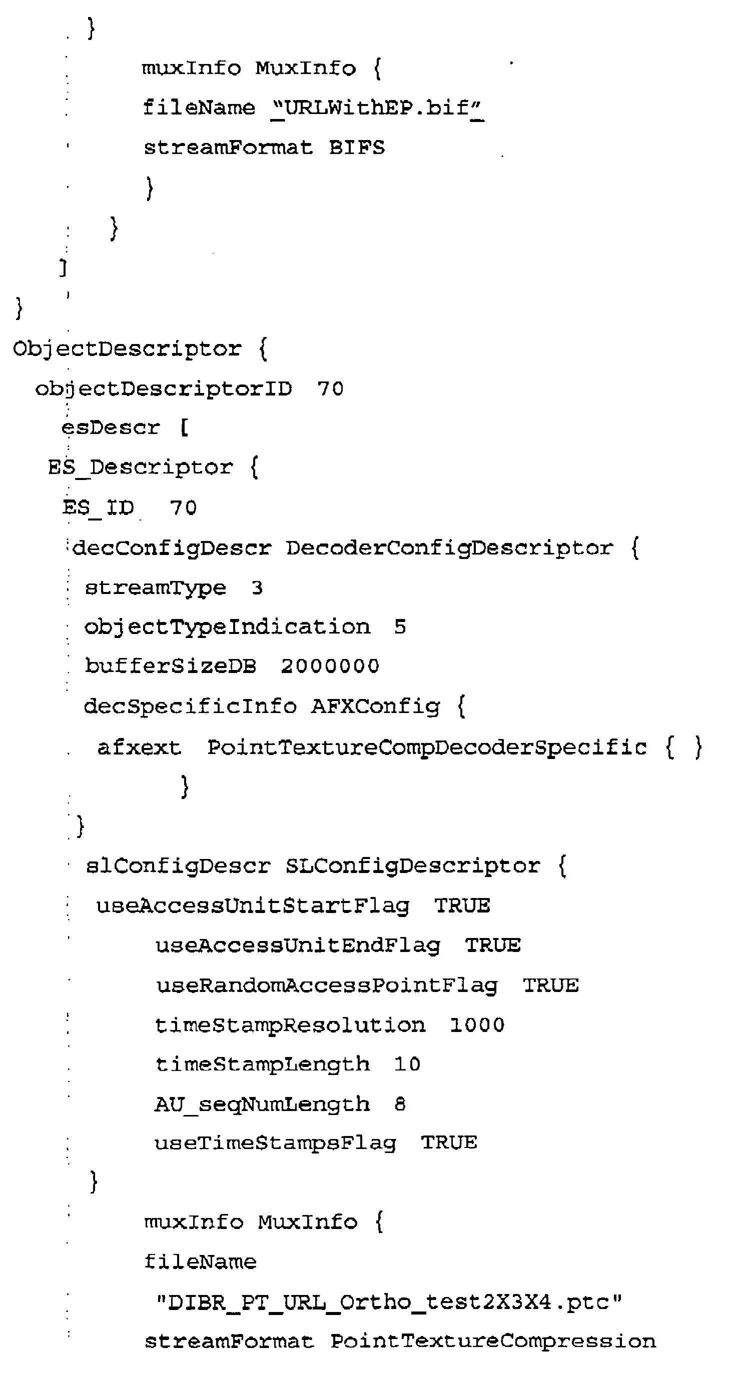

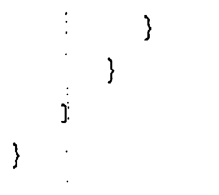

Since the scene and mux files cannot be input to an MPEG-4 encoding unit, the scene and mux files are input to the AFX encoding unit 260 so that they are converted into files to be input to the MPEG-4 encoding unit and the DlBR object data is compressed into a bitstream, as follows:

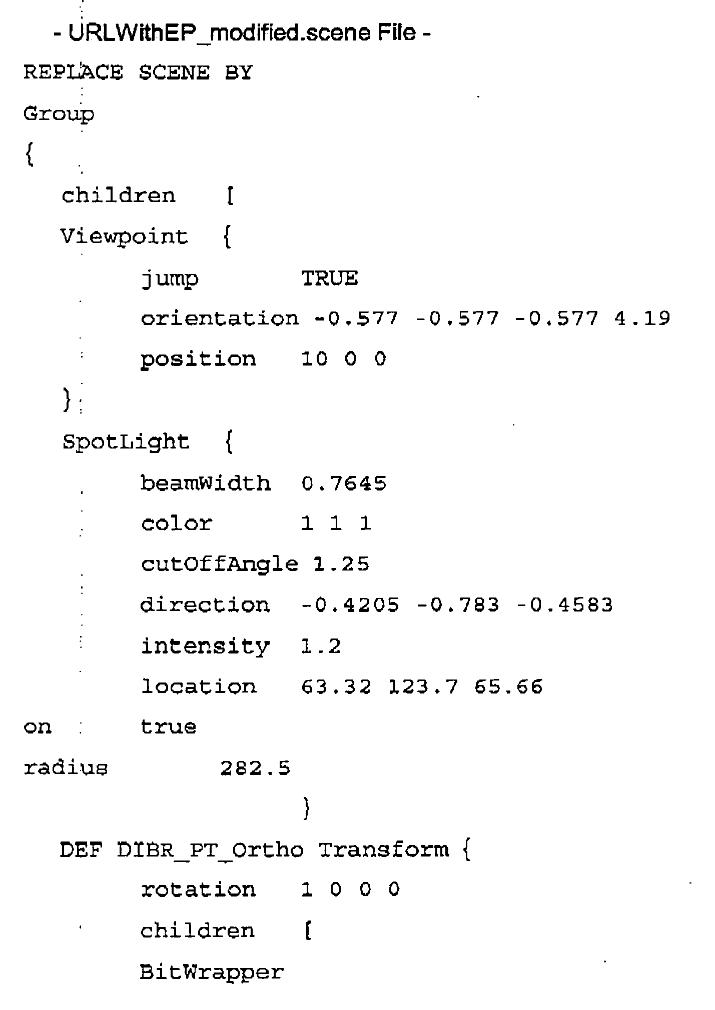

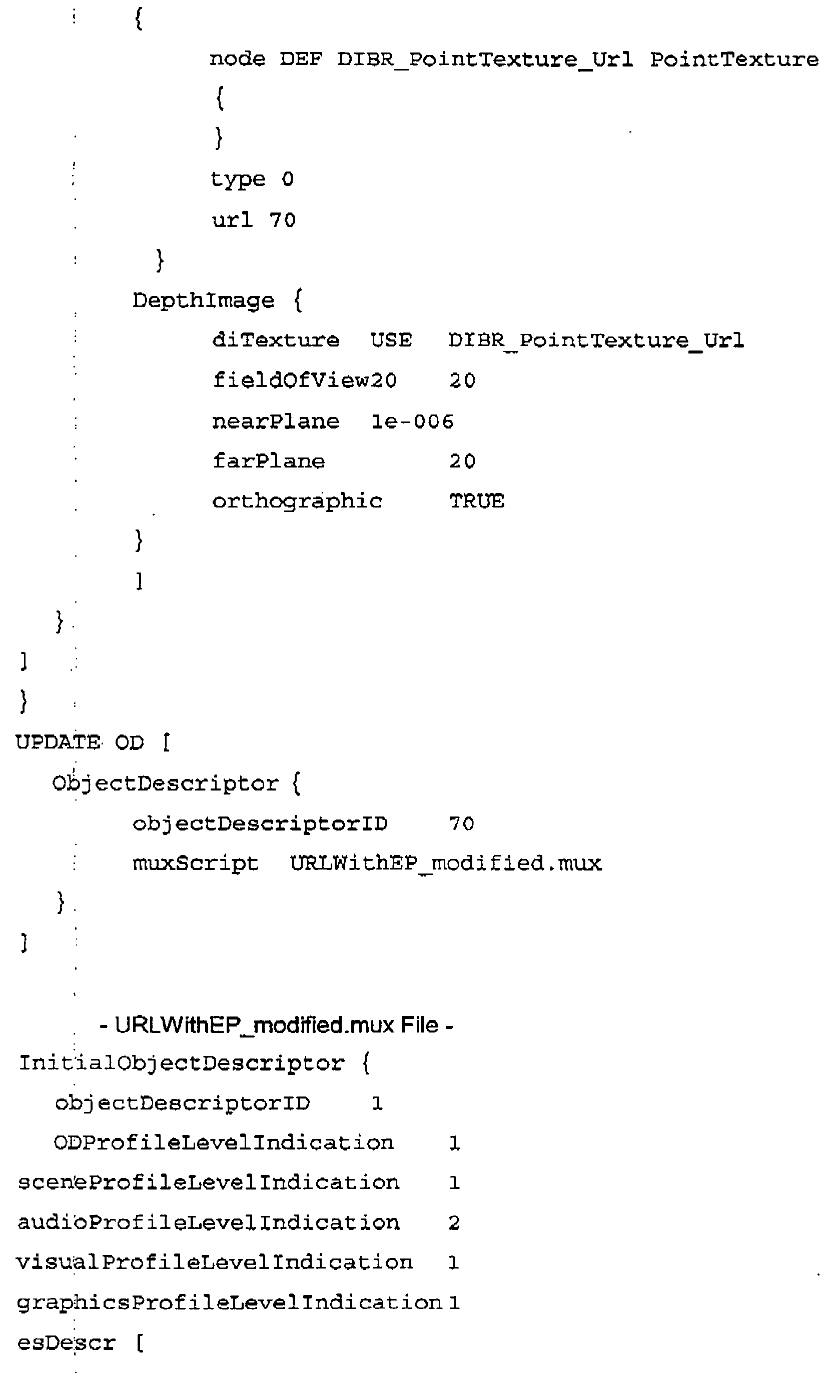

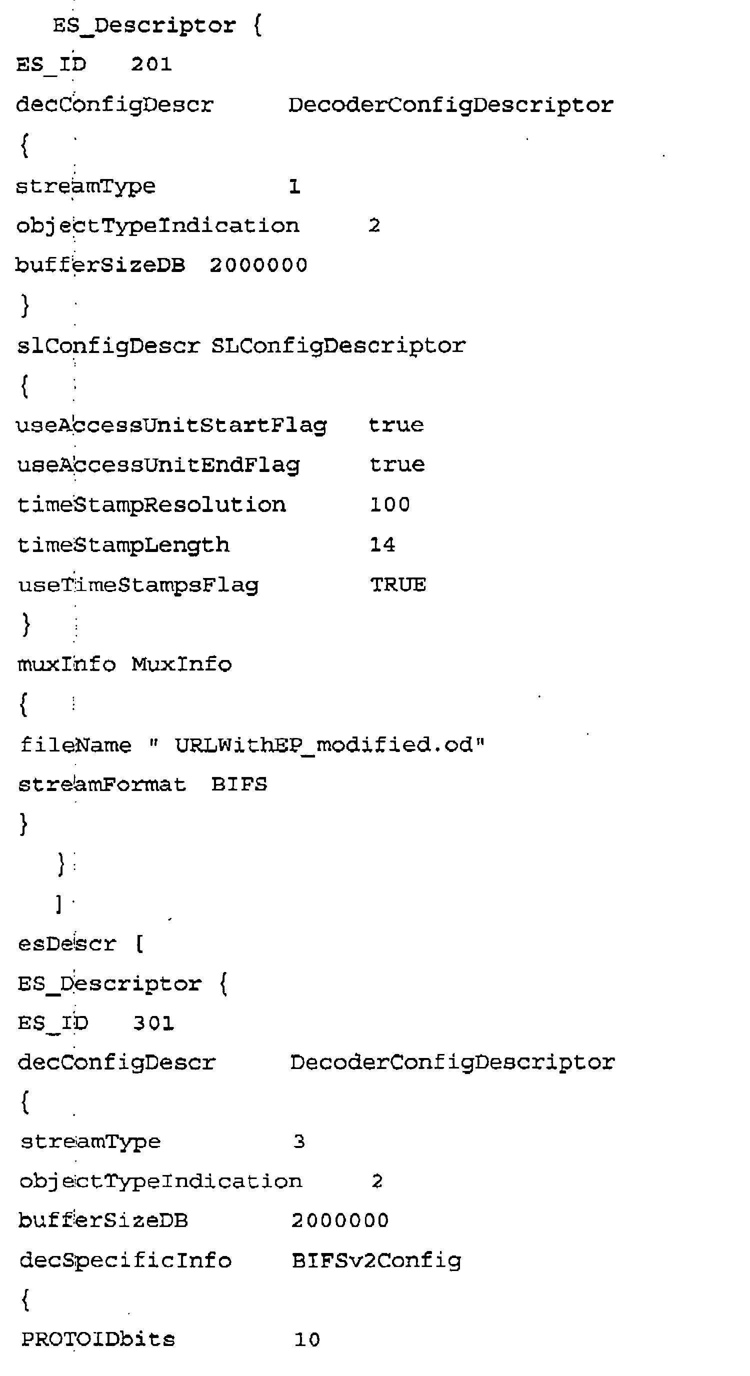

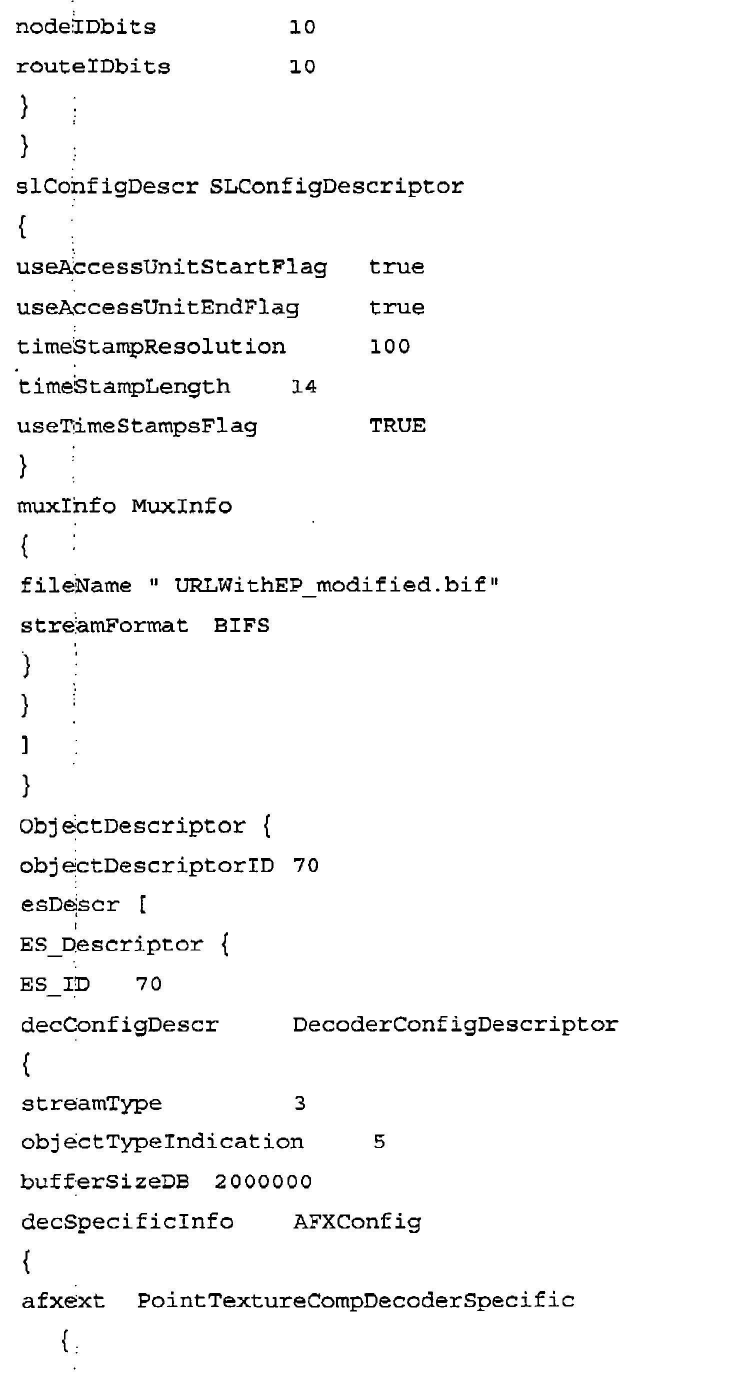

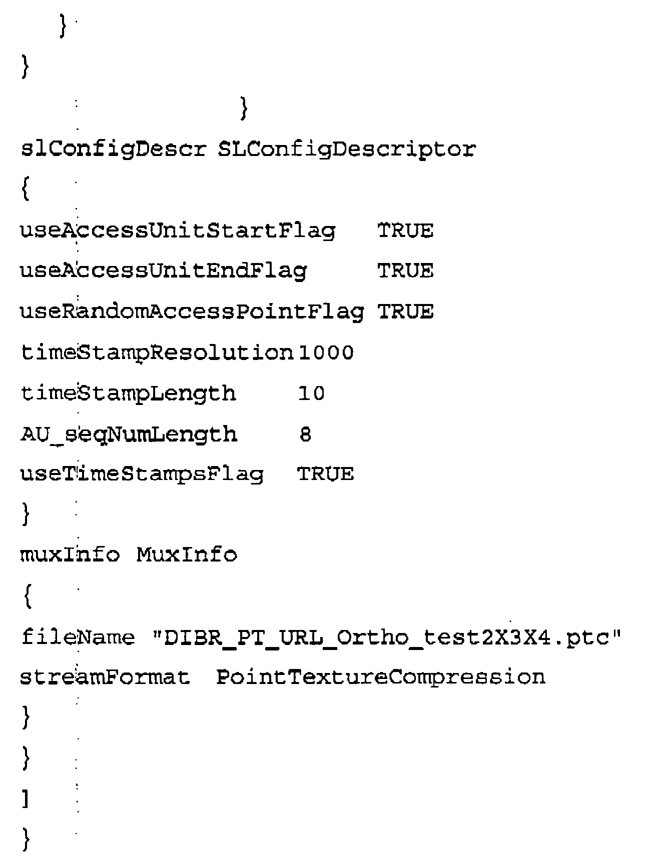

When the modified scene and mux files are input to the BlFS encoding unit 270 which is an MPEG-4 encoding unit, a ".bifs/.od" bitstream is generated. The ".bifs/.od" bitstream and the modified mux file are input to the MP4 encoding unit 280 to generate the ".mp4" bitstream file 290. The ".mp4" bitstream file 290 is visualized by an MFEG-4 player.

### (5) When compressing object data into a bitstream using an encoding parameter and transmitting the bitstream using a buffer or a URL:

As illustrated in FIG. 2, when the XMT file 200 is input to the XMT parser 210, the XMT parser 210 generates a mux file and a scene file based on the XMT-A schema 230, using the XMT2MUX and XMT2BlFS style sheets 220 and 240. When it is determined that the object data in node fields of compression nodes of the mux and scene files are not compressed by the AFX encoding unit 260, the object data is compressed into a bitstream using an encoding parameter that matches the object data and the bitstream is transmitted to the MP4 encoding unit 280 using a buffer or a URL. Also, the AFX encoding unit 260 makes input files, i.e., modified scene and mux files, to be input to the BlFS encoding unit 270 and the MP4 encoding unit 280. The BlFS encoding unit 270 receives scene information and the modified scene file that includes the name of a file storing a bitstream of the object data compressed by the AFX encoding unit 260 (when the bitstream is transmitted using a buffer) and information to be linked to the modified mux file storing the name of the file that contains the bitstream of the object data compressed by the AFX encoding unit 260 (when the bitstream is transmitted using a URL) inserts the scene information and the modified scene file into a ".bifs/.od" bitstream regarding a scene; and transmits the ".bifs/.od" bitstream to the MP4 encoding unit 280. The MP4 encoding unit 280 receives and multiplexes the modified mux file that includes the name of the file storing the bitstream of the object data compressed by the AFX encoding unit 260, the compressed bitstream, and the ".bifs/.od" bitstream file output from the BlFS encoding unit 270; and outputs the ".mp4" bitstream file 290.

The XMT file 200 largely consists of a header and a body. The header includes an InitialObjectDescriptor. The body includes at least one compression node with a buffer field, at least one compression node with a URL field, a Depthlmage node with camera information required to reproduce data in the compression nodes, and an ObjectDescriptorUpdate having objectDescriptors corresponding to the at least one compression node with the URL field.

The Initia[ObjectDescritor of the header includes a StreamSource indicating the name of a file output from the BlFS encoding unit 270, information used to decode a file compressed by the BlFS encoding unit 270, and synchronization information indicating a time sequence in which objects are displayed. The compression node of the body, which has the buffer field, includes a node field storing the name of a node to be compressed; object data, which is stored in the node field of the node, which is to be compressed; an encoding parameter used to compress the object data; and a buffer field indicating the name of a bitstream file of the object data compressed using the encoding parameter. The compression node of the body, which has the URL field, which includes a node field storing the name of a node to be compressed; object data, which is stored in the node field of the node, which is to be compressed; an encoding parameter used to compress the object data; and a field storing URL lD that is the same as the binary lD of an objectDescriptor in an ObjectDescriptorUpdate having a BitWrapperEncodingHints that indicates the name of a file storing the bitstream of the object data compressed by the encoding parameter. The objectDescriptor in the ObjectDescriptorUpdate of the body: includes the binary lD, as a field, that is the same as the URL lD of the compression node of the body; AFXConfig that is information to be used to decode the compressed object data; and BitWrapperEncodingHints indicating the name of the file storing the bitstream of the compressed object data and a format in which the bitstream is compressed.

The Depthlmage node of the body includes a camera orthographic field, a camera position field, a camera orientation field, a camera fieldOfview field, and a nearPlane field and a farPlane field regarding a near plane and a far plane of camera's view volume; and a USE field storing the name of a compression node linked to the camera information.

The mux file includes an InitialObjectDescriptor that is the same as the header, and an objectDescriptor that is the same as the objectDescriptor in the ObjectDescriptorUpdate of the body. The scene file has a compression node that is the same as the compression node of the body, an UPDATE OD(ObjectDescriptor) having objectDescriptor that has objectDescriptor lD which is the same as the binary identification of the objectDescriptor in the ObjectDescriptorUpdate of the body, and has the name of the mux file, as the value of a muxScript.

It is determined whether the scene file contains uncompressed DlBR object data. When it is determined that the DlBR object data is compressed, the mux file includes the ".bifs/.od" bitstream output from the BlFS encoding unit 270 which is an MPEG-4 encoding unit. When the mux file and the ".bifs/.od" bitstream are input to the MP4 encoding unit 280, the ". mp4" bitstream file 290 is generated, and visualized by an MPEG-4 player.

If it is determined that the DlBR object data is uncompressed, the mux and scene files are input to the AFX encoding unit 260 so as to compress the DlBR object data in the scene file into a bitstream and obtain modified mux and scene files.

Compression of the DlBR object data will now be described in greater detail. When it is determined that the DlBR object data is not compressed, the DlBR object data and the DlBR encoding parameter in the compression node of the scene file are stored. The DlBR object data and the DlBR encoding parameter are transmitted to a predetermined encoding unit that matches the type of the DlBR object data in the node field of the compression node having the stored DlBR object data. Next, the DIBR object data is compressed into a bitstream using the DlBR encoding parameter.

The modified mux file contains the "bifs/.od" bitstream generated by the BlFS encoding unit 270 which is an MPEG-4 encoding unit. When the modified mux file and the ".bifs/.od" bitstream are input to the MP4 encoding unit 280, the ".mp4" bitstream file is generated, and visualized by an MPEG-4 player.

Embodiment 5 shows an example of DlBR object data including PointTexture data and Octree data. The PointTexture data and the Octree data are respectively included in compression nodes (BitWrapper nodes). Thus, the original data are respectively compressed into bitstreams using the compression nodes (BitWrapper), and transmitted using a buffer or a URL.

When an XMT file that defines compression of the PointTexture data and the Octree data using the compression nodes (BitWrapper nodes) is input to the XMT parser 210, the XMT parser 210 outputs the scene file that contains scene information and the name of a bitstream obtained by compressing the original data and a DlBR encoding parameter in the compression node (BitWrapper node) (when transmitting the bitstream using a buffer), and information regarding an ObjectDescriptorUpdate (when transmitting the bitstream using a URL); and the mux file that contains information regarding data transmission or synchronization of the original data with the other, the name of a file output from the BlFS encoding unit 270, and the name of a compressed bitstream when transmitting the bitstream to the URL, based on the XMT-A schema 230 and the XMT2MUX and XMT2BlFS style sheets 220 and 240.

However, the above scene and mux files cannot be input to an MPEG-4 encoding unit. Thus, the scene and mux files are input to the AFX encoding unit 260 so that they can be converted into a "_modified.scene" file and a "_modified.mux" file to be input to the MPEG-4 encoding unit, and a compressed bitstream is obtained using an encoding unit related to the DlBR object data.

The "_modified.scene" and "_modified.mux" files are input to the BlFS encoding unit 270 which is the MPEG-4 encoding unit to obtain a ".bifs/.od" bitstream. When the ".bifs/.od" bitstream and the mux file are input to the MP4 encoding unit 280, the ".mp4" bitstream file 290 is obtained, and visualized by an MPEG-4 player.

In this disclosure, the present invention has been described with respect to 3D graphics data, but it is also applicable to 2D graphics data.

As described above, an input file generating method and system using meta representation of DlBR data compression, according to the present invention, allows an author to easily write and compress DlBR data and make an input file to be input to an MPEG-4 encoding unit using the meta representation during authoring of 3D content, regardless of whether the input file contains an already compressed bitstream, or an uncompressed bitstream and an encoding parameter.

Since the author can compress 3D graphics data during authoring of 3D content, it is possible to visualize or animate DlBR object data in real time even at a low network bandwidth.

The present invention can be embodied as code in a computer readable medium, the code that can be read by a computer system (including various types of information processing apparatuses). The computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on.

Although a few embodiments of the present invention have been shown and described, it would be appreciated by those skilled in the art that changes may be made in these exemplary embodiments without departing from the principles and spirit of the invention, the scope of which is defined in the claims and their equivalents.

## Claims

**1.** A method of generating an input file using meta representation of graphics data compression, the method comprising:
(a) preparing an extensible MPEG-4 textual format (XMT) schema,
wherein the XMT schema defines a compression node including graphics data including at least depth image based representation (DlBR) data to be compressed and having a encoding parameter required to compress the graphics data including at least DlBR data;
BitWrapperEncodingllints including a graphics compression bitstream format; and
AFXConfig specifying a type of a decoder for decoding a transmitted bitstream:
(b) preparing an XMT2BlFS style sheet supporting conversion of an input XMT file containing the graphics data into a scene file according to the XMT schema, and an XMT2MUX style sheet supporting conversion of the input XMT file into a mux file according to the XMT schema;
(c) generating the scene and mux files by parsing the input XMT file according to the XMT schema using the XMT2BlFS and XMT2MUX style sheets;
(d) determining whether the scene file obtained as the parsing result includes uncompressed graphics object data; and
(e) when it is determined that the uncompressed graphics object data is included, compressing the graphics object data into a bitstream and generating a modified scene file and a modified mux file, using the encoding parameter included in the scene file.

**2.** The method of claim 1, wherein the compression node comprises:
a node field including graphics object data to be compressed;
a buffer field which is not compatible with an URL field and transmit a compressed bitstream in the compression node as in-band data;
the URL field which is not compatible with the buffer field and transmits the compressed bitstream in the compression node as out-band data;
a type field indicating a manner in which the graphics object data in the node field is compressed; and

**3.** The method of claim 2, wherein during the transmission of the compressed bitstream as the in-band data, the input XMT file containing the compression node is converted into the scene file, the scene file is input to a binary format of scene (BlFS) encoding unit and converted into a bifs file, the compressed bitstream in the node field of the compression node is included in the bifs file, and the bifs file is transmitted, and
during the transmission of the compressed bitstream as the out-band data, the input XMT file containing the compression node is converted into the scene file, the scene file is input to the BlFS encoding unit and converted into the bifs file, and the compressed bitstream in the node field of the compression node is transmitted separately from the bifs file.

**4.** The method of claim 2 or 3, wherein the encoding parameter comprises a parameter regarding PointTexture data to be compressed.

**5.** The method of any preceding claim, wherein the BitWrapperEncodingHints is included in an objectDescriptor with binary identification that is the same as URL identification defined in the URL field in the compression node, and further specifies a name of a file storing the compressed bitstream and a type information of a compression format of bitstream.

**6.** The method of any preceding claim, wherein the AFXConfig further comprises information regarding a kind of a decoder for decoding the compressed bitstream of the graphics object data in the node field of the compression node, the compressed bitstream being compressed by an AFX encoding unit and transmitted using a URL.

**7.** The method of any preceding claim, wherein (c) comprises:
receiving the input XMT file containing a header having an InitialObjectDescriptor, and a body having at least one compression node and a DepthImage node which includes camera information required to reproduce data in the compression node; and
making the scene and mux files by parsing the input XMT file according to the XMT schema using the XMT2BIFS and XMT2MUX style sheets,
the InitialObjectDescriptor of the header comprises:
a StreamSource indicating a name of a file output from the BlFS encoding unit;
information used to decode a file compressed by the BlFS encoding unit; and
synchronization information indicating a time sequence in which objects are displayed,
the compression node of the body comprises:
a node field indicating a name of a node which stores the graphics object data; and
a buffer field indicating a name of a file which stores already compressed graphics object data,
the Depthlmage node of the body comprises:
a camera orthographic field;
a camera position field;
a camera orientation field;
a camera fieldOfView field;
a nearPlane field and a farPlane field regarding a near plane and a far plane of camera's view volume; and
a USE field storing a name of a compression node linked to the camera information,
the scene file comprises at least one compression node which is the same as the compression node of the body, and
the mux file comprises an InitialObjectDescriptor being the same as the InitialObjectDescriptor of the header and having the file output from the BlFS encoding unit and stream format information of the output file.

**8.** The method of any one of claims 1 to 6, wherein (c) comprises:
receiving the input XMT file which includes a header having an InitialObjectDescriptor, and a body having at least one compression node, a Depthlmage with camera information required to reproduce data in the compression node, and an ObjectDescriptorUpdate with at least one objectDescriptor; and
making the scene and mux files by parsing the input XMT file according to the XMT schema using the XMT2BIFS and XMT2MUX style sheets,
the InitialObjectDescriptor of the header comprises:
a StreamSource indicating a name of a file output from the BlFS encoding unit; and
synchronization information indicating a time sequence in which objects are displayed,
the compression node of the body comprises URL identification that is the same as binary identification of an objectDescriptor in an ObjectDescriptorUpdate having BitWrapperEncodingHints which includes a name of a file storing a bitstream of already compressed graphics object data,
the Depthlmage node of the body comprises:
a camera orthographic field;
a camera position field;
a camera orientation field;
a camera fieldOfView field;
a nearPlane field and a farPlane field regarding a near plane and a far plane of camera's view volume; and
a USE field storing a name of a compression node linked to the camera information,
the objectDescriptor in the ObjectDescriptorUpdate of the body comprises:
binary identification, as a field, which is the same as the URL identification in the compression node of the body;
AFXConfig which is decoder information used to decode the compressed graphics object data; and
BitWrapperEncodingHints indicating a name of a file storing the bitstream of the compressed graphics object data and a format of the compressed bitstream,
the mux file comprises:
an InitialObjectDescriptor which is the same as the InitialObjectDescriptor of the header; and
an objectDescriptor which is the same as the objectDescriptor of in the ObjectDescriptorUpdate of the body of the input XMT file, and
the scene file comprises at least one compression node and a Depthlmage node which are the same as those of the body; and
an UPDATE OD(ObjectDescriptor) having an objectDescriptor that has objectDescriptorlD that is the same as the binary identification of the objectDescriptor in the ObjectDescriptorUpdate of the body of the input XMT file, and has the name of the mux file, as the value of a muxScript.

**9.** The method of any one of claims 1 to 6, wherein (c) comprises:
receiving the input XMT file including a header having an InitialObjectDescriptor, and a body having at least one compression node and a Depthlmage node which stores camera information required to reproduce data in the compression node; and .
making the scene and mux files by parsing the input XMT file according to the XMT schema using the XMT2BITS and XMT2MUX style sheets,
the InitialObjectDescriptor of the header comprises:
a StreamSource indicating a name of a file output from the BlFS encoding unit; and
synchronization information indicating a time sequence in which objects are displayed,
the compression node of the body comprises:
a !node field storing a name of a node to be compressed, and graphics object data to be compressed;
encoding parameter used to compress the graphics object data; and
a buffer field indicating a name of a bitstream file which stores a bitstream of the graphics object data compressed using the encoding parameter,
the Depthlmage node of the body comprises:
a camera orthographic field;
a camera position field;
a camera orientation field;
a camera fieldOfView field;
a nearPlane field and a farPlane field regarding a near plane and a far plane of camera's view volume; and
a USE field indicating a name of a compression node linked to the camera information,
the scene comprises:
at least one compression node that is the same as the compression node of the body; and
a Depthlmage node that is the same as the DepthImage node of the body, and
the mux file comprises an InitialObjectDescriptor which is the InitialObjectDescriptor of the header and has stream format information of the file output from the BlFS encoding unit.

**10.** The method of any one of claims 1 to 6, wherein (c) comprises:
receiving the input XMT file including a header having an InitialObjectDescriptor; and a body having at least one compression node, a DepthImage node storing camera information required to reproduce data in the compression node, and an ObjectDescriptorUpdate with at least one objectDescriptor; and
making the scene and mux files by parsing the input XMT file according to the XMT schema using the XMT2BIFS and XMT2MUX style sheets,
the InitialObjectDescriptor of the header comprises:
a StreamSource indicating a name of a file output from the BlFS encoding unit;
information required to decode a file compressed by the BlFS encoding unit; and
synchronization information indicating a time sequence in which objects are displayed,
the compression node of the body comprises:
a node field storing a name of a node to be compressed, and graphics object data to be compressed;
a encoding parameter used to compress the graphics object data; and
a URL field storing URL identification which is the same as the binary identification of an objectDescriptor in an ObjectDescriptorUpdate which has BitWrapperEncodingHints including a name of a file storing the bitstream of the graphics objectdata compressed using the encoding parameter,
the objectDescriptor of the ObjectDescriptorUpdate of the body comprises:
binary identification, as a field, which is the same as the URL identification in the compression node of the body;
AFXConfig which is decoder information used to decode the compressed graphics object data; and
BitWrapperEncodingHints indicating a name of a file storing the bitstream of the compressed graphics object data and a format of the compressed bitstream,
the DepthImage node of the body comprises:
a camera orthographic field;
a camera position field;
a camera orientation field;
a camera feIdOfView field;
a nearPlane field and a farPlane field regarding a near plane and a far plane of camera's view volume; and
a USE field storing a name of a compression node linked to the camera information,
the mux file comprises:
an InitialObjectDescriptor which is the same as the InitialObjectDescriptor of the header; and
an objectDescriptor which is the same as the objectDescriptor of the body,
the scene file comprises at least one compression node and a Depthlmage node which are the same as those of the body of the input XMT file; and
an UPDATE OD(ObjectDescriptor) having objectDescriptor that has objectDescriptorlD which is the same as the binary identification of the objectDescriptor in the ObjectDescriptorUpdate of the body, and has the name of the mux file, as the value of a muxScript.

**11.** The method of any one of claims 1 to 6, wherein (c) comprises:
receiving the input XMT file which includes a header having an InitialObjectDescriptor, and a body having at least one compression node with a buffer field, at least one compression node with a URL field, a Depthlmage node containing camera information required to reproduce data in the compression nodes, and an ObjectDescriptorUpdate which has an objectDescriptor corresponding to the at least one compression node with the URL field; and
making the scene and mux files by parsing the input XMT file according to the XMT schema using the XMT2BlFS and XMT2MUX style sheets,
the InitialObjectDescriptor of the header comprises:
a StreamSource indicating a name of a file output from the BlFS encoding unit;
information required to decode a file compressed by the BlFS encoding unit; and
synchronization information indicating a time sequence in which objects are displayed,
the compression node of the body, which has the buffer field, comprises:
a node field storing a name of a node to be compressed;
graphics object data in the node field of the compression node, the graphics object data being to be compressed;
a encoding parameter used to compress the graphics object data; and
a buffer field indicating a name of a bitstream file of the graphics object data compressed using the encoding parameter,
the compression node of the body, which has the URL field, comprises:
a node field storing a name of a node to be compressed;
graphics object data in the node field, the graphics object data being to be compressed and is stored in the node field;
a encoding parameter used to compress the graphics object data; and
a field storing URL identification which is the same as the binary identification of an objectDescriptor in an ObjectDescriptorUpdate having BitWrapperEncodingHints which includes a name of a file storing the bitstream of the graphics object data compressed using the encoding parameters,
the objectDescriptor in the ObjectDescriptorUpdate of the body comprises:
binary identification, as a field, which is the same as the URL identification of the compression node of the body;
AFXConfig which is decoder information used to decode the compressed graphics object data; and
BitWrapperEncodingHints indicating a name of a file storing the bitstream of the compressed graphics object data and a format of the compressed bitstream,
the DepthImage node of the body comprises:
a camera orthographic field;
a camera position field;
a camera orientation field;
a camera fieldOfView field;
a nearPlane field and a farPlane field regarding a near plane and a far plane of camera's view volume; and
a USE field storing a name of a compression node linked to the camera information,
the mux file comprises:
an InitialObjectDescriptor which is the same as the lnftialObjectDescriptor of the header; and
an object Descriptor which is the same as the objectDescriptor of the body, and
the scene file comprises:
at least one compression node and a DepthImage node which are the same as those of the body of the input XMT file; and
an UPDATE OD(ObjectDescriptor) having objectDescriptor that has objectDescriptorID which is the same as the binary identification of the objectDescriptor in the ObjectDescriptorUpdate of the body, and has the name of the mux file, as the value of a muxScript.

**12.** The method of any one of claims 9 through 11, wherein (d) comprises:
detecting at least one compression node (BitWrapper node) from the scene file obtained by the parsing result; and
when graphics object data is present in a node field of the detected compression node, determining that the scene file includes uncompressed graphics object data.

**13.** The method of claim 12, wherein (e) comprises:
(e1) when it is determined that the graphics object data is not compressed, compressing graphics object data in each compression node of the scene file into a bitstream by an encoding unit for compressing the graphics object data, using the encoding parameter in the compression node; and
(e2) making the modified scene file by deleting the graphics object data and the encoding parameter from each compression node of the scene file, and the modified mux file which is modified such that a name of a file output from the BlFS encoding unit reflects a name of the modified scene file.

**14.** The method of claim 13, wherein (e1) comprises:
(e11) when it is determined that the graphics object data is not compressed, storing the graphics object data and encoding parameter in the compression node of the scene file;
(e12) transmitting the graphics object data and the encoding parameter to a predetermined encoding unit which matches graphics object data in a node field of the compression node containing the stored graphics object data; and
(e13) compressing the graphics object data into a bitstream using the transmitted encoding parameter in the encoding unit.

**15.** The method of claim 13, wherein the predetermined encoding unit used in (e1) comprises at least one of:
a PointTexture encoding unit matching the stored graphics object data and encoding parameter, and encoding PointTexture data using the encoding parameter; and
an Octree encoding unit matching the stored graphics object data and encoding parameter, and encoding Octree data.

**16.** A system for generating an input file using meta representation of graphics data compression, the system comprising:
an extensible MPEG-4 textual format (XMT) schema defining a compression node which specifies graphics object data to be compressed and includes a encoding parameter used to compress the graphics object data, BitWrapperEncodingHints including a format in which the graphics object data is compressed into a bitstream, and AFXConfig specifying a type of a decoder for decoding a transmitted bitstream;
an XMT2BIFS style sheet supporting conversion of an input XMT file containing the graphics object data into a scene file based on the XMT schema;
an XMT2MUX style sheet supporting conversion of the input XMT file into a mux file based on the XMT schema;
an XMT parser generating the scene and mux files by parsing the input XMT file according to the XMT schema, using the XMT2BIFS and XMT2MUX style sheets;
a compression determination unit determining whether the scene file obtained by the parsing result contains uncompressed graphics object data; and
an AFX encoding unit compressing the graphics object data into a bitstream using a encoding parameter in the scene file and obtaining a modified scene file and a modified mux file using the XMT2BlFS andXMT2MUS style sheets, when the compression determination unit determines that the graphics object data is uncompressed.

**17.** The system of claim 16, wherein the compression node comprises:
a node field containing graphics object data to be compressed;
a buffer field which is not compatible with a URL field and transmits the compressed bitstream in the compression node as in-ban data;
a URL field which is not compatible with the buffer field and transmits the compressed bitstream in the compression node as out-band data;
a type field indicating a manner in which the graphics object data in the node field is compressed; and
a encoding parameter required to compress the graphics object data.

**18.** The system of claim 17, wherein during the transmission of the compressed bitstream as the in-band data, the input XMT file containing the compression node is converted into the scene file, the scene file is input to a binary format of scene (BlFS) encoding unit and converted into a bifs file, the compressed bitstream in the node field of the compression node is included in the bifs file, and the bifs file is transmitted, and
during the transmission of the compressed bitstream as the out-band data, the input XMT file containing the compression node is converted into the scene file, the scene file is input to the BlFS encoding unit and converted into the bifs file, and the compressed bitstream in the node field of the compression node is transmitted separately from the bifs file.

**19.** The system of any one of claims 16 to 18, wherein the encoding parameter comprises a parameter of PointTexture data to be compressed.

**20.** The system of any one of claims 16 to 19, wherein the BitWrapperEncodingHints is included in an objectDescripor with binary identification which is the same as URL identification defined in the URL field in the compression node, and further specifies a name of a file storing the compressed bitstream and a format of the compressed bitstream.

**21.** The system of any one of claims 16 to 20, wherein the AFXConfig further comprises information regarding a type of a decoder for decoding the compressed bitstream of the graphics object data in the node field of the compression node, the compressed bitstream being compressed by an AFX encoding unit and transmitted using a URL.

**22.** The system of any one of claims 16 to 21, wherein the XMT file input to the XMT parser comprises:
a !header having an lnitialObjectDescriptor, and
a body having at least one compression node, and a Depthlmage node which contains camera information required to reproduce data in the compression node,
wherein the InitialObjectDescriptor of the header comprises:
al StreamSource indicating a name of a file output from the BlFS encoding unit;
information required to decode a file compressed by the BlFS encoding unit; and
synchronization information indicating a time sequence in which objects are displayed,
the compression node of the body comprises:
a node field storing a name of an already compressed node; and
a buffer field storing a name of already compressed object data,
the Depthlmage node of the body comprises:
a camera orthographic field;
a camera position field;
a camera orientation field;
a camera fieldOfView field;
a nearPlane field and a farPlane field regarding a near plane and a far plane of camera's view volume; and
a USE field storing a name of a compression node linked to the camera information,
the scene file comprises at least one compression node which is the same as the compression node of the body,
the mux file comprises an InitialObjectDescriptor which is the same as the InitialObjectDescriptor of the header; and
the file output from the BlFS encoding unit and stream format information of the output file, the file and stream format information being included in the InitialObjectDescriptor.

**23.** The system of any one of claims 16 to 21, wherein the XMT file input to the XMT parser comprises:
a header having an InitialObjectDescriptor; and
a body having at least one compression node, a Depthlmage node which contains camera information required to reproduce data in the compression node, and an ObjectDescriptorUpdate which contains at least one objectDescriptor,
the InitialObjectDescriptor of the header comprises:
a StreamSource storing a name of a file output from the BlFS encoding unit;
information required to decode a file compressed by the BlFS encoding unit; and
synchronization information indicating a time sequence in which objects are displayed,
the compression node of the body comprises URL identification which is the same as binary identification of an objectDescriptor in an ObjectDescriptorUpdate having BitWrapperEncodingHints indicating a name of file which includes a bitstream of already compressed object data,
the Depthlmage node of the body comprises:
a camera orthographic field;
a camera position field;
a camera orientation field;
a camera fieldOfView field;
a nearPlane field and a farPlane field regarding a near plane and a far plane of camera's view volume; and
a USE field storing a name of a compression node linked to the camera information,
the objectDescriptor in the ObjectDescriptorUpdate of the body comprises:
binary identification, as a field, which is the same as the URL identification of the compression node of the body;
AFXConfig which is decoder information used to decode the compressed graphics object data; and
BitWrapperEncodingHints indicating a name of a file storing the bitstream of the compressed graphics object data and a format of the compressed bitstream,
the mux file comprises:
an InitialObjectDescriptor which is the same as the InitialObjectDescriptor of the header; and
an objectDescriptor which is the same as the objectDescriptor in the ObjectDescriptorUpate of the body, and
the scene file comprises:
at least one compression node which is the same as the compression node of the body:of the input XMT file; and
an UPDATE OD(ObjectDescriptor) having an objectDescriptor that has objectDescriptorID that is the same as the binary identification of the objectDescriptor in the ObjectDescriptorUpdate of the body of the input XMT file, and has the name of the mux file, as the value of a muxScript.

**24.** The system of any one of claims 16 to 21, the XMT file input to the XMT parser comprises:
a header having an InitialObjectDescriptor; and
a body having at least one compression node, and a Depthlmage node which contains camera information required to reproduce data in the compression node,
the InitialObjectDescriptor of the header comprises:
a StreamSource storing a name of a file output from the BlFS encoding unit;
information required to decode a file compressed by the BlFS encoding unit; and
synchronization information indicating a time sequence in which objects are displayed,
the compression node of the body comprises:
a node field storing a name of a node to be compressed;
graphics object data in the node field of the compression node, the graphics object data being to be compressed;
a encoding parameter used to compress the graphics object data; and
a buffer field indicating a name of a file which stores a bitstream of the graphics object data compressed using the graphics encoding parameter,
the Depthlmage node of the body comprises:
a camera orthographic field;
a camera position field;
a camera orientation field;
a camera fieldOfView field;
a nearPlane field and a farPlane field regarding a near plane and a far plane of camera's view volume; and
a USE field indicating a name of a compression node linked to the camera information,
the scene file comprises at least one compression node and a Depthlmage node which are the same as those of the body, and
the mux file comprises an lnitialObjectDescriptor which is the same as the InitialobjectDescriptor of the header and has stream format information of the file output from the BlFS encoding unit.

**25.** The system of any one of claims 16 to 21, the XMT file input to the XMT parser comprises:
a header having an InitialObjectDescriptor; and
a body having at least one compression bode, a DepthImage node which contains: camera information required to reproduce data in the compression node, and an ObjectDescriptorUpdate which contains at least one objectDescriptor,
the InitialObjectDescriptor of the header comprises:
a Streamsource indicating a name of a file output from the BlFS encoding unit;
information required to decode a file compressed by the BlFS encoding unit; and
synchronization information indicating a time sequence in which objects are displayed,
the compression node of the body comprises:
a node field storing a name of a node to be compressed;
graphics object data in the node field of the compression node, the graphics object data being to be compressed;
graphics encoding parameter used to compress the graphics object data; and
a field storing URL identification which is the same as binary identification of an objectDescriptor in an ObjectDescriptorUpdate which has BitWrapperEncodingHints which includes a name of a file storing a bitstream of the graphics object data compressed by the graphics encoding parameter,
the objectDescriptor in the ObjectDescriptorUpdate of the body comprises:
binary identification, as a field, which is the same as the URL identification of the compression node of the body;
AFXConfig which is decoder information used to decode the compressed graphics object data; and
BitWrapperEncodingHints indicating a name of a bitstream of the compressed graphics object data and a format of the compressed bitstream,
the Depthlmage node of the body comprises:
a camera orthographic field;
a camera position field;
a camera orientation field;
a camera fieldOfView field;
a nearPlane field and a farPlane field regarding a near plane and a far plane of camera's view volume; and
a USE field storing a name of a compression node linked to the camera information,
the mux file comprises:
an InitialObjectDescriptor which is the same as the InitialObjectDescriptor of the header; and
an objectDescriptor which is the same as the objectDescriptor of the body, and
the scene file comprises:
at least one compression node which is the same as the compression node of the body of the input XMT file; and
an UPDATE OD(ObjectDescriptor) having objectDescriptor that has objectDescriptorID which is the same as binary identification of the objectDescriptor in the ObjectDescriptorUpdate of the body, and has the name of the mux file, as the value of a muxScript.

**26.** The system of any one of claims 16 to 21, wherein the XMT file input to the XMT parser comprises:
a header having an InitialObjectDescriptor, and
a body having at least one compression node which includes a buffer field, at least one compression node which includes a URL field, a Depthlmage node which contains camera information required to reproduce data in the compression nodes, and an ObjectDescriptorUpdate which includes an objectDescriptor corresponding the at least one compression node having the URL field,
the InitialObjectDescriptor of the header comprises:
a StreamSource storing a name of a file output from the BlFS encoding unit;
information required to decode a file compressed by the BlFS encoding unit; and
synchronization information indicating a time sequence in which objects are displayed,
the compression node of the body, which has the buffer field, comprises:
a node field storing a name of a node to be compressed;
graphics object data in the node field of the compression node, the graphics object data being to be compressed;
a encoding parameter used to compress the graphics object data; and
a buffer field storing a name of a file which includes a bitstream of the graphics object data compressed by the graphics encoding parameter,
the compression node of the body, which has the URL field, comprises:
a node field storing a name of a node to be compressed;
object data in the node field of the compression node, the object data being to be compressed;
an encoding parameter used to compress the object data; and
a field storing URL identification which is the same as binary identification of an objectDescriptor in an ObjectDescriptorUpate which has BitWrapperEncodingHints including a name of a file storing a bitstream of the object data compressed using the encoding parameter,
the objectDescriptor in the ObjectDescriptorUpdate of the body comprises:
binary identification, as a field, which has the same as URL identification of the compression node of the body;
AFXConfig which is decoder information used to decode the compressed object data; and
BitWrapperEncodingHints indicating a name of a file storing a bitstream of the compressed object data and a format of the compressed bitstream,
the Depthlmage node of the body comprises:
a camera orthographic field;
a camera position field;
a camera orientation field;
a camera feIdOfView field;
a nearPlane field and a farPlane field regarding a near plane and a far plane of camera's view volume; and
a USE field storing a name of a compression node linked to the camera information,
the mux file comprises:
an initiatObjectDescriptor which is the same as the InitialObjectDescriptof of the header; and
an objectDescriptor which is the same as the objectDescriptor of the body, and
the scene file comprises;
at least compression node which is the same as the compression node of the body of the input XMT file; and
an UPDATE OD(ObjectDescriptor) having objectDescriptor that has objectDescriptorlD which is the same as binary identification of an objectDescriptor in an ObjectDescriptorUpdate of the body, and has the name of the mux file, as the value of a muxScript.

**27.** The system of any one of claims 24 through 26, wherein the compression determination unit comprises:
a compression node detector detecting at least one compression node (BitWrapper node) from the scene file obtained by the parsing result; and
a compressed data determination unit determining that uncompressed data is included when graphics object data is present in a node field of the detected compression node.

**28.** The system of claim 27, wherein the AFX encoding unit comprising:
an AFX parser detecting at least one compression node from the scene file containing a BitWrapper node, and storing graphics object data and encoding parameter which are included in the compression node of the scene file when the graphics: object data is present in a node field of the compression node:
an object data storage unit storing the graphics object data received from the AFX parser;
an encoding parameter storage unit storing the encoding parameter received from the AFX parser;
an encoding unit matching the graphics object data in the node field of the compression node, and compressing the graphics object data received from the object data storage unit into a bitstream using the encoding parameter received from the encoding parameter storage unit; and
an input file generator generating a modified scene file by deleting the graphics object data and encoding parameter from the compression node of the scene file, and a modified mux file modified such that a name of a file output from the BIFS encoding unit reflects a name of the modified scene file, when the graphics object data is included in the node field of the compression node detected by the AFX parser.

**29.** The system of claim 28, wherein the encoding unit comprises at least one of:
a: PointTexture encoder matching the stored graphics object data and encoding parameter, and encoding PointTexture data using encoding parameters; and
an Octree encoder matching the stored graphics object data and encoding parameter, and encoding octree data.

**30.** An AFX encoding apparatus comprising:
an AFX parser detecting at least one compression node from a scene file containing a BitWrapper node, and storing graphics object data and encoding parameter which are included in the compression node of the scene file when the graphics object data is present in a node field of the compression node;
an object data storage unit storing the graphics object data received from the AFX parser;
an encoding parameter storage unit storing the encoding parameter received from the AFX parser;
an encoding unit matching the stored graphics object data, and compressing the graphics object data received from the object data storage unit into a bitstream using the encoding parameter received from the encoding parameter storage unit; and
an input file generator generating a modified scene file by deleting the graphics object data and encoding parameter from the compression node of the scene file, and a modified mux file modified such that a name of a file output from the BlFS encoding unit reflects a name of the modified scene file, when the graphics object data is included in the node field of the compression node detected by the AFX parser.

**31.** The AFX encoding apparatus of claim 30, wherein the encoding unit comprises at least one of:
a yPointTexture encoder matching the stored graphics object data and encoding parameter, and encoding PointTexture data using encoding parameters regarding the PointTexture of an object to be compressed; and
an Octree encoder matching the stored graphics object data and encoding parameter, and encoding octree data using encoding parameters of an object to be compressed.

**32.** An AFX encoding method comprising:
(a) detecting at least one compression node from a scene file which contains a BitWrapper node;
(b) storing a node containing graphics object data, and encoding parameter which are included in the detected compression node;
(c) compressing the graphics object data into a bitstream with encoding parameter by using an encoding unit which matches the node containing the stored graphics object data; and
(d) generating a modified scene file by deleting the graphics object data and the encoding parameter from the compression node of the scene file, and a modified mux file modified such that a name of a file output from a binary format of scene (BlFS) encoding unit reflects a name of the modified scene file.

**33.** The AFX encoding method of claim 32, wherein the encoding unit used in (c) comprises at least one of:
a PointTexture encoder matching the stored graphics object data and encoding parameter, and encoding PointTexture data using encoding parameters of graphics object data of an object to be compressed; and
an Octree encoder matching the stored graphics object data and encoding parameter, and encoding octree data.

**34.** A computer readable recording medium having embodied thereon a program for executing the method of any one of claims 1 through 15, 32, and 33.

**35.** A method of generating an input file using meta representation of graphics data compression, the method comprising:
(a) preparing an extensible MPEG-4 textual format (XMT) schema,
wherein the XMT schema defines a compression node including graphics data to be compressed and having a encoding parameter required to compress the graphics data;
BitWrapperEncodingHints including a graphics compression bitstream format; and
AFXConfg specifying a type of a decoder for decoding a transmitted bitstream;
(b) preparing an XMT2BlFS style sheet supporting conversion of an input XMT file containing the graphics data into a scene file according to the XMT schema, and an XMT2MUX style sheet supporting conversion of the input XMT file into a mux file according to the XMT schema;
(c) generating the scene and mux files by parsing the input XMT file according to the XMT schema using the XMT2BlFS and XMT2MUX style sheets;
(d) determining whether the scene file obtained as the parsing result includes uncompressed graphics object data; and
(e) when it is determined that the uncompressed graphics object data is included, compressing the graphics object data into a bitstream and generating a modified scene file and a modified mux file, using the encoding parameter included in the scene file,
wherein the compression node comprises:
a node field including graphics object data to be compressed;
a buffer field which is not compatible with an URL field and transmit a compressed bitstream in the compression node as in-band data;
the URL field which is not compatible with the buffer field and transmits the compressed bitstream in the compression node as out-band data;
a type field indicating a manner in which the graphics object data in the node field is compressed; and
a encoding parameter required to compress the graphics object data,
wherein the BitWrapperEncodingHints is included in an objectDescriptor with binary identification that is the same as URL identification defined in the URL field in the compression node, and further specifies a name of a file storing the compressed bitstream and a type information of a compression format of bitstream,
wherein the AFXConfig further comprises information regarding a kind of a decoder for decoding the compressed bitstream of the graphics object data in the node field of the compression node, the compressed bitstream being compressed by an AFX encoding unit and transmitted using a URL.

**36.** The method of claim 35, wherein during the transmission of the compressed bitstream as the in-band data, the input XMT file containing the compression node is converted into the scene file, the scene file is input to a binary format of scene (BlFS) encoding unit and converted into a bifs file, the compressed bitstream in the node field of the compression node is included in the bifs file, and the bifs file is transmitted, and
during the transmission of the compressed bitstream as the out-band data, the input XMT file containing the compression node is converted into the scene file, the scene file is input to the BlFS encoding unit and converted into the bifs file, and the compressed bitstream in the node field of the compression node is transmitted separately from the bifs file.

**37.** The method of claim 35 or 36, wherein the encoding parameter comprises a parameter regarding PointTexture data to be compressed.
